(19) Europäisches Patentamt / European Patent Office / Office européen des brevets

(11) EP 3 412 694 B1

(12) EUROPEAN PATENT SPECIFICATION

(45) Date of publication and mention of the grant of the patent: **08.12.2021 Bulletin 2021/49**

(21) Application number: **17747243.8**

(22) Date of filing: **23.01.2017**

(51) Int Cl.:
*C08F 299/06* (2006.01) *B01J 13/18* (2006.01)
*B41M 5/00* (2006.01) *C08F 2/48* (2006.01)
*C08G 18/08* (2006.01) *C08G 18/67* (2006.01)
*C09D 11/30* (2014.01) *B01J 13/16* (2006.01)
*C09D 11/101* (2014.01) *C09D 11/102* (2014.01)
*C08L 75/02* (2006.01) *C08L 75/04* (2006.01)

(86) International application number: **PCT/JP2017/002171**

(87) International publication number: **WO 2017/135084 (10.08.2017 Gazette 2017/32)**

(54) **AQUEOUS DISPERSION, METHOD FOR MANUFACTURING THE SAME, AND IMAGE FORMING METHOD**

WÄSSRIGE DISPERSION, HERSTELLUNGSVERFAHREN DAFÜR UND BILDERZEUGUNGSVERFAHREN

DISPERSION AQUEUSE, PROCÉDÉ DE PRODUCTION ASSOCIÉ ET PROCÉDÉ DE FORMATION D'IMAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.02.2016 JP 2016021359**

(43) Date of publication of application: **12.12.2018 Bulletin 2018/50**

(73) Proprietor: **FUJIFILM Corporation**
**Tokyo 106-8620 (JP)**

(72) Inventors:
- **KOYAMA, Ichiro**
  **Ashigarakami-gun**
  **Kanagawa 258-8577 (JP)**
- **SATO, Noriaki**
  **Ashigarakami-gun**
  **Kanagawa 258-8577 (JP)**
- **SUZUKI, Shota**
  **Ashigarakami-gun**
  **Kanagawa 258-8577 (JP)**

(74) Representative: **Klunker IP Patentanwälte PartG mbB**
**Destouchesstraße 68**
**80796 München (DE)**

(56) References cited:
**EP-A1- 3 345 966** **WO-A1-2015/158748**
**WO-A1-2015/158748** **WO-A1-2016/052053**
**WO-A1-2016/152254** **JP-A- H0 860 063**
**JP-A- 2000 256 594** **JP-A- 2001 125 257**
**JP-A- 2006 103 285** **JP-A- 2009 220 301**
**JP-A- 2010 043 227** **JP-A- 2011 063 001**
**JP-A- 2012 139 643** **JP-A- 2012 246 486**
**JP-A- 2014 507 433**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 412 694 B1

## Description

BACKGROUND OF THE INVENTION

1. Field of the Invention

The present disclosure relates to an aqueous dispersion, a method for manufacturing the same, and an image forming method.

2. Description of the Related Art

An aqueous dispersion in which a microcapsule having a core and a shell is dispersed in an aqueous medium (medium containing water) has been known in the related art.

For example, an ink jet ink in which a microcapsule having a core containing a photopolymerization initiator and an ultraviolet-curable compound, and a shell of a cross-linked polymer which has a dispersing group introduced by a covalent bond, is dispersed in an aqueous medium, is disclosed (for example, refer to WO2015/158748A).

WO 2016/052053 discloses gel particles which have a polymerisable group, and a three-dimensional cross-linked structure including at least one bond selected from an urethane bond and a urea bond, and enclose a photopolymerisation initiator.
WO 2016/152254 discloses a water dispersion of gel particles, wherein the gel particles having a three-dimensional cross-linked structure including polymer structures having a hydrophilic group and a polymerizable group, and including photopolymerization iniators are dispersed in water.
WO 2017/038243 discloses an aqueous dispersion comprising a gel particle which has a polymerizable group, has a three-dimensional cross-linked structure comprising at least one of an urethane bond and urea bond, and comprises a photopolymerization initiator in the interior of the gel particle; a resin; and water.

In addition, as an ink in which excellent ink jetting properties are compatible with excellent rub resistance and durability, an ink containing a binder which is an aqueous dispersion of a core-shell composite resin particle formed of a shell layer composed of a urethane resin having a hydrophilic group and a core layer composed of a vinyl polymer, is disclosed (for example, refer to WO2012/073563A or JP2012-246486A).

In addition, as an aqueous printing ink composition which is suitable for a laminate printed on various plastic films and has excellent printability, adhesiveness, lamination strength, heat sealing, and heat sterilization resistance, an aqueous printing ink composition which contains a pigment, an aqueous binder resin, and water has been known, the aqueous printing ink composition containing, as the aqueous binder resin, (A) cross-linked polyurethane/urea resin obtained by allowing an isocyanate group of an aqueous dispersion in which a self-dispersing urethane-based prepolymer having an isocyanate group at the terminal thereof, or a mixture of the prepolymer and the other polyisocyanate compounds is dispersed in water, to react with polyamine, and (B) core-shell type aqueous dispersing resin in which an epoxy group-containing copolymer is a core and a carboxy group-containing polyurethane is a shell (for example, refer to JP1996-60063A (JP-H08-60063A)).

SUMMARY OF THE INVENTION

Meanwhile, in the aqueous dispersion having the microcapsule, dispersion stability of the microcapsule is required. In addition, in recent years, various methods for forming a film by using the aqueous dispersion having the microcapsule have been examined, and a method for forming a film having excellent hardness has been desired. For example, a method using the aqueous dispersion having the microcapsule to which photocuring properties are imparted so as to further improve hardness of a formed film through photocuring has been examined. In particular, in a case where the aqueous dispersion having the microcapsule is used as an ink jet ink (hereinafter will be simply referred to as "ink"), in a case where the aqueous dispersion having the microcapsule is used as a so-called coating solution for forming a coated film, and the like, it is desirable that a film having excellent hardness is formed.

In regard to the above description, in an aqueous dispersion having a microcapsule disclosed in WO2015/158748A, a shell of the microcapsule has a dispersing group, but the dispersion stability of the microcapsule is not sufficient, and therefore there is still room for improvement.

In addition, aqueous dispersions having microcapsules disclosed in WO2012/073563A, JP2012-246486A, and JP1996-60063A (JP-H08-60063A), do not have photocuring properties, and therefore a film having excellent hardness cannot be formed.

The present disclosure is based on the circumstances described above and is for achieving the following objects.

That is, an object of the present disclosure is to provide an aqueous dispersion in which the dispersion stability of the microcapsule is excellent and by which a film having excellent hardness can be formed, a method for manufacturing the same, and an image forming method using the aqueous dispersion.
The object is achieved by the aqueous dispersion claimed in independent claim 1, the use of the aqueous dispersion claimed in independent claim 13, the method for manufacturing the aqueous dispersion claimed in independent claim 14, and the image forming method claimed in independent claim 15. Embodiments of the invention are claimed in the dependent claims.
According to the present disclosure, the aqueous dispersion in which dispersion stability of the microcapsule is excellent and by which the film having excellent hardness can be formed, the method for manufacturing the same, and the image forming method using the aqueous dispersion, are provided.

DESCRIPTION OF THE PREFERRED EMBODIMENTS

Hereinafter, specific embodiments of the present invention will be described in detail, but the present invention is not limited to the following embodiments.
In the present specification, a range of numerical values described using "to" means a range including the numerical values listed before and after "to" as a minimum value and a maximum value.
In the present specification, in a case where there are a plurality of substances corresponding to each component in a composition, unless otherwise specified, the amount of each component in the composition means the total amount of the plurality of substances present in the composition.
In the present specification, the term "step" means not only an independent step, but also a step that cannot be clearly distinguished from other steps as long as the intended goal of the step is accomplished.
In the present specification, conceptually, "light" includes active energy rays such as $\gamma$-rays, $\beta$-rays, electron beams, ultraviolet rays, visible rays, and infrared rays.
In the present specification, the ultraviolet rays are referred to as "Ultra Violet (UV) light" in some cases.
In the present specification, the light emitted from a Light Emitting Diode (LED) light source is referred to as "LED light" in some cases.
In the present specification, "(meth)acrylic acid" conceptually includes both the acrylic acid and the methacrylic acid, "(meth)acrylate" conceptually includes both the acrylate and the methacrylate, and "(meth)acryloyl group" conceptually includes both the acryloyl group and the methacryloyl group.

<Aqueous Dispersion>

An aqueous dispersion comprising a microcapsule and water, the microcapsule comprising: a shell having a three-dimensional cross-linked structure comprising: at least one bond selected from the group consisting of a urethane bond and a urea bond; and an anionic group and a nonionic group as hydrophilic groups; and a core, the nonionic group being a monovalent group having a polyether structure,
the shell comprising a photopolymerization initiating group that is a residue obtained by removal of at least one hydrogen atom from at least one active hydrogen group of a photopolymerization initiator having an at least one active hydrogen group, the active hydrogen group being a hydroxyl group, a primary amino group, a secondary amino group, or a mercapto group, and at least one of the shell comprising a polymerizable group or the core comprising a polymerizable compound being satisfied.
In the aqueous dispersion of the present disclosure, dispersion stability of the microcapsule is excellent, and a film having excellent hardness can be formed by the aqueous dispersion.
The reason why the aqueous dispersion of the present disclosure brings about such effects is not clear but is assumed to be as below according to the inventors of the present invention.
In the aqueous dispersion of the present disclosure, the shell of the microcapsule which is a dispersoid has a three-dimensional cross-linked structure containing an anionic group (hereinafter, will simply be referred to as "anionic group") as a hydrophilic group and a nonionic group as a hydrophilic group (hereinafter, will simply be referred to as "nonionic group"), and at least one bond selected from a urethane bond and a urea bond.
The shell of the microcapsule having both the anionic group and the nonionic group leads to the combination of dispersing action of the anionic group with dispersing action of the nonionic group, and thus dispersion stability of the microcapsule is significantly increased compared to that of a case in which only one of the anionic group and the nonionic group is included.
In addition, the microcapsule in the present disclosure includes the shell having the three-dimensional cross-linked structure containing the urethane bond and the urea bond, and thus has a firm structure.
It is considered that in the aqueous dispersion of the present disclosure, a structure of each microcapsule is firm, leading to the suppression of aggregation or linking between microcapsules, and therefore dispersion stability of

the microcapsule is improved.

The dispersion stability of the microcapsule is evaluated by evaluating, for example, jetting properties of the aqueous dispersion from an ink jet head and storage stability of the aqueous dispersion (refer to the following examples).

For example, by evaluating the jetting properties, the dispersion stability in relatively a short period of time after manufacture of the aqueous dispersion can be evaluated, and by evaluating the storage stability, the dispersion stability over a long period of time after manufacture of the aqueous dispersion can be evaluated.

Furthermore, in the microcapsule in the aqueous dispersion of the present disclosure, the condition that the shell has a particular photopolymerization initiating group is satisfied, and at least one of a condition that the shell has a polymerizable group or a condition that the core contains a polymerizable compound is satisfied.

In the present specification, the photopolymerization initiator means a compound having a function of generating a radical which is a polymerization reactive species by irradiation with active energy ray.

In addition, in the present specification, the photopolymerization initiating group means a group which is contained in a structure of one molecule of the photopolymerization initiator and has a function of the photopolymerization initiator (that is, a function of generating a radical by irradiation with active energy ray). In other words, the photopolymerization initiating group is a residue of the photopolymerization initiator, which has the function of the photopolymerization initiator.

Accordingly, the core containing a photopolymerization initiator means that the core has the photopolymerization initiating group (that is, a photopolymerization initiating group in a photopolymerization initiator).

In addition, the core containing the polymerizable compound means that the core has the polymerizable group (that is, the polymerizable group in the polymerizable compound).

The aqueous dispersion of the present disclosure has the polymerizable group and the photopolymerization initiating group, and therefore has photocuring properties of being cured by irradiation with active energy ray (that is, light irradiation). Accordingly, the aqueous dispersion of the present disclosure can form a film having excellent hardness (for example, pencil hardness) by light irradiation.

Furthermore, in the aqueous dispersion of the present disclosure, since one microcapsule has both the polymerizable group and the photopolymerization initiating group, a distance between the polymerizable group and the photopolymerization initiating group is closer than, for example, a case where the photopolymerization initiator is dispersed in water. The close distance between the polymerizable group and the photopolymerization initiating group leads to improvement of curing sensitivity with respect to irradiation with active energy ray (hereinafter, will simply be referred to as "sensitivity"). Therefore, it is considered that according to the aqueous dispersion of the present disclosure, it is possible to form a film having excellent hardness (for example, pencil hardness) compared to a case of the related art in which a film is formed by using a photocurable composition.

With respect to the aqueous dispersion of the present disclosure, inks disclosed in WO2012/073563A, JP2012-246486A, and JP1996-60063A (JP-H08-60063A) contain neither of the polymerizable group nor the photopolymerization initiating group, and the inks are not compositions having photocuring properties in the first place. Accordingly, it is considered that a film formed by using the techniques disclosed in these documents has inferior film hardness compared to a film formed by using the aqueous dispersion of the present disclosure.

In addition, as described above, in the aqueous dispersion of the present disclosure, at least one of the shell or the core has the polymerizable group, and at least the shell has the photopolymerization initiating group, and thus a distance between the polymerizable group and the photopolymerization initiating group is closer than that of the related art, resulting in improvement of sensitivity with respect to irradiation with active energy ray. Therefore, according to the aqueous dispersion of the present disclosure, it is possible to form a film having excellent adhesiveness to a substrate.

The above presumption is not to be interpreted to limit the effect of the present disclosure and is for explanation as one example.

As described above, in the present disclosure, the shell of the microcapsule has both the anionic group and the nonionic group as hydrophilic groups, and therefore the dispersion stability of the microcapsule is improved.

Preferable aspect of each of the anionic group and the nonionic group will be described later.

In the aqueous dispersion of the present disclosure, an amount of the nonionic group is preferably 1% by mass to 20% by mass with respect to a total solid content of the microcapsule. With the amount of the nonionic group being within the above range, the dispersion stability of the microcapsule is further improved.

The amount of the nonionic group is more preferably 5% by mass to 20% by mass.

In addition, in the aqueous dispersion of the present disclosure, an amount of the anionic group per 1g of the total solid content microcapsule is preferably 0.2mmol/g to 1.5 mmol/g. With the amount of the anionic group being within the above range, the dispersion stability of the microcapsule is further improved.

The amount of the anionic group is more preferably 0.3mmol/g to 1.3mmol/g.

In addition, in the aqueous dispersion of the present disclosure, in a case where the amount of the nonionic group is represented by N% by mass with respect to the total solid content of the microcapsule, and the amount of the anionic group per 1g of the total solid content of the microcapsule is represented by A mmol/g, a ratio (A/N) of A to N is

preferably 0.02 to 0.15. With the ratio (A/N) being within the above range, the dispersion stability of the microcapsule is further improved.

The ratio (A/N) is more preferably 0.02 to 0.11, still more preferably 0.03 to 0.10, and particularly preferably 0.04 to 0.09.

The aqueous dispersion of the present disclosure can be suitably used as a liquid for forming a film (for example, image) on a substrate (for example, recording medium).

Examples of such liquid include an ink for forming an image on a substrate as a recording medium (for example, ink jet ink), and a coating solution for forming a coated film on a substrate.

The aqueous dispersion of the present disclosure is particularly preferably used as ink jet ink. In a case where the aqueous dispersion of the present disclosure is used as an ink jet ink, it is possible to form an image having excellent hardness. In addition, in the aqueous dispersion of the present disclosure, the dispersion stability is excellent, and therefore the aqueous dispersion has excellent jetting properties from an ink jet head. Furthermore, according to the aqueous dispersion of the present disclosure, it is possible to form an image having excellent adhesiveness to a recording medium.

An ink jet ink which is one of usage of the aqueous dispersion of the present disclosure may be an ink jet ink containing a coloring material (hereinafter, will also be referred to as "coloring ink") or may be an ink jet ink not containing a coloring material (so-called a clear ink; hereinafter will also be referred to as "colorless ink").

The same applies to the coating solution which is another usage of the aqueous dispersion of the present disclosure.

-Substrate-

In the present disclosure, a substrate for forming a film is not particularly limited, and a known substrate can be used.

Examples of the substrate include paper, paper on which plastic [e.g. polyethylene, polypropylene, polystyrene) is laminated, a metal plate (a plate of a metal such as aluminum, zinc, or copper), a plastic film (films of e.g. a polyvinyl chloride (PVC) resin, cellulose diacetate, cellulose triacetate, cellulose propionate, cellulose butyrate, cellulose acetate butyrate, cellulose nitrate, polyethylene terephthalate (PET), polyethylene (PE), polystyrene (PS), polypropylene (PP), polycarbonate (PC), polyvinyl acetal, an acrylic resin], paper on which the aforementioned metal is laminated or vapor-deposited, and a plastic film on which the aforementioned metal is laminated or vapor-deposited.

The aqueous dispersion of the present disclosure is particularly suitable for uses in which a film is formed on a nonabsorbent substrate, because the aqueous dispersion makes it possible to form a film exhibiting excellent adhesiveness to a substrate.

As the nonabsorbent substrate, plastic substrates such as a polyvinyl chloride (PVC) substrate, a polystyrene (PS) substrate, a polycarbonate (PC) substrate, a polyethylene terephthalate (PET) substrate, a polyethylene (PE) substrate, a polypropylene (PP) substrate, and an acrylic resin substrate are preferable.

The aqueous dispersion of the present disclosure may be used for usage of forming an image on a substrate other than the plastic substrates.

Examples of the substrate other than the plastic substrates include a textile substrate.

Examples of a material of the textile substrate include natural fibers such as cotton, silk, hemp, and wool; chemical fibers such as viscose rayon and reocell; synthetic fibers such as polyester, polyamide, and acryl; a mixture of at least two types selected from the group consisting of the natural fibers, the chemical fibers, and the synthetic fibers.

As the textile substrate, a textile substrate disclosed in paragraphs 0039 to 0042 of WO2015/158592A may be used.

Hereinafter, each component of the aqueous dispersion of the present disclosure will be described.

[Microcapsule]

The microcapsule included in the aqueous dispersion of the present disclosure includes the shell having the three-dimensional cross-linked structure containing at least one bond selected from a urethane bond and a urea bond and the anionic group and the nonionic group, and includes the core, in which at least a condition that the shell has the photopolymerization initiating group is satisfied, and in which at least one of a condition that the shell has the polymerizable group or a condition that the core contains the polymerizable compound is satisfied.

The microcapsule in the present disclosure is formed of the outermost shell having the three-dimensional cross-linked structure containing at least one of a urethane bond and a urea bond, and the core which is a region occupying the shell.

Whether a microcapsule is the microcapsule can be checked by coating a support with the aqueous dispersion having the microcapsule and drying so as to obtain a sample for morphological observation, and then cutting the sample

so as to observe the cut surface using e.g. an electron microscope.

The aqueous dispersion of the present disclosure may include one kind of the microcapsule or may include two or more kinds thereof.

The microcapsule is a dispersoid in the dispersion of the present disclosure.

In the microcapsule, at least one of the shell or the core has the polymerizable group.

The microcapsule has the polymerizable group, which makes it possible that by irradiation with active energy ray, microcapsules adjacent to each other are bonded to each other so as to form a cross-linked structure, and therefore a film having a high level of cross-linking properties and excellent hardness can be formed.

As the polymerizable group contained in at least one of the shell or the core, groups containing an ethylenic double bond, such as a (meth)acryloyl group, an allyl group, a styryl group, and a vinyl group are preferable.

Among these, as the polymerizable group, a (meth)acryloyl group is particularly preferable from the viewpoints of polymerization reactivity and film hardness.

Whether the "microcapsule has the polymerizable group" can be checked by, for example, Fourier transform infrared spectroscopy (FT-IR).

The microcapsule may have the polymerizable group by a form in which the polymerizable group is introduced into the three-dimensional cross-linked structure of the shell, or may have the polymerizable group by a form in which the polymerizable compound is contained in the core. In addition, the microcapsule may have the polymerizable group by both forms.

Preferable aspect is that the microcapsule has the polymerizable group at least by the form in which the polymerizable compound is contained in the core. According to the aspect, a distance between the polymerizable group and the photopolymerization initiator becomes close, leading to improvement of curing sensitivity with respect to irradiation with active energy rays, and therefore a film having excellent hardness can be formed.

The term "polymerizable compound" referred herein means a polymerization compound capable of being contained in the core, among compounds having the polymerizable group. A compound for introducing the polymerizable group into the shell (that is, an isocyanate compound into which the polymerizable group is introduced, which will be described later), does not include a concept of the term "polymerizable compound" referred herein.

Details of the "polymerizable compound" and the "isocyanate compound into which the polymerizable group is introduced" will be described later.

In addition, in the microcapsule, the shell and optionally also the core has the photopolymerization initiating group.

The microcapsule having the photopolymerization initiating group can initiate polymerization by the above-described polymerizable group by irradiation with active energy ray.

The microcapsule may have the photopolymerization initiating group by a form in which the photopolymerization initiating group is introduced into the three-dimensional cross-linked structure of the shell, and may additionally have the photopolymerization initiating group by a form in which the photopolymerization initiator is contained in the core. Accordingly, the microcapsule may have the photopolymerization initiating group by both forms.

The microcapsule has the photopolymerization initiating group at least by the form in which the photopolymerization initiating group is introduced into the three-dimensional cross-linked structure of the shell. According to the aspect, migration which is a phenomenon in which a low-molecular weight component of the formed film moves to the outside of the film, can be suppressed. A condition that the migration can be suppressed is advantageous from the viewpoint that odor of the film can be suppressed. Accordingly, the above aspect is particularly effective for a case in which the aqueous dispersion is used to print packages such as food packaging, for example.

As described above, the photopolymerization initiator is a compound having a function of generating a radical by irradiation with active energy ray, and the photopolymerization initiating group is a group which is contained in the structure of the photopolymerization initiator and has a function of generating a radical by irradiation with active energy ray.

-Volume Average Particle Diameter of Microcapsule-

A volume average particle diameter of the microcapsule is preferably 0.01 μm to 10.0 μm, more preferably 0.01 μm to 5 μm, and even more preferably 0.05 μm to 1 μm, from the viewpoint of the dispersion stability of the microcapsule.

In the present specification, the term "volume average particle diameter of the microcapsule" indicates a value measured by a light scattering method.

The measurement of a volume average particle diameter of the microcapsule by the light scattering method is carried out by using, for example, LA-960 (manufactured by HORIBA, Ltd.).

-Amount of Microcapsule-

The amount of the microcapsule in the aqueous dispersion of the present disclosure is preferably 1% by mass to 50% by mass, more preferably 3% by mass to 40% by mass, and even more preferably 5% by mass to 30% by mass, with respect to a total amount of the aqueous dispersion.

In a case where the amount of the microcapsule is 1% by mass or more with respect to the total amount of the aqueous dispersion, the hardness of a film formed is more improved. In addition, in a case where the amount of the microcapsule is 50% by mass or less with respect to the total amount of the aqueous dispersion, the dispersion stability of the microcapsule becomes excellent.

Furthermore, a total solid content of the microcapsule in the aqueous dispersion of the present disclosure is preferably 50% by mass or more, more preferably 60% by mass or more, even more preferably 70% by mass or more, still more preferably 80% by mass or more, and yet more preferably 85% by mass or more, with respect to the total solid content of the aqueous dispersion.

In a case where the total solid content of the microcapsule is 50% by mass or more with respect to the total solid content of the aqueous dispersion, the hardness of a film formed is more improved and the dispersion stability in the aqueous dispersion is more improved.

<Shell of Microcapsule>

The shell of the microcapsule (hereinafter will also be simply referred to as "shell") has the three-dimensional cross-linked structure containing at least one bond selected from a urethane bond and a urea bond and an anionic group as a hydrophilic group and a nonionic group as a hydrophilic group.

(Three-Dimensional Cross-Linked Structure)

In the present disclosure, the term "three-dimensional cross-linked structure" refers to a three-dimensional network structure formed by cross-linking.

Whether the shell of the microcapsule has the three-dimensional cross-linked structure is checked as below. The operation described below is performed under a condition of a liquid temperature of 25°C.

In addition, in a case where the aqueous dispersion does not contain a pigment, the operation described below is performed using the aqueous dispersion as it is. In a case where the aqueous dispersion contains a pigment, first, the pigment is removed from the aqueous dispersion by centrifugation, and then the operation described below is performed on the aqueous dispersion from which the pigment has been removed.

A sample is collected from the aqueous dispersion. Tetrahydrofuran (THF) having a mass 100 times the mass of the total solid content in the sample is added to and mixed with the collected sample, thereby preparing a diluted solution. The obtained diluted solution is subjected to centrifugation under conditions of 80,000 rounds per minute (rpm; the same shall apply hereinafter) and 40 minutes. After the centrifugation, whether there are residues is checked by visual observation. In a case where there are residues, a redispersion liquid is prepared by redispersing the residues in water. For the obtained redispersion liquid, by using a wet-type particle size distribution measurement apparatus (LA-960, manufactured by HORIBA, Ltd.), the particle size distribution is measured by a light scattering method.

In a case where the particle size distribution can be checked by the operation described above, it is determined that the shell of the microcapsule has the three-dimensional cross-linked structure.

In addition, the three-dimensional cross-linked structure contains at least one kind of bond selected from a urethane bond and a urea bond. It is preferable that the three-dimensional cross-linked structure contains both the urethane bond and the urea bond.

A total amount (mmol/g) of the urethane bond and the urea bond contained in 1 g of the shell having the three-dimensional cross-linked structure is preferably 1 mmol/g to 10 mmol/g, more preferably 1.5 mmol/g to 9 mmol/g, and particularly preferably 2 mmol/g to 8 mmol/g.

The three-dimensional cross-linked structure of the shell preferably contains Structure (1).

The three-dimensional cross-linked structure may include a plurality of Structures (1), and the plurality of Structures (1) may be the same as or different from each other.

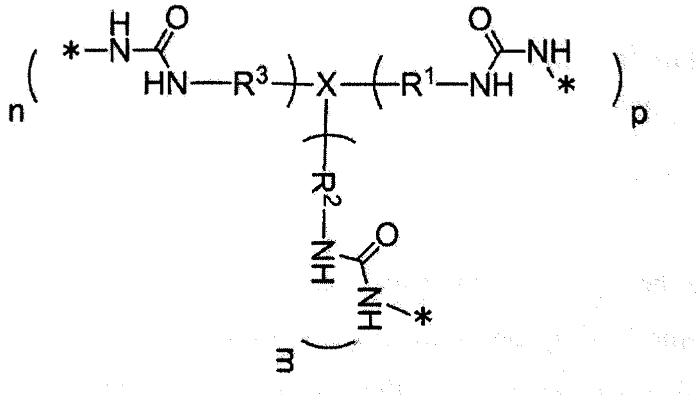

Structure (1)

In Structure (1), X represents a (p + m + n)-valent organic group formed by linking at least two groups selected from the group consisting of a hydrocarbon group which may have a ring structure, -NH-, >N-, -C(=O)-, -O-, and -S-.
In Structure (1), $R^1$, $R^2$, and $R^3$ each independently represent a hydrocarbon group having 5 to 15 carbon atoms which may have a ring structure.
In Structure (1), * represents a binding position, each of p, m, and n is equal to or greater than 0, and p + m + n equals 3 or greater.
The total molecular weight of X, $R^1$, $R^2$, and $R^3$ is preferably less than 2,000, preferably less than 1,500, and more preferably less than 1,000. In a case where the total molecular weight of X, $R^1$, $R^2$, and $R^3$ is less than 2,000, the internal content rate of the compound contained in the interior of the core can be increased.
The hydrocarbon group in the organic group represented by X is preferably a linear or branched hydrocarbon group having from 1 to 15 carbon atoms, and more preferably a linear or branched hydrocarbon group having from 1 to 10 carbon atoms.
Examples of the ring structure that the hydrocarbon group in the organic group represented by X and the hydrocarbon group represented by $R^1$, $R^2$, and $R^3$ may have, include an alicyclic structure, and an aromatic ring structure.
Examples of the alicyclic structure include a cyclohexane ring structure, a bicyclohexane ring structure, a bicyclodecane ring structure, an isobornene ring structure, a dicyclopentane ring structure, an adamantane ring structure, and a tricyclodecane ring structure.
Examples of the aromatic ring structure include a benzene ring structure, a naphthalene ring structure and a biphenyl ring structure.
In Structure (1), p is equal to or greater than 0, p is preferably 1 to 10, more preferably 1 to 8, even more preferably 1 to 6, and particularly preferably 1 to 3.
In Structure (1), m is equal to or greater than 0, m is preferably 1 to 10, more preferably 1 to 8, even more preferably 1 to 6, and particularly preferably 1 to 3.
In Structure (1), n is equal to or greater than 0, n is preferably 1 to 10, more preferably 1 to 8, even more preferably 1 to 6, and particularly preferably 1 to 3.
In Structure (1), p + m + n is preferably an integer from 3 to 10, more preferably an integer from 3 to 8, and even more preferably an integer from 3 to 6.
The (p + m + n)-valent organic group represented by X is preferably a group represented by any one of (X-l) to (X-12).

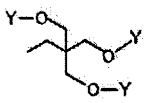
(X−1)

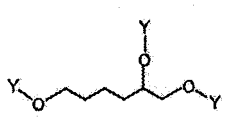
(X−2)

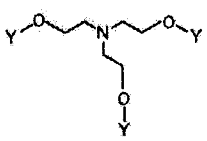
(X−3)

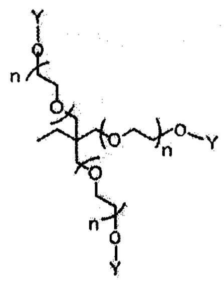
(X−4)

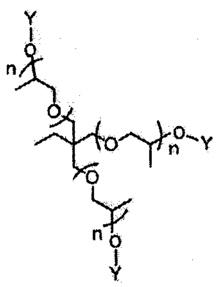
(X−5)

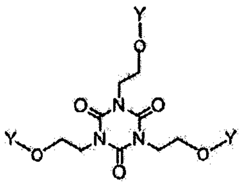

(X−6)

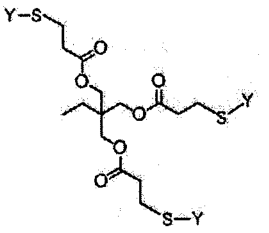

(X−7)

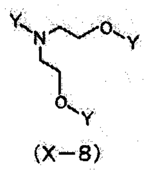

(X−8)

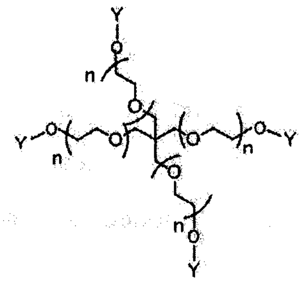

(X−9)

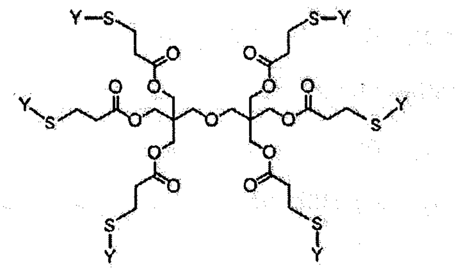

(X−10)

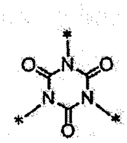

(X−11)

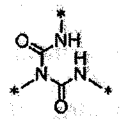

(X−12)

In Formulas (X-1) to (X-12), n represents an integer from 1 to 200, n preferably represents an integer from 1 to 50, more preferably represents an integer from 1 to 15, and particularly preferably represents an integer from 1 to 8.

In Formulas (X-11) to (X-12), * represents a binding position.

In Formulas (X-l) to (X-10), Y represents (Y-1).

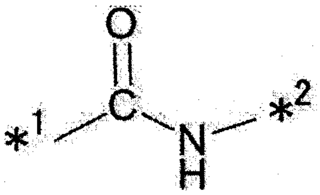

(Y−1)

In (Y-1), $*^1$ represents a binding position in which (Y-1) is bonded to S or O in (X-l) to (X-10), and $*^2$ represents a binding position in which (Y-1) is bonded to $R^1$, $R^2$, or $R^3$ in Structure (1).

In Structure (1), $R^1$, $R^2$, and $R^3$ each independently represent a hydrocarbon group having 5 to 15 carbon atoms which may have a ring structure.

The hydrocarbon group represented by $R^1$, $R^2$, and $R^3$ may have a substituent, and examples of the substituent include a hydrophilic group capable of being contained in the shell, which is described below.

$R^1$, $R^2$, and $R^3$ preferably each independently represent a group represented by any one of (R-1) to (R-20). In (R-1) to (R-20), * represents a binding position.

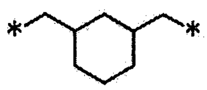

(R−1)

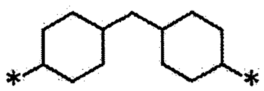

(R−2)

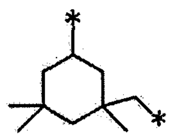

(R−3)

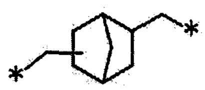

(R−4)

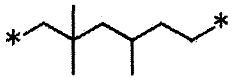
(R-5)

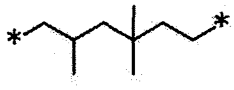
(R-6)

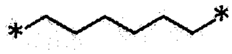
(R-7)

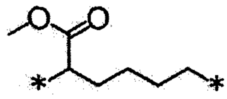
(R-8)

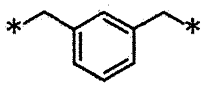
(R-9)

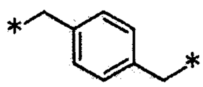
(R-10)

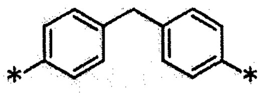
(R-11)

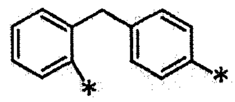
(R-12)

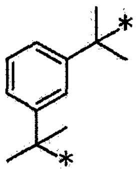
(R-13)

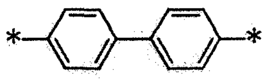
(R-14)

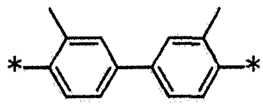
(R-15)

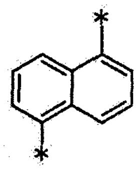
(R-16)

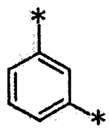
(R-17)

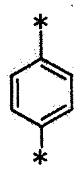
(R-18)

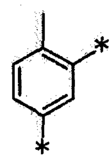
(R-19)

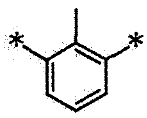
(R-20)

The content rate of Structure (1) in the shell with respect to the total mass of the shell is preferably 8% by mass to 100% by mass, more preferably 25% by mass to 100% by mass, and even more preferably 50% by mass to 100% by mass.

It is preferable that the shell includes, as Structure (1), at least one structure among Structure (2), Structure (3), and Structure (4) shown below.

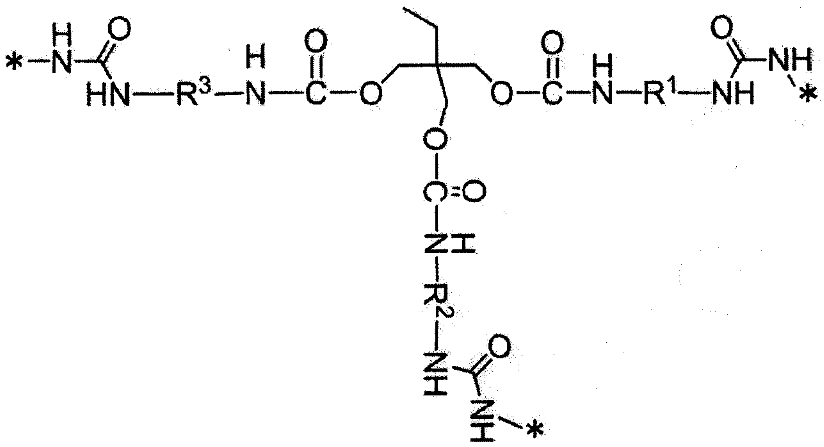

Structure (2)

In Structure (2), $R^1$, $R^2$, and $R^3$ each independently represent a hydrocarbon group having 5 to 15 carbon atoms which may have a ring structure.

Each of the hydrocarbon groups represented by $R^1$, $R^2$, and $R^3$ in Structure (2) has the same definition as each

of the hydrocarbon groups represented by $R^1$, $R^2$, and $R^3$ in Structure (1), and the preferable range thereof is also the same.

In Structure (2), * represents a binding position.

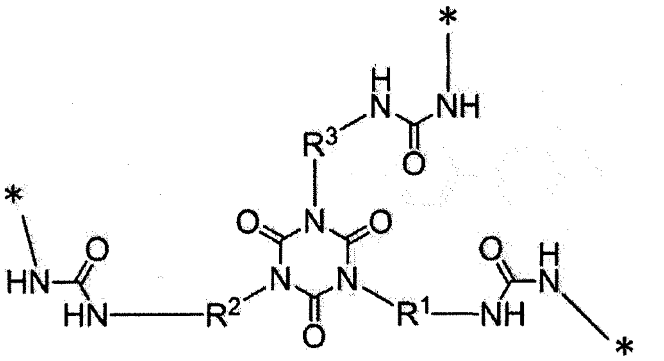

Structure (3)

In Structure (3), $R^1$, $R^2$, and $R^3$ each independently represent a hydrocarbon group having 5 to 15 carbon atoms which may have a ring structure.

Each of the hydrocarbon groups represented by $R^1$, $R^2$, and $R^3$ in Structure (3) has the same definition as each of the hydrocarbon groups represented by $R^1$, $R^2$, and $R^3$ in Structure (1), and the preferable range thereof is also the same.

In Structure (3), * represents a binding position.

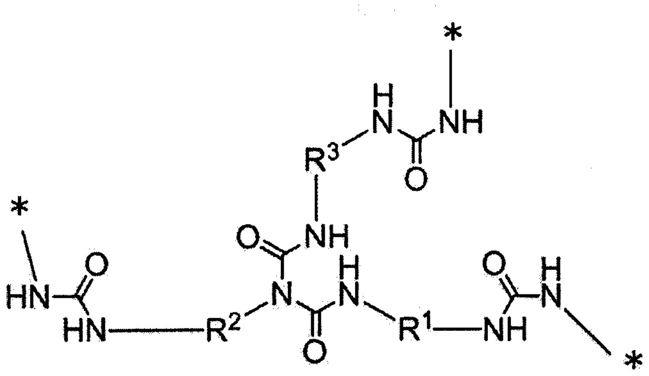

Structure (4)

In Structure (4), $R^1$, $R^2$, and $R^3$ each independently represent a hydrocarbon group having 5 to 15 carbon atoms which may have a ring structure.

Each of the hydrocarbon groups represented by $R^1$, $R^2$, and $R^3$ in Structure (4) has the same definition as each of the hydrocarbon groups represented by $R^1$, $R^2$, and $R^3$ in Structure (1), and the preferable range thereof is also the same.

In Structure (4), * represents a binding position.

Specific examples of Structure (1) to Structure (4) include structures shown in Table 1.

[Table 1]

| Structure (1) | | | | | | | Corresponding structure |
|---|---|---|---|---|---|---|---|
| X | $R^1$ | $R^2$ | R3 | p | n | m | |
| X-1 | R-1 | R-1 | R-1 | 1 | 1 | 1 | Structure (2) |
| X-1 | R-7 | R-7 | R-7 | 1 | 1 | 1 | Structure (2) |
| X-11 | R-1 | R-1 | R-1 | 1 | 1 | 1 | Structure (3) |
| X-11 | R-7 | R-7 | R-7 | 1 | 1 | 1 | Structure (3) |
| X-12 | R-7 | R-7 | R-7 | 1 | 1 | 1 | Structure (4) |

The three-dimensional cross-linked structure in the shell of the microcapsule can be formed by allowing, for example, a reaction between a tri- or higher functional isocyanate compound or a difunctional isocyanate compound and water or a compound having two or more active hydrogen groups.
Particularly, in a case where a raw material used at the time of manufacturing the microcapsule includes at least one kind of compound having three or more reactive groups (isocyanate groups or active hydrogen groups), a cross-linking reaction is three-dimensional and thus more effectively proceeds, and therefore a three-dimensional network structure is more effectively formed.
The three-dimensional cross-linked structure in the shell of the microcapsule is preferably a product formed by allowing a reaction between a tri- or higher functional isocyanate compound and water.

-Tri- or higher functional isocyanate compound-

The tri- or higher functional isocyanate compound is a compound having three or more isocyanate groups in a molecule.
Examples of the tri- or higher functional isocyanate compound include a tri- or higher functional aromatic isocyanate compound, and a tri- or higher functional aliphatic isocyanate compound.
In the present disclosure, as a tri- or higher functional isocyanate compound, any one of a known compound and a compound synthesized by the following method can be used.
Examples of the known compound include the compounds described in "Polyurethane Resin Handbook" (edited by Keiji Iwata, published from NIKKAN KOGYO SHIMBUN, LTD. (1987)).
As the tri- or higher functional isocyanate compound, a compound having three or more isocyanate groups in a molecule, specifically, a compound represented by Formula (X) is preferable.

$$X^1 \{ NCO)_n \qquad \text{Formula (X)}$$

In Formula (X), $X^1$ represents an n-valent organic group.
In Formula (X), n is equal to or greater than 3. n is preferably 3 to 10, more preferably 3 to 8, and even more preferably 3 to 6.
As the compound represented by Formula (X), a compound represented by Formula (11) is preferable.

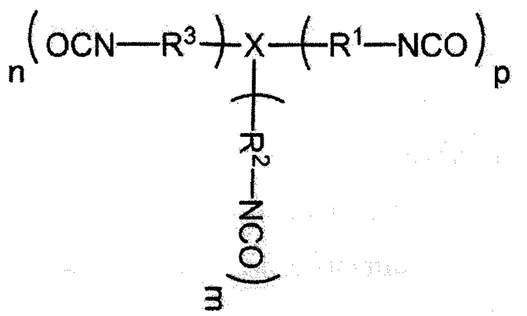

Formula (11)

X, $R^1$, $R^2$, $R^3$, p, m, and n in Formula (11) have the same definition as X, $R^1$, $R^2$, $R^3$, p, m, and n in Structure (1) described above, and the preferable aspect thereof is also the same.
The tri- or higher functional isocyanate compound is preferably a compound derived from a difunctional isocyanate compound (a compound having two isocyanate groups in a molecule).
The tri- or higher functional isocyanate compound is more preferably an isocyanate compound derived from at least one kind of a difunctional isocyanate compound selected from isophorone diisocyanate, hexamethylene diisocyanate, trimethylhexamethylene diisocyanate, 1,3-bis(isocyanatomethyl)cyclohexane, m-xylylene diisocyanate, and dicyclohexylmethane 4,4'-diisocyanate, from the viewpoint of ease of forming the three-dimensional cross-linked structure.
The phrase "derived from" means that a structure derived from the difunctional isocyanate compound is contained using the above difunctional isocyanate compound as a raw material.
In addition, as the tri- or higher functional isocyanate compound, an isocyanate compound (adduct type) caused to have three or more functional groups as an adduct product (an adduct type) of a difunctional isocyanate compound (a compound having two isocyanate groups in a molecule) and a tri- or higher functional compound having three or more active hydrogen groups in a molecule such as polyol, polyamine, or polythiol, a trimer of a difunctional isocyanate compound (a biuret type or an isocyanurate type), and a compound having three or more isocyanate groups in a molecule such as a formalin condensate of benzene isocyanate are also preferable.

These tri- or higher functional isocyanate compounds are may be a mixture containing a plurality of compounds. It is preferable that a compound represented by Formula (11A) or Formula (11B) shown below is a main component of this mixture, and other components may also be contained in the mixture.

-Adduct type-

The tri- or higher functional isocyanate compound of the adduct-type is preferably a compound represented by Formula (11A) or Formula (11B).

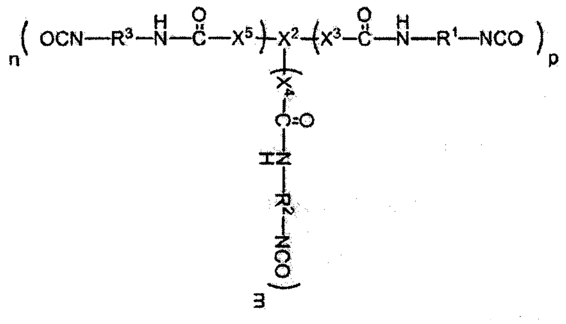

Formula (11A)

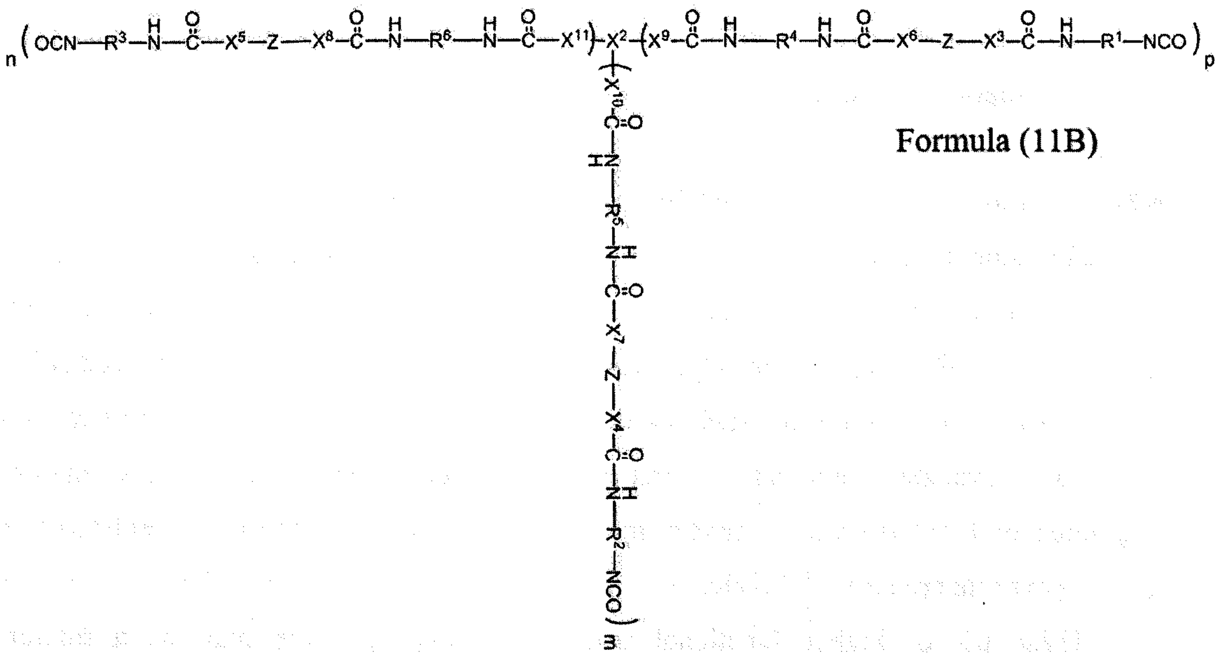

Formula (11B)

In Formula (11A) and Formula (11B), $X^2$ represents a (p + m + n)-valent organic group, each of p, m, and n is 0 or greater, and p + m + n equals 3 or greater.

In Formula (11A) and Formula (11B), $X^3$ to $X^{11}$ each independently represent O, S, or NH.

In Formula (11A) and Formula (11B), $R^1$ to $R^6$ each independently represent a divalent organic group.

In Formula (11A) and Formula (11B), Z represents a divalent organic group.

In Formula (11A) and Formula (11B), $X^2$ is preferably a (p + m + n)-valent organic group formed by linking at least two groups selected from the group consisting of a hydrocarbon group which may have a ring structure, -NH-, >N-, -C(=O)-, -O-, and -S-.

In Formula (11A) and Formula (11B), p + m + n preferably equals 3 to 10, more preferably equals 3 to 8, and even more preferably equals 3 to 6.

In Formula (11A) and Formula (11B), $X^3$ to $X^{11}$ each independently preferably represent O or S, and more preferably represent O.

In Formula (11A) and Formula (11B), $R^1$ to $R^6$ each independently preferably represent a hydrocarbon group having 5 to 15 carbon atoms which may have a ring structure.

In Formula (11A) and Formula (I1B), the preferable aspect of each of $R^1$ to $R^6$ is the same as the preferable aspect of $R^1$ in Structure (1).

In a case where $X^2$ in Formula (11A) and Formula (11B) is a hydrocarbon group that may have a ring structure, examples of the ring structure include an alicyclic structure and an aromatic ring structure.

Examples of the alicyclic structure include a cyclohexane ring structure, a bicyclohexane ring structure, a bicyclodecane ring structure, an isobornene ring structure, a dicyclopentane ring structure, an adamantane ring structure, and a tricyclodecane ring structure.

Examples of the aromatic ring structure include a benzene ring structure, a naphthalene ring structure and a biphenyl ring structure.

In a case where each of $R^1$ to $R^6$ in Formula (11A) and Formula (11B) is a hydrocarbon group having 5 to 15 carbon atoms which may have a ring structure, examples of the ring structure include an alicyclic structure and an aromatic ring structure.

Examples of the alicyclic structure include a cyclohexane ring structure, a bicyclohexane ring structure, a bicyclodecane ring structure, an isobornene ring structure, a dicyclopentane ring structure, an adamantane ring structure, and a tricyclodecane ring structure.

Examples of the aromatic ring structure include a benzene ring structure, a naphthalene ring structure, and a biphenyl ring structure.

In Formula (11A) and Formula (11B), the (p + m + n)-valent organic group represented by $X^2$ is preferably a group represented by any one of (X2-1) to (X2-10).

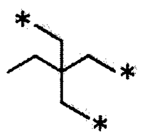

(X2−1)

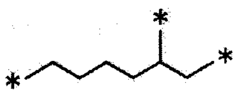

(X2−2)

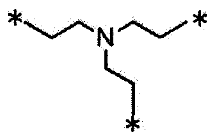

(X2−3)

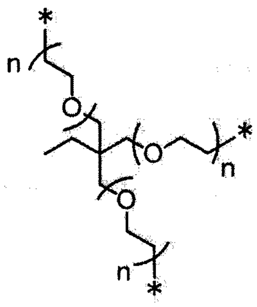

(X2−4)

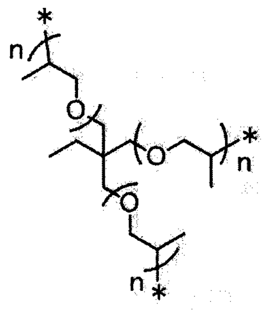

(X2−5)

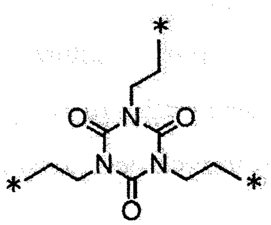

(X2−6)

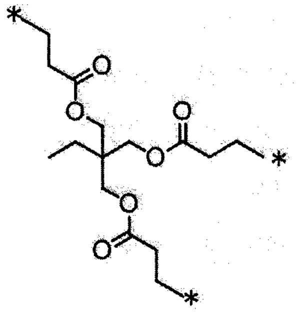

(X2−7)

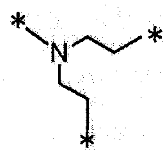

(X2−8)

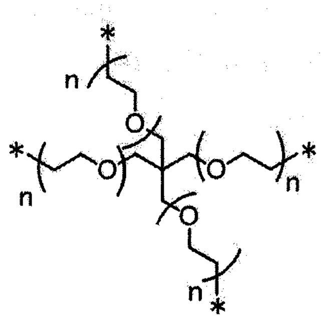

(X2−9)

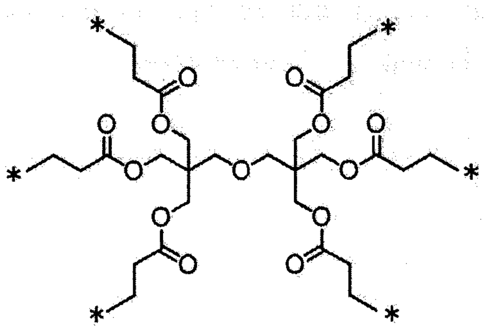

(X2−10)

In Formulas (X2-1) to (X2-10), n represents an integer from 1 to 200, preferably represents an integer from 1 to 50, more preferably represents an integer from 1 to 15, and particularly preferably represents an integer from 1 to 8.

In Formula (X2-1) to Formula (X2-10), * represents a binding position.

In Formula (11B), the divalent organic group represented by Z is preferably a hydrocarbon group, a group having a polyoxyalkylene structure, a group having a polycaprolactone structure, a group having a polycarbonate structure, or a group having a polyester structure.

The hydrocarbon group represented by Z may be a linear hydrocarbon group, a branched hydrocarbon group, or a cyclic hydrocarbon group.

The number of carbon atoms in the hydrocarbon group represented by Z is preferably 2 to 30.

In Formula (11A) and Formula (11B), $R^1$ to $R^6$ each independently preferably represent a group (R-1) to a group (R-20).

In Formula (11A) and Formula (11B), $R^1$ to $R^6$ each independently more preferably represent any one of a group (R-3) derived from isophorone diisocyanate (IPDI), a group (R-7) derived from hexamethylene diisocyanate (HDI), a group (R-5) derived from trimethylhexamethylene diisocyanate (TMHDI), a group (R-9) derived from m-xylylene diisocyanate (XDI), a group (R-1) derived from 1,3-bis(isocyanatomethyl)cyclohexane, and a group (R-2) derived from dicyclohexylmethane 4,4'-diisocyanate.

As the compound represented by General Formula (11A), a compound represented by Formula (11A-1) is preferable.

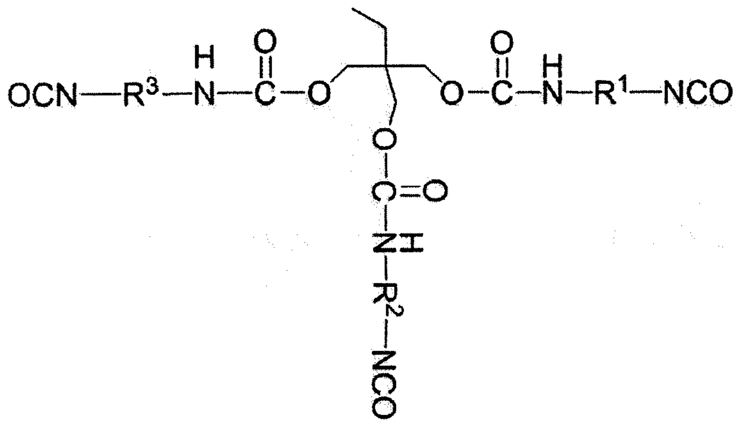

Formula (11A-1)

In Formula (11A-1), $R^1$, $R^2$, and $R^3$ have the same definition as $R^1$, $R^2$, and $R^3$ in Formula (11A), and the preferable aspect thereof is also the same.

The adduct-type tri- or higher functional isocyanate compound can be synthesized by allowing a reaction between a compound, which will be described later, having three or more active hydrogen groups in a molecule with a difunctional isocyanate compound which will be described later.

In the present specification, the active hydrogen group means a hydroxyl group, a primary amino group, a secondary amino group, or a mercapto group.

The adduct-type tri- or higher functional isocyanate compound can be obtained by, for example, heating (50°C to 100°C) a compound having three or more active hydrogen groups in a molecule and a difunctional isocyanate compound in an organic solvent while stirring or by stirring the above compounds at a low temperature (0°C to 70°C) while adding a catalyst such as stannous octanoate thereto (Synthesis Scheme 1 shown below).

Generally, in regard to the number of moles (number of molecules) of the difunctional isocyanate compound reacted with the compound having three or more active hydrogen groups in a molecule, a difunctional isocyanate compound is used of which the number of moles (number of molecules) is equal to or higher than 60% of the number of moles (the number of equivalents of active hydrogen groups) of the active hydrogen groups in the compound having three or more active hydrogen groups in a molecule. The number of moles of the difunctional isocyanate compound is preferably 60% to 500%, more preferably 60% to 300%, and even more preferably 80% to 200% of the number of moles of the active hydrogen groups.

-Synthesize Scheme 1-

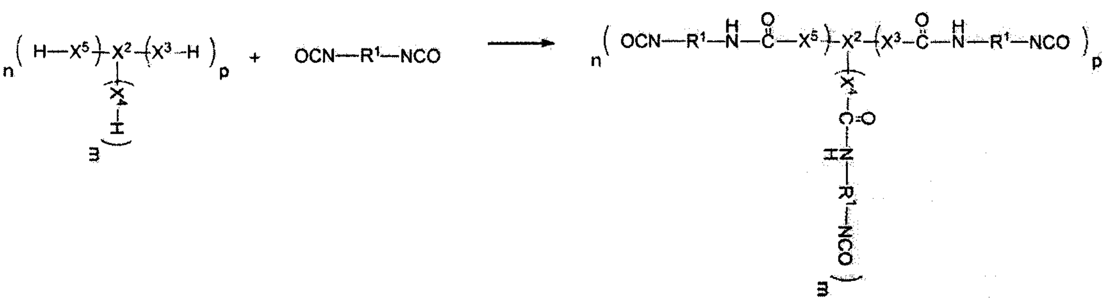

Furthermore, the adduct-type tri- or higher functional isocyanate compound can also be obtained by synthesizing an adduct (a prepolymer; "(PP)" shown in the synthesize scheme below) of a compound having two active hydrogen groups in a molecule and a difunctional isocyanate compound and then allowing the prepolymer to react with a compound having three or more active hydrogen groups in a molecule (Synthesis Scheme 2 shown below).

| -Synthesize Scheme 2-

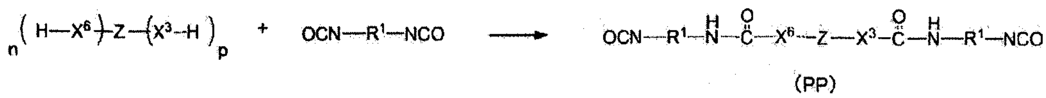

(PP)

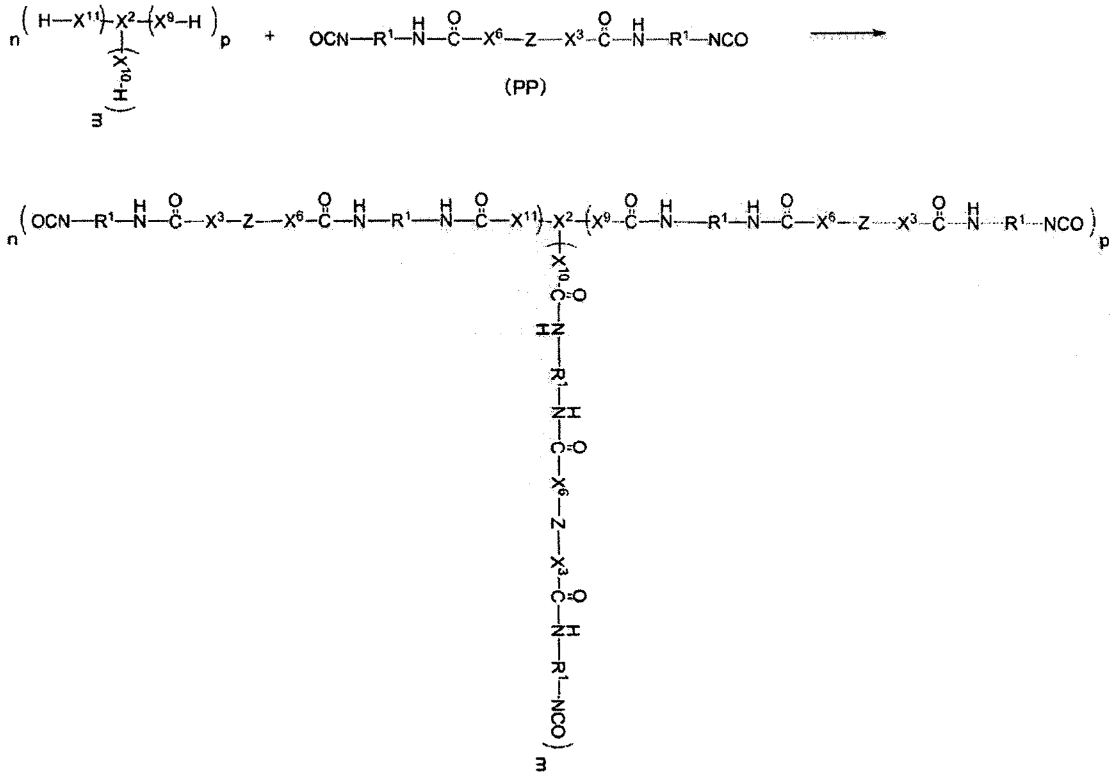

(PP)

Examples of the difunctional isocyanate compound include a difunctional aromatic isocyanate compound, and a difunctional aliphatic isocyanate compound.

Specific examples of the difunctional isocyanate compound include isophorone diisocyanate (IPDI), m-phenylene diisocyanate, p-phenylene diisocyanate, 2,6-tolylene diisocyanate, 2,4-tolylene diisocyanate (TDI), naphthalene-1,4-diisocyanate, diphenylmethane-4,4'-diisocyanate (MDI), 3,3'-dimethoxy-biphenyl diisocyanate, 3,3'-dimethyldiphenylmethane-4,4'-diisocyanate, m-xylylene diisocyanate (XDI), p-xylylene diisocyanate, 4-chloroxylylene-1,3 -diisocyanate, 2-methylxylylene-1,3 -diisocyanate, 4,4'-diphenylpropane diisocyanate, 4,4'-diphenylhexafluoropropane diisocyanate, trimethylene diisocyanate, hexamethylene diisocyanate (HDI), propylene-1,2-diisocyanate, butylene-1,2-diisocyanate, cyclohexylene-1,2-diisocyanate, cyclohexylene-1,3-diisocyanate, cyclohexylene-1,4-diisocyanate, dicyclohexylmethane-4,4' -diisocyanate, 1,4-bis(isocyanatomethyl)cyclohexane, 1,3-bis(isocyanatomethyl)cyclohexane (HXDI), norbornene diisocyanate (NBDI), trimethylhexamethylene diisocyanate (TMHDI), lysine diisocyanate, and 1,3-bis(2-isocyanato-2-propyl)benzene.

As the difunctional isocyanate compounds, compounds having structures represented by (1-1) to (1-24) shown below are preferable.

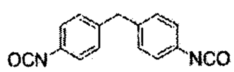

MDI
(I−1)

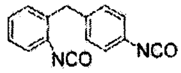

(I−2)

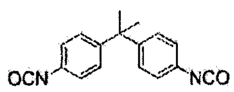

(I−3)

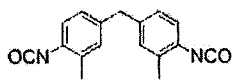

(I−4)

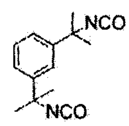

(I−5)

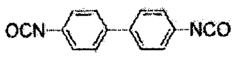
(I−6)

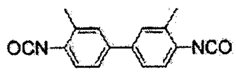
(I−7)

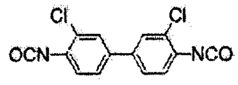
(I−8)

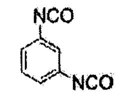
(I−9)

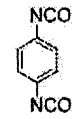
(I−10)

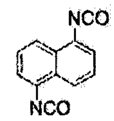
(I−11)

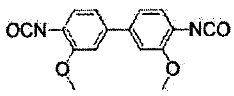
(I−12)

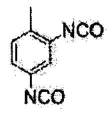
TDI
(I−13)

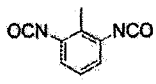
TDI
(I−14)

One or a mixture of these structures

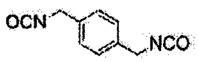
(I−15)

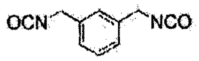
XDI
(I−16)

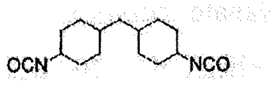
HMDI
(I−17)

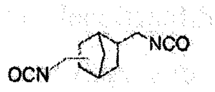
NBDI
(I−18)

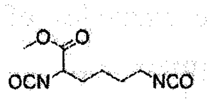
(I−19)

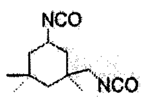
IPDI
(I−20)

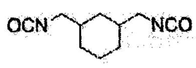
HXDI
(I−21)

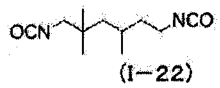
(I−22)

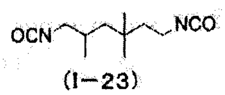
(I−23)

One or a mixture of these structures

TMHDI

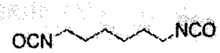
HDI
(I−24)

Among the compounds, as the difunctional isocyanate compounds, at least one compound selected from isophorone diisocyanate (IPDI), hexamethylene diisocyanate (HDI), trimethylhexamethylene diisocyanate (TMHDI), 1,3-bis(isocyanatomethyl)cyclohexane (HXDI), m-xylylene diisocyanate (XDI), and dicyclohexylmethane-4,4'-diisocyanate (HMDI) is particularly preferable.

In addition, as the difunctional isocyanate compound, a difunctional isocyanate compound derived from the above compounds can also be used. Examples thereof include DURANATE (registered trademark) D101, D201, A101 (all of which are manufactured by Asahi Kasei Corporation).

The compound having three or more active hydrogen groups in a molecule is a compound having three or more groups, each of which is at least one kind of group selected from a hydroxyl group, a primary amino group, a secondary amino group, and a mercapto group, in a molecule. Examples thereof include compounds having structures represented by (H-1) to (H-13) shown below. In the following structures, n represents an integer selected from 1 to 100.

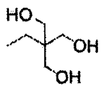
(H−1)

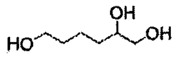
(H−2)

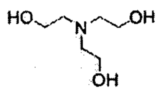
(H−3)

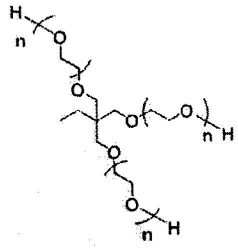
(H−4)

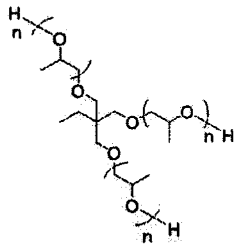
(H−5)

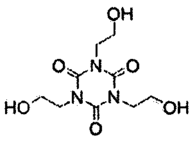
(H−6)

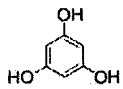
(H−7)

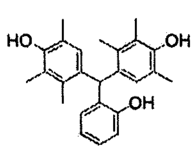
(H−8)

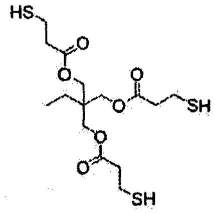
(H−9)

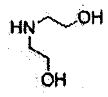
(H−10)

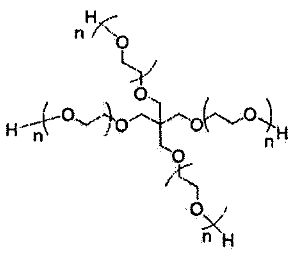
(H−11)

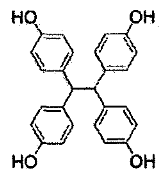
(H−12)

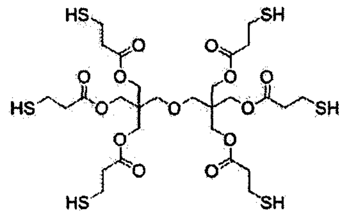
(H−13)

As the adduct-type tri- or higher functional isocyanate compound, it is preferable to use a compound obtained by allowing a reaction between a compound having two or more active hydrogen groups in a molecule with a difunctional isocyanate compound according to combinations listed in Table 2.

[Table 2]

| | Polyisocyanate structure | | Composition | |
|---|---|---|---|---|
| Compound No. | Compound having two or more active hydrogen groups | Difunctional isocyanate compound | Compound having two or more active hydrogen groups (equivalents per mol) | Difunctional isocyanate compound (equivalents per mol) |
| NCO 101 | 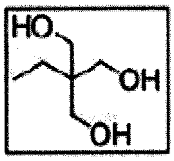 Trimethylolpropane | 2,4-Tolylene diisocyanate (TDI) | 1 | 4 |
| NCO 102 | | m-xylylene diisocyanate (XDI) | 1 | 4 |
| NCO 103 | | Hexamethylene diisocyanate (HDI) | 1 | 4 |
| NCO 104 | | 1,3-Bis (isocyanatomethyl) cyclohexane (HXDI) | 1 | 4 |
| NCO 105 | | Isophorone diisocyanate (IPDI) | 1 | 4 |
| NCO 106 | 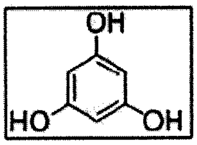 1,3,5-Trihydroxybenzene | Hexamethylene diisocyanate (HDI) | 1 | 4 |
| NCO 107 | | Isophorone diisocyanate (IPDI) | 1 | 4 |
| NCO 108 | 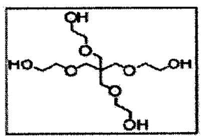 Pentaerythritol ethylene oxide | 1,3-Bis (isocyanatomethyl) cyclohexane (HXDI) | 1 | 5 |
| NCO 109 | | Isophorone diisocyanate (IPDI) | 1 | 5 |
| NCO 110 | 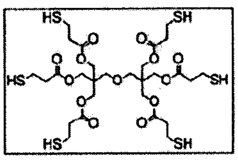 Dipentaerythritol hexakis(3-mercaptopropionate) | Hexamethylene diisocyanate (HDI) | 1 | 7 |
| NCO 111 | | Isophorone diisocyanate (IPDI) | 1 | 7 |
| NCO 112 | 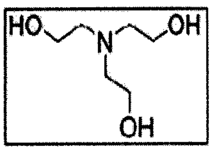 Triethanolamine | Hexamethylene diisocyanate (HDI) | 1 | 4 |
| NCO 113 | | Isophorone diisocyanate (IPDI) | 1 | 4 |

As the adduct-type tri- or higher functional isocyanate compound, among the compounds shown in Table 2, NCO 102 to NCO 105, NCO 107, NCO 108, NCO 111, and NCO 113 are more preferable.

As the adduct-type tri- or higher functional isocyanate compound, a commercially available product on the market may be used.

Examples of the commercially available product include TAKENATE (registered trademark) D-102, D-103, D-103H, D-103M2, P49-75S, D-110N, D-120N, D-140N, and D-160N (all of which are manufactured by Mitsui Chemicals,

Inc.), DESMODUR (registered trademark) L75 and UL57SP (manufactured by Sumika Bayer Urethane Co., Ltd.), CORONATE (registered trademark) HL, HX, and L (manufactured by Nippon Polyurethane Industry Co., Ltd.), P301-75E (manufactured by Asahi Kasei Corporation.).

Among these, as the adduct-type tri- or higher functional isocyanate compound, at least one selected from TAKENATE (registered trademark) D-110N, D-120N, D-140N, and D-160N (manufactured by Mitsui Chemicals, Inc.) is more preferable.

-Biuret Type or Isocyanurate Type-

As the isocyanurate-type tri- or higher functional isocyanate compound, a compound represented by Formula (11C) is preferable.

As the biuret-type tri- or higher functional isocyanate compound, a compound represented by Formula (11D) is preferable.

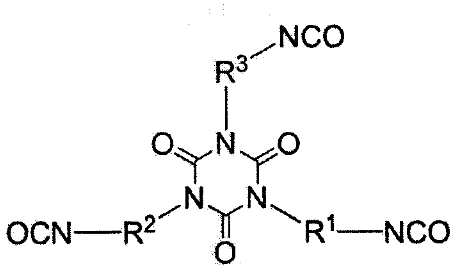

Formula (11C)

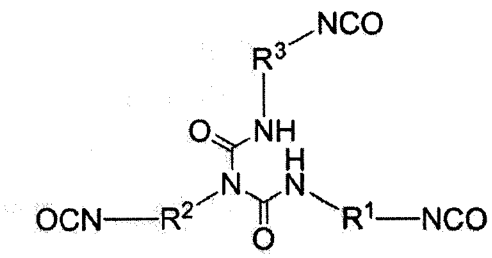

Formula (11D)

In Formula (11C) and Formula (11D), $R^1$, $R^2$, and $R^3$ each independently represent a divalent organic group.

In Formula (11C) and Formula (11D), $R^1$, $R^2$, and $R^3$ each independently preferably represent an alkylene group having from 1 to 20 carbon atoms which may have a substituent, a cycloalkylene group having from 1 to 20 carbon atoms which may have a substituent, or an arylene group having from 1 to 20 carbon atoms which may have a substituent.

In Formula (11C) and Formula (11D), $R^1$, $R^2$, and $R^3$ each independently particularly preferably represent a group selected from the groups represented by (R-1) to (R-20) described above.

In Formula (11C) and Formula (11D), $R^1$ to $R^3$ each independently more preferably represent any one of the group (R-3) derived from isophorone diisocyanate (IPDI), the group (R-7) derived from hexamethylene diisocyanate (HDI), the group (R-5) derived from trimethylhexamethylene diisocyanate (TMHDI), the group (R-9) derived from m-xylylene diisocyanate (XDI), the group (R-1) derived from 1,3-bis(isocyanatomethyl)cyclohexane, and the group (R-2) derived from dicyclohexylmethane 4,4'-diisocyanate.

As the isocyanurate-type tri- or higher functional isocyanate compound, a commercially available product on the market may be used.

Examples of the commercially available product include TAKENATE (registered trademark) D-127N, D-170N, D-170HN, D-172N, and D-177N (all of which are manufactured by Mitsui Chemicals, Inc.), SUMIDUR N3300, DESMODUR (registered trademark) N3600, N3900, and Z4470BA (all of which are manufactured by Sumika Bayer Urethane Co., Ltd.), CORONATE (registered trademark) HX and HK (all of which are manufactured by Nippon Polyurethane Industry Co., Ltd.), DURANATE (registered trademark) TPA-100, TKA-100, TSA-100, TSS-100, TLA-100, and TSE-100 (all of which are manufactured by Asahi Kasei Corporation.).

Among these, as the isocyanurate-type tri- or higher functional isocyanate compound, at least one selected from TAKENATE (registered trademark) D-127N (manufactured by Mitsui Chemicals, Inc.), DURANATE (registered trademark) TKA-100, TSS-100, and TSE-100 (all of which are manufactured by Asahi Kasei Corporation.) is more preferable.

As the biuret-type tri- or higher functional isocyanate compound, a commercially available product on the market may be used.

Examples of the commercially available product include TAKENATE (registered trademark) D-165N and NP 1100 (all of which are manufactured by Mitsui Chemicals, Inc.), DESMODUR (registered trademark) N3200 (Sumika Bayer Urethane Co., Ltd.), DURANATE (registered trademark) 24A-100 (manufactured by Asahi Kasei Corporation.).

Among these, as the biuret-type tri- or higher functional isocyanate compound, DURANATE (registered trademark) 24A-100 (manufactured by Asahi Kasei Corporation.) is more preferable.

Among these tri- or higher functional isocyanate compounds of the biuret-type and the isocyanurate-type,

DURANATE (registered trademark) 24A-100 (manufactured by Asahi Kasei Corporation.), D-120N and D-127 (manufactured by Mitsui Chemicals, Inc.), TKA-100, TSS-100, and TSE-100 (manufactured by Asahi Kasei Corporation.) are more preferable.

The content (unit: mmol/g) of the isocyanate group per 1 g of the tri- or higher functional isocyanate compound is preferably 1 mmol/g to 10 mmol/g, more preferably 1.5 mmol/g to 8 mmol/g, and even more preferably 2 mmol/g to 6 mmol/g.

For obtaining the content of the isocyanate group, the isocyanate compound of interest is dissolved in dehydrated toluene, an excess di-n-butylamine solution is then added thereto so as to cause a reaction, and the remaining di-n-butylamine solution is subjected to back titration by using hydrochloric acid. From the titration amount at an inflection point on the titration curve, the content of the isocyanate group can be calculated.

More specifically, the content of the isocyanate group can be calculated by the method described below.

By using a potentiometric titrator (AT-510, manufactured by KYOTO ELECTRONICS MANUFACTURING CO., LTD.) and a 1 mol/L aqueous hydrochloric acid solution, neutralization titration is performed at 25°C by the blank measurement and the sample measurement described below. From the obtained titration amounts Z1 and Z2, the content of the isocyanate group can be calculated from Equation (N).

$$\text{Content of isocyanate group (mmol/g)} = (Z1 - Z2)/(W \times Y) \qquad \text{Equation (N)}$$

In Equation (N), Z1 represents the titration amount of a blank, Z2 represents the titration amount of a sample, W represents the solid content of the sample, and Y represents the mass of the sample.

~Blank measurement-

10 mL of dehydrated toluene, 10.0 mL of a 2 mol/L di-n-butylamine solution, and 50 mL of isopropyl alcohol are put into a 100 mL beaker and mixed together, thereby preparing a mixed liquid. For the mixed liquid, neutralization titration is performed using a 1 mol/L hydrochloric acid solution. The inflection point on the titration curve is taken as the end point, and the titration amount Z1 (mL) to the end point is determined.

~Sample measurement~

A sample (an isocyanate compound) Yg with W% by mass of solid content is collected and put into a 100 mL beaker, 20 mL of dehydrated toluene is added to the beaker, and the sample is dissolved, thereby preparing a solution. 10.0 mL of a 2 mol/L di-n-butylamine solution is added to and mixed with the solution, and then the solution is left to stand for 20 minutes or longer. 50 mL of isopropyl alcohol is added to the solution having been left to stand. Thereafter, neutralization titration is performed using a 1 mol/L hydrochloric acid solution, the inflection point on the titration curve is taken as an end point, and the titration amount Z2 (mL) to the end point is determined.

(Water or compound having two or more active hydrogen groups)

The shell of the microcapsule is formed by allowing a reaction between the aforementioned tri- or higher functional isocyanate compound with water or a compound having two or more active hydrogen groups.

As a compound to be reacted with the tri- or higher functional isocyanate compound, generally, water is used. By allowing the tri- or higher functional isocyanate compound to react with water, a three-dimensional cross-linked structure having a urea bond is formed.

In addition, examples of the compound to be reacted with the tri- or higher functional isocyanate compound includes, other than water, a compound having two or more active hydrogen group.

Examples of the active hydrogen group include a hydroxyl group, an amino group (a primary amino group and a secondary amino group), and a mercapto group (that is, a thiol group).

Examples of the compound having two or more active hydrogen groups include a polyfunctional alcohol, and a polyfunctional phenol, a polyfunctional amine having a hydrogen atom on a nitrogen atom, a polyfunctional thiol.

By allowing the tri- or higher functional isocyanate compound to react with a polyfunctional alcohol or a polyfunctional phenol, a three-dimensional cross-linked structure having a urethane bond is formed.

By allowing the tri- or higher functional isocyanate compound to react with a polyfunctional amine having a hydrogen atom on a nitrogen atom, a three-dimensional cross-linked structure having a urea bond is formed.

Specific examples of the polyfunctional alcohol include propylene glycol, glycerin, trimethylolpropane, and 4,4',4"-trihydroxytriphenylmethane.

Specific examples of the polyfunctional amine include diethylene triamine, and tetraethylene pentamine.

Specific examples of the polyfunctional thiol include 1,3-propanedithiol, and 1,2-ethanedithiol.

Specific examples of the polyfunctional phenol include bisphenol A.

The compound having two or more active hydrogen groups may be used alone, or two or more kinds thereof may be used in combination.

The compound having two or more active hydrogen groups also includes the aforementioned compound having three or more active hydrogen groups in a molecule.

(Nonionic Group as Hydrophilic Group)

The three-dimensional cross-linked structure of the shell has at least one nonionic group as a hydrophilic group.

The nonionic group is a monovalent group having a polyether structure, a monovalent group having a polyoxyalkylene chain is preferable, and a group (W) represented by Formula (W) is preferable, from the viewpoint of improving the dispersion stability of the microcapsule.

The group (W) represented by Formula (W) is a monovalent group having a polyether structure in which a terminal is sealed. The group (W) is excellent for the dispersing action of the microcapsule compared to a divalent group having a polyether structure in which a terminal is not sealed. The following reason is considered as the reason for the above description. The group (W) has a structure which is likely to extend towards a dispersion medium from the surface of the shell, and thus makes a distance between the microcapsules easy to be widened, compared to the divalent group having a polyether structure in which a terminal is not sealed. Therefore, the group (W) is excellent for the dispersing action of the microcapsule compared to the divalent group having a polyether structure in which a terminal is not sealed.

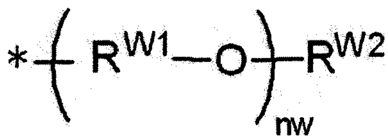

Formula (W)

In Formula (W), $R^{W1}$ represents a branched or unbranched alkylene group having from 1 to 6 carbon atoms, $R^{W2}$ represents a branched or unbranched alkyl group having from 1 to 6 carbon atoms, nw represents an integer from 2 to 200, and * represents a binding position.

In Formula (W), the number of carbon atoms in the branched or unbranchedalkylene group represented by $R^{W1}$ having from 1 to 6 carbon atoms is preferably 2 to 4, more preferably 2 or 3, and particularly preferably 2 (that is, $R^{W1}$ is an ethylene group).

In Formula (W), the number of carbon atoms in the branched or unbranched alkyl group represented by $R^{W2}$ having from 1 to 6 carbon atoms is preferably 1 to 4, and particularly preferably 1 (that is, $R^{W2}$ is a methyl group).

In Formula (W), nw represents an integer from 2 to 200. nw is preferably an integer from 10 to 200, preferably an integer from 10 to 150, more preferably an integer from 20 to 150, and particularly preferably an integer from 20 to 100.

Introduction of the nonionic group into the shell can be carried out by allowing a reaction between the aforementioned tri- or higher functional isocyanate compound, at least one of a compound having a nonionic group and an active hydrogen group or an isocyanate compound into which a nonionic group is introduced, and water or a compound having two or more active hydrogen groups.

The isocyanate compound into which the nonionic group is introduced can be manufactured by allowing, for example, a di- or higher functional isocyanate compound to react with a compound having a nonionic group and an active hydrogen group.

-Compound Having Nonionic Group and Active Hydrogen Group-

The compound having a nonionic group and an active hydrogen group may have only one or two or more nonionic groups.

The compound having a nonionic group and an active hydrogen group may have only one or two or more active hydrogen groups.

The compound having a nonionic group and an active hydrogen group is a compound having a polyether structure, and a compound having a polyoxyalkylene chain is preferable.

Examples of the compound having a polyoxyalkylene chain include polyethylene oxide, polypropylene oxide, polytetramethylene oxide, polystyrene oxide, polycyclohexylene oxide, a polyethylene oxide-polypropylene oxide block copolymer, and a polyethylene oxide-polypropylene oxide random copolymer.

Among these, as the compound having a polyoxyalkylene chain, at least one compound selected from polyethylene oxide, polypropylene oxide, and a polyethylene oxide-polypropylene oxide block copolymer is preferable, and

polyethylene oxide is more preferable.

As the compound having a polyether structure, at least one compound selected from a polyethylene oxide monoether compound (e.g. monomethyl ether, monoethyl ether) and a polyethylene oxide monoester compound (e.g. a monoacetic acid ester, a mono(meth)acrylic acid ester) is preferable.

-Isocyanate compound into which nonionic group is introduced-

As described above, for introducing a nonionic group into the shell, an isocyanate compound into which a nonionic group is introduced can also be used.

Only one or two or more nonionic groups may be introduced into an isocyanate compound.

As the isocyanate compound into which a nonionic group is introduced, a reaction product between a compound having a nonionic group and an active hydrogen group, a compound having two or more active hydrogen groups, and a difunctional isocyanate compound (particularly preferably, isophorone diisocyanate (IPDI), hexamethylene diisocyanate (HDI), trimethylhexamethylene diisocyanate (TMHDI), 1,3-bis(isocyanatomethyl)cyclohexane (HXDI), m-xylylene diisocyanate (XDI), or dicyclohexylmethane-4,4'-diisocyanate (HMDI)); or a reaction product between a compound having a nonionic group and an active hydrogen group, and a difunctional isocyanate compound, is preferable.

In a case where the group having a polyether structure is introduced into the shell, as the isocyanate compound into which the nonionic group (i.e. the monovalent group having a polyether structure) is introduced, it is preferable to use an adduct of a compound having two or more active hydrogen groups, a difunctional isocyanate compound, and a compound having a polyether structure and an active hydrogen group.

The preferable aspects of the compound having two or more active hydrogen groups and the difunctional isocyanate compound are as described above.

As the compound having a polyether structure and an active hydrogen group, a compound represented by Formula (WM) is preferable.

$$HO\!\left(R^{W1}-O\right)_{nw}\!-R^{W2} \qquad \text{Formula (WM)}$$

In Formula (WM), each of $R^{W1}$, $R^{W2}$, and nw has the same definition as $R^{W1}$, $R^{W2}$, and nw in Formula (W) described above, and the preferable aspect thereof is also the same.

As the adduct of the compound having two or more active hydrogen groups, the difunctional isocyanate compound, and the compound having a polyether structure and an active hydrogen group, an adduct (for example, TAKENATE (registered trademark) D-116N manufactured by Mitsui Chemicals, Inc.) of trimethylolpropane (TMP), m-xylylene diisocyanate (XDI), and polyethylene glycol monomethyl ether (EO) is preferable.

In a case of using the compound having a nonionic group and an active hydrogen group for introducing a hydrophilic group into the shell, an amount used of the compound having a nonionic group and an active hydrogen group is preferably 0.1% by mass to 50% by mass, more preferably 0.1% by mass to 45% by mass, even more preferably 0.1% by mass to 40% by mass, even more preferably 1% by mass to 35% by mass, and even more preferably 3% by mass to 30% by mass, with respect to the total solid content of the microcapsule.

In addition, in the isocyanate compound into which a nonionic group is introduced, the average number of functional groups of the isocyanate group is equal to or smaller than 3 in some cases. However, even in these cases, as long as the raw materials for forming the shell contain at least one tri- or higher functional isocyanate compound, the shell having the three-dimensional cross-linked structure can be formed.

(Anionic Group as Hydrophilic Group)

The three-dimensional cross-linked structure of the shell has at least one anionic group as a hydrophilic group.

As the anionic group, at least one selected from the group consisting of a carboxy group, a salt of a carboxy group, a sulfo group, a salt of a sulfo group, a phosphoric acid group, a salt of a phosphoric acid group, a phosphonic acid group, a salt of a phosphonic acid group, a sulfate group, and a salt of a sulfate group is preferable from the viewpoint of the dispersion stability of the microcapsule.

As the salts, an alkali metal salt or an organic amine salt is preferable, an alkali metal salt is more preferable, and a sodium salt or a potassium salt is particularly preferable.

Among these, as the anionic group, at least one selected from the group consisting of a carboxy group, a salt of a carboxy group, a sulfo group, a salt of a sulfo group, a phosphoric acid group, and a salt of a phosphoric acid group

is preferable, and at least one selected from the group consisting of a carboxy group and a salt of a carboxy group is more preferable, from the viewpoint of the dispersion stability of the microcapsule.

The three-dimensional cross-linked structure of the shell preferably contains at least one of structures represented by Formulas (X1) to (X4) (hereinafter, will also be referred to as Structures (X1) to (X4)) as a structure containing an anionic group, from the viewpoint of ease of introducing an anionic group into the shell (three-dimensional cross-linked structure).

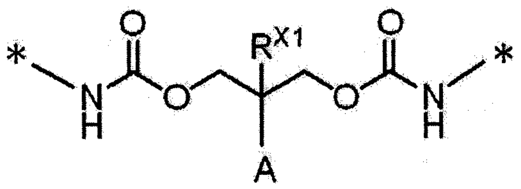

Formula (X1)

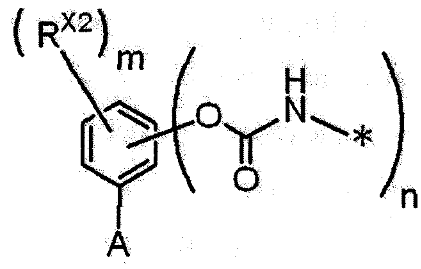

Formula (X2)

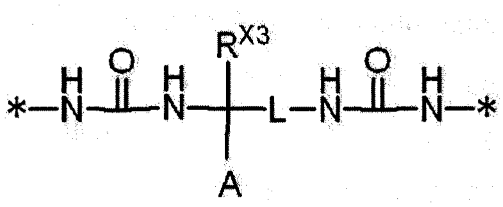

Formula (X3)

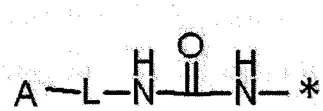

Formula (X4)

In Formula (X1), $R^{X1}$ represents a hydrogen atom or an alkyl group having from 1 to 10 carbon atoms, A represents an anionic group, and * represents a binding position.

In Formula (X2), $R^{X2}$ represents an alkyl group having from 1 to 10 carbon atoms, A represents an anionic group, n represents an integer from 1 to 5, m represents an integer from 0 to 4, a total of m and n is an integer from 1 to 5, and * represents a binding position.

In Formula (X3), $R^{X3}$ represents a hydrogen atom or an alkyl group having from 1 to 10 carbon atoms, A represents an anionic group, L represents a divalent linking group, and * represents a binding position.

In Formula (X4), A represents an anionic group, L represents a divalent linking group, and * represents a binding position.

In Formula (X1), $R^{X1}$ represents a hydrogen atom or an alkyl group having from 1 to 10 carbon atoms.

The alkyl group having from 1 to 10 carbon atoms represented by $R^{X1}$ may be a linear alkyl group or may be a branched alkyl group or may be an alkyl group having an alicyclic structure (for example, a cycloalkyl group).

Examples of the alkyl group having from 1 to 10 carbon atoms represented by $R^{X1}$ include a methyl group, an ethyl group, a propyl group, a butyl group, and a cyclohexyl group.

The number of carbon atom in the alkyl group having from 1 to 10 carbon atoms represented by $R^{X1}$ is preferably 1 to 6.

As $R^{X1}$, a hydrogen atom or an alkyl group having from 1 to 6 carbon atoms is particularly preferable.

In Formula (X1), as an anionic group represented by A, at least one selected from the group consisting of a carboxy group, a salt of a carboxy group, a sulfo group, a salt of a sulfo group, a phosphoric acid group, a salt of a phosphoric acid group, a phosphonic acid group, a salt of a phosphonic acid group, a sulfate group, and a salt of a sulfate group is preferable, at least one selected from the group consisting of a carboxy group, a salt of a carboxy group, a sulfo group, a salt of a sulfo group, a phosphoric acid group, and a salt of a phosphoric acid group is more preferable, and at least one selected from the group consisting of a carboxy group and a salt of a carboxy group is particularly preferable.

As the salts in the preferable aspect of the anionic group represented by A, an alkali metal salt or an organic amine salt is preferable, an alkali metal salt is more preferable, and a sodium salt or a potassium salt is particularly preferable.

In Formula (X2), $R^{X2}$ represents an alkyl group having from 1 to 10 carbon atoms.

The alkyl group having from 1 to 10 carbon atoms represented by $R^{X2}$ has the same definition as the alkyl group having from 1 to 10 carbon atoms represented by $R^{X1}$ in Formula (X1), and the preferable aspect thereof is also the same.

A preferable aspect of the anionic group represented by A in Formula (X2) is the same as the preferable aspect of the anionic group represented by A in Formula (X1).

In Formula (X2), n is preferably an integer from 1 to 3 and particularly preferably 2.

In Formula (X2), m is preferably an integer from 0 to 2 and particularly preferably 0.

In Formula (X3), $R^{X3}$ represents a hydrogen atom or an alkyl group having from 1 to 10 carbon atoms.

In Formula (X3), the alkyl group having from 1 to 10 carbon atoms represented by $R^{X3}$ has the same definition as the alkyl group having from 1 to 10 carbon atoms represented by $R^{X1}$ in Formula (X1), and the preferable aspect thereof is also the same.

In Formula (X3), as $R^{X3}$, a hydrogen atom or an alkyl group having from 1 to 6 carbon atoms is preferable and a hydrogen atom is particularly preferable.

A preferable aspect of the anionic group represented by A in Formula (X3) is the same as the preferable aspect of the anionic group represented by A in Formula (X1).

In Formula (X3), a divalent linking group represented by L is preferably a divalent group in which two or more groups selected from the group consisting of an alkylene group having from 1 to 10 carbon atoms and an aromatic group having 5 to 10 carbon atoms, or the alkylene group and the aromatic group, are combined.

In Formula (X3), the alkylene group having from 1 to 10 carbon atoms represented by L may be a linear alkylene group or may be a branched alkylene group or may be an alkylene group having an alicyclic structure (for example, a cycloalkylene group).

Examples of the alkylene group having from 1 to 10 carbon atoms represented by L include a methylene group, an ethylene group, a propylene group, a butylene group, and a cyclohexylene group.

Examples of the aromatic group having 5 to 10 carbon atoms represented by L include a phenylene group.

As a divalent linking group represented by L, an alkylene group having from 1 to 10 carbon atoms is more preferable, and an alkylene group having from 1 to 6 carbon atoms is even more preferable.

A and L in Formula (X4) each independently have the same definition as A and L in Formula (X3), and the preferable aspect thereof is also the same.

Structure (X1) and Structure (X2) described above can be formed by using, for example, an isocyanate compound into which an anionic group is introduced.

Structure (X3) and Structure (X4) described above can be formed by using a compound having an anionic group and an amino group which is an active hydrogen group (for example, amino acid). More specifically, Structure (X3) can be formed by using, for example, lysine. Structure (X4) can be formed by using, for example, β-alanine, taurine, or ethanolamine phosphate (EAP).

The three-dimensional cross-linked structure of the shell preferably contains at least Structure (X3) or Structure (X4) and more preferably contains at least Structure (X3), as a structure containing an anionic group. In other words, an anionic group is preferably introduced into the shell by Structure (X3) or Structure (X4), and preferably introduced into the shell by Structure (X3).

A urea bond is less susceptible to hydrolysis than a urethane bond, and therefore an anionic group introduced into the shell via a urea bond of Structure (X3) or Structure (X4) (more preferably Structure (X3)) is present in a state of being more firmly bonded to the three-dimensional cross-linked structure of the shell, compared to an anionic group introduced into the shell via a urethane bond of Structure (X1) or Structure (X2). Therefore, the aqueous dispersion including the microcapsule having Structure (X3) or Structure (X4) (more preferably Structure (X3)), in which an anionic group contributing to the dispersibility is introduced into the shell via a urea bond, is excellent in the dispersion stability of the microcapsule, particularly the dispersion stability for a long period of time (that is, storage stability).

Introduction of the anionic group into the shell can be carried out by allowing a reaction between the aforementioned tri- or higher functional isocyanate compound, at least one of a compound having an anionic group and an active hydrogen group or an isocyanate compound into which an anionic group is introduced, and water or a compound having two or more active hydrogen groups.

The isocyanate compound into which an anionic group is introduced can be manufactured by allowing, for example, a di- or higher functional isocyanate compound to react with a compound having an anionic group and an active hydrogen group.

-Compound Having Anionic Group and Active Hydrogen Group-

The compound having an anionic group and an active hydrogen group may have only one or two or more anionic groups.

The compound having an anionic group and an active hydrogen group may have only one or two or more active hydrogen groups.

Examples of the compound having an anionic group and an active hydrogen group include amino acids such as α-amino acids (specifically, lysine, alanine, arginine, asparagine, aspartic acid, cysteine, glutamine, glutamic acid, glycine, histidine, isoleucine, leucine, methionine, phenylalanine, proline, serine, threonine, tryptophan, tyrosine, and valine) and β-amino acids (for example, β-alanine), malic acids, taurine, and ethanolamine phosphate (EAP).

Examples of the compound having an anionic group and an active hydrogen group include the following specific examples, other than the examples described above.

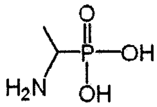 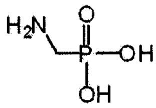 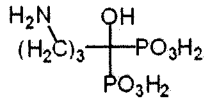 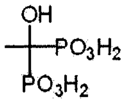 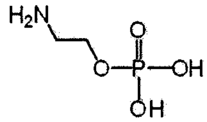

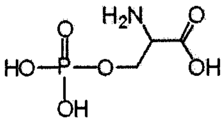 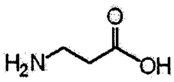 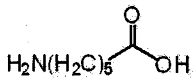 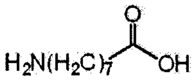

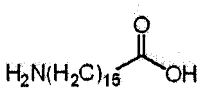 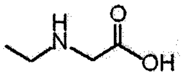 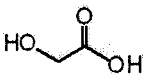 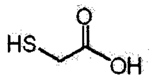 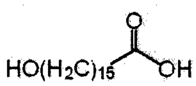

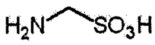 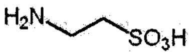 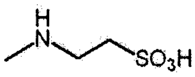 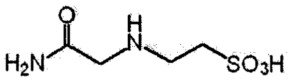

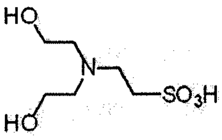 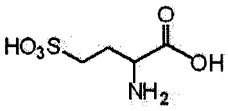 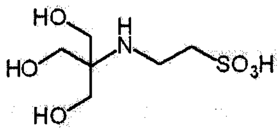 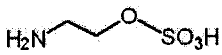

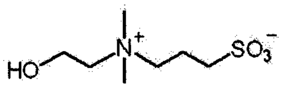 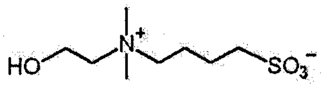 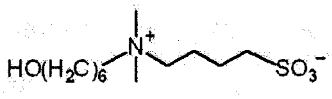

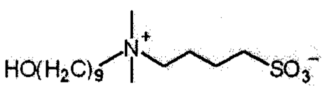 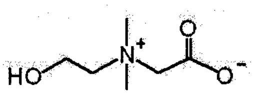 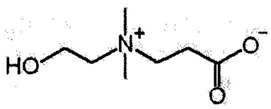

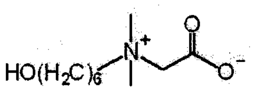 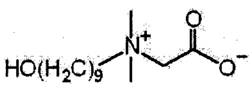 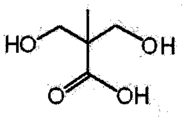 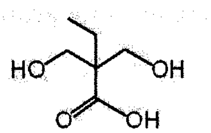 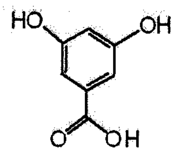

-Isocyanate compound into which anionic group is introduced-

As described above, for introducing an anionic group into the shell, an isocyanate compound into which an anionic group is introduced can also be used. Only one or two or more anionic groups may be introduced into an isocyanate compound.

As the isocyanate compound into which an anionic group is introduced, a reaction product between a compound

having an anionic group and an active hydrogen group, a compound having two or more active hydrogen groups, and a difunctional isocyanate compound (particularly preferably, isophorone diisocyanate (IPDI), hexamethylene diisocyanate (HDI), trimethylhexamethylene diisocyanate (TMHDI), 1,3-bis(isocyanatomethyl)cyclohexane (HXDI), m-xylylene diisocyanate (XDI), or dicyclohexylmethane-4,4'-diisocyanate (HMDI)); or a reaction product between a compound having an anionic group and an active hydrogen group, and a difunctional isocyanate compound, is preferable.

In a case of using the compound having an anionic group and an active hydrogen group for introducing an anionic group into the shell, an amount used of the compound having an anionic group and an active hydrogen group is preferably 0.1% by mass to 50% by mass, more preferably 0.1% by mass to 45% by mass, even more preferably 0.1% by mass to 40% by mass, even more preferably 1% by mass to 30% by mass, and even more preferably 3% by mass to 20% by mass, with respect to the total solid content of the microcapsule.

In addition, in the isocyanate compound into which an anionic group is introduced, the average number of functional groups of the isocyanate group is equal to or smaller than 3 in some cases. However, even in these cases, as long as the raw materials for forming the shell contain at least one tri- or higher functional isocyanate compound, the shell having the three-dimensional cross-linked structure can be formed.

(Photopolymerization initiating group Capable of Being Contained in Shell)

The shell of the microcapsule has at least one photopolymerization initiating group from the viewpoint of suppressing migration.

The photopolymerization initiating group is a residue obtained by removal of at least one hydrogen atom from at least one active hydrogen group of the photopolymerization initiator having at least one active hydrogen group, from the viewpoint of ease of introducing the photopolymerization initiating group into the shell.

Examples of the photopolymerization initiator having at least one active hydrogen group (hereinafter will also be referred to as "photopolymerization initiator having an active hydrogen group) include a carbonyl compound having an active hydrogen group (such as an aromatic ketone having an active hydrogen group), an acylphosphine oxide compound having an active hydrogen group, an aromatic onium salt compound having an active hydrogen group, an organic peroxide having an active hydrogen group, a thio compound having an active hydrogen group, a hexaarylbiimidazole compound having an active hydrogen group, a ketoxime ester compound having an active hydrogen group, a borate compound having an active hydrogen group, an azinium compound having an active hydrogen group, a metallocene compound having an active hydrogen group, an active ester compound having an active hydrogen group, a compound having an active hydrogen group and having a carbon halogen bond, and an alkylamine compound having an active hydrogen group.

Among these, the carbonyl compound having an active hydrogen group (such as an aromatic ketone having an active hydrogen group) or the acylphosphine oxide compound having an active hydrogen group is preferable.

Examples of the carbonyl compound having an active hydrogen group include an acetophenone compound having an active hydrogen group, a thioxanthone compound having an active hydrogen group, or a compound having an active hydrogen group, a carbonyl group, and an azo group.

As the acetophenone compound having an active hydrogen group, an $\alpha$-aminoalkylphenone compound or an $\alpha$-hydroxyalkylphenone compound is preferable, and an $\alpha$-hydroxyalkylphenone compound (for example, 1-[4-(2-hydroxyethoxy)-phenyl]-2-hydroxy-2-methyl-1-propan-1-one) is particularly preferable.

As the thioxanthone compound having an active hydrogen group, thioxanthone substituted by at least one hydroxyl group is particularly preferable.

As the compound having an active hydrogen group, a carbonyl group, and an azo group, a compound having at least one (preferably two or more, more preferably two to four) hydroxyl groups, two carbonyl groups, and one azo group is more preferable, and 4,4' -azobis(4-cyanopentanoic acid), 2,2'-azobis[N-[1,1-bis(hydroxymethyl)ethyl]-2-methylpropanamide], or 2,2'-azobis[2-methyl-N-(2-hydroxyethyl)propionamide] are particularly preferable.

The photopolymerization initiating group is preferably a group having at least one structure selected from the group consisting of an acetophenone structure represented by Formula (A), a monoacylphosphine oxide structure represented by Formula (B), a bisacylphosphine oxide structure represented by Formula (C), an azo structure represented by Formula (M), an azo structure represented by Formula (N), and a thioxanthone structure represented by Formula (O).

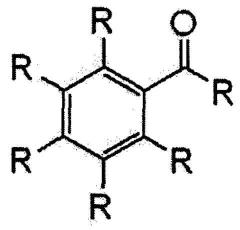

Formula (A)

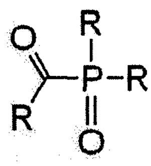

Formula (B)

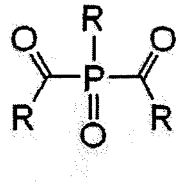

Formula (C)

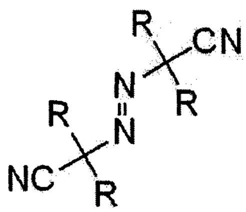

Formula (M)

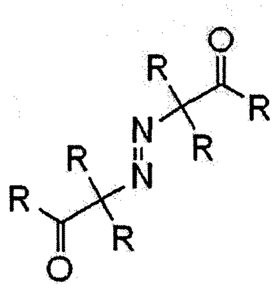

Formula (N)

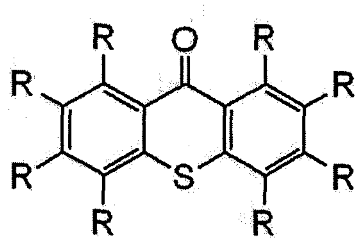

Formula (O)

In Formula (A), Formula (B), Formula (C), Formula (M), Formula (N), and Formula (O), R each independently represent a monovalent group or *-L-, and at least one of R's in each formula represents *-L-. L represents a divalent group, and * represents a binding position.

Examples of the monovalent group represented by R include an aliphatic group, an organic group such as an aromatic group, -H, -OH, -SH, -NH, $-NH_2$, or $-L-R_1$, and -H, -OH, -SH, -NH, $-NH_2$, or $-L-R_1$ is preferable. $R_1$ represents a monovalent group, and -H, -OH, -SH, -NH, or $-NH_2$ is preferable.

The divalent group represented by L is preferably a divalent aliphatic group, a divalent aromatic group, a divalent heterocyclic group, -O-, -S-, -NH-, -CO-, -SO-, $-SO_2$, - or a combination thereof.

The photopolymerization initiating group is more preferably a group having at least one structure selected from the group consisting of an α-aminoalkylphenone structure represented by Formula (D), an α-hydroxyalkylphenone structure represented by Formula (E), a monoacylphosphine oxide structure represented by Formula (F), a bisacylphosphine oxide structure represented by Formula (G), an azo structure represented by Formula (P), an azo structure represented by Formula (Q), and a thioxanthone structure represented by Formula (R).

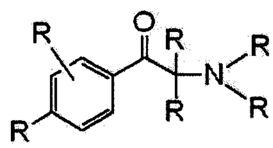

Formula (D)

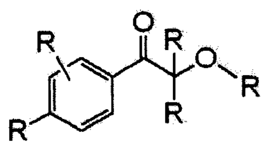

Formula (E)

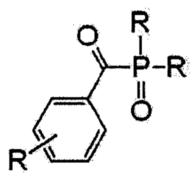

Formula (F)

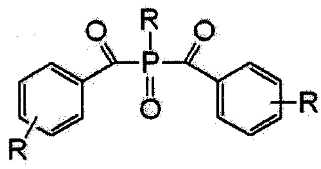

Formula (G)

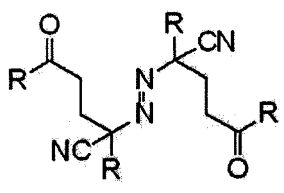

Formula (P)

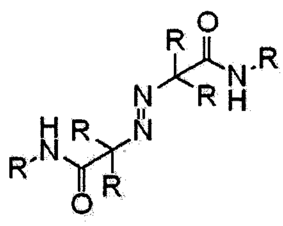

Formula (Q)

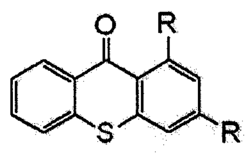

Formula (R)

In Formula (D), Formula (E), Formula (F), Formula (G), Formula (P), Formula (Q), and Formula (R), R's each independently represent a monovalent group or *-L-, and at least one of R's in each formula represents *-L-. L represents a divalent group, and * represents a binding position. Preferable aspects of R's in each formula are the same as those of R's of Formula (A), Formula (B), Formula (C), Formula (M), Formula (N), and Formula (O).

The photopolymerization initiating group is even more preferably a group having at least one structure selected from the group consisting of an α-aminoalkylphenone structure represented by Formula (H), an α-hydroxyalkylphenone structure represented by Formula (I), a monoacylphosphine oxide structure represented by Formula (J), a bisacylphosphine oxide structure represented by Formula (K), a bisacylphosphine oxide structure represented by Formula (L), an azo structure represented by Formula (S), an azo structure represented by Formula (T), and a thioxanthone structure represented by Formula (U). A functional group generating a radical by irradiation with active energy ray is particularly preferably a group having at least one structure selected from the group consisting of the monoacylphosphine oxide structure represented by Formula (J), the bisacylphosphine oxide structure represented by Formula (K), and the bisacylphosphine oxide structure represented by Formula (L), from the viewpoint of suitability for LED light.

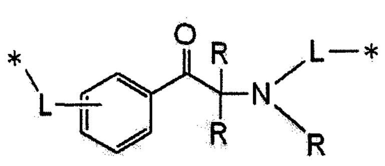

Formula (H)

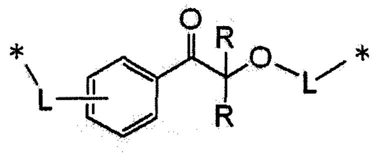

Formula (I)

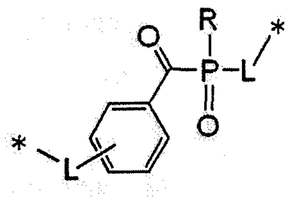

Formula (J)

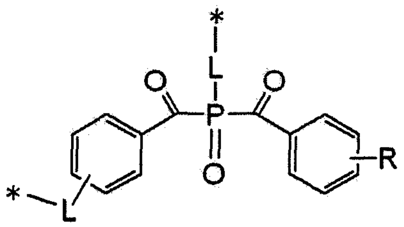

Formula (K)

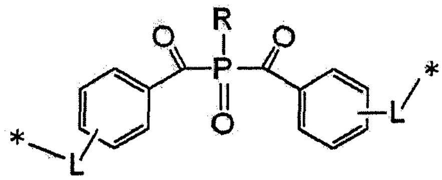

Formula (L)

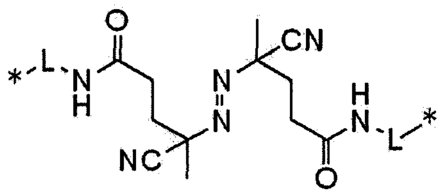

Formula (S)

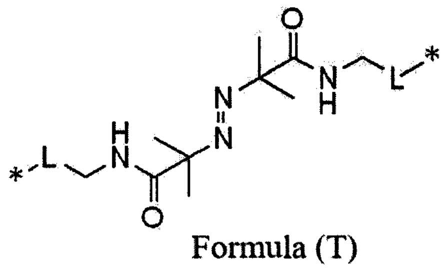

Formula (T)

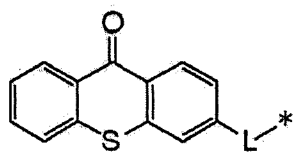

Formula (U)

In Formula (H), Formula (I), Formula (J), Formula (K), Formula (L), Formula (S), Formula (T), and Formula (U), R each independently represent a monovalent group, L represents a divalent group, and * represents a binding position. Preferable aspects of R's and L's in each formula are the same as those of R's and L's of Formula (A), Formula (B), Formula (C), Formula (M), Formula (N), and Formula (O).

Introduction of the photopolymerization initiating group into the shell can be carried out by allowing a reaction between an isocyanate compound into which the photopolymerization initiating group is introduced, and water or a compound having two or more active hydrogen groups.

The isocyanate compound into which the photopolymerization initiating group is introduced can be manufactured by allowing, for example, a di- or higher functional isocyanate compound to react with a compound having the photopolymerization initiating group and an active hydrogen group.

-Compound Having Photopolymerization initiating group and Active Hydrogen Group-

The compound having the photopolymerization initiating group and an active hydrogen group may have only one or two or more photopolymerization initiating groups.

The compound having the photopolymerization initiating group and an active hydrogen group may have only one or two or more active hydrogen groups.

Hereinafter, specific examples of the compound having the photopolymerization initiating group and the active hydrogen group are described. However, the present invention is not limited to these specific examples.

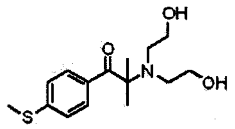

INT-1

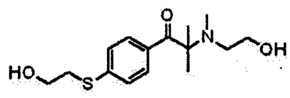

INT-2

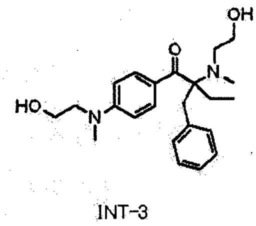

INT-3

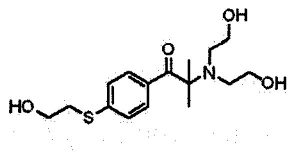

INT-4

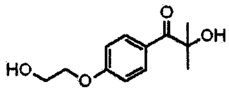

INT-5

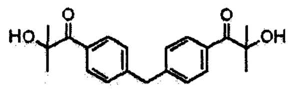

INT-6

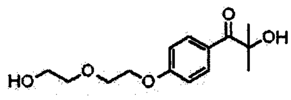

INT-7

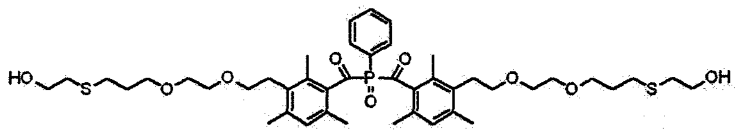

INT-8

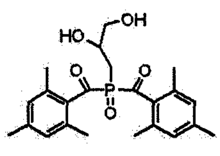

INT-9

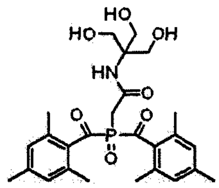

INT-10

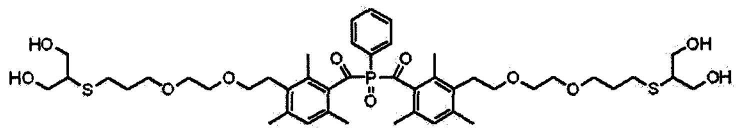

INT-11

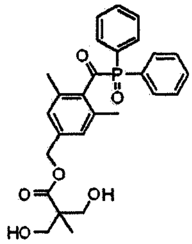

INT-12

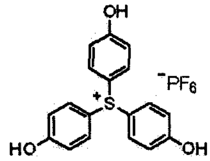

INT-13

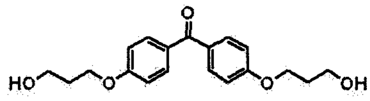

INT-14

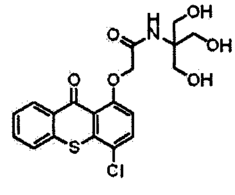

INT-15

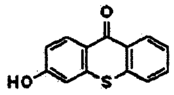
INT-16

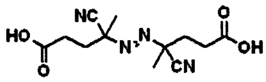
INT-17

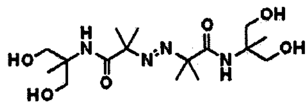
INT-18

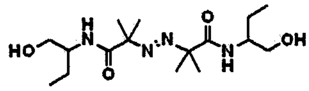
INT-19

-Isocyanate Compound into which Photopolymerization initiating group Is Introduced-

As described above, introduction of the photopolymerization initiating group into the shell can be carried out by allowing a reaction between, for example, an isocyanate compound into which the photopolymerization initiating group is introduced, and the above-described compound having two or more active hydrogen groups.

The isocyanate compound into which the photopolymerization initiating group is introduced can be synthesized by allowing a reaction between, for example, isocyanate groups of a di- or higher functional isocyanate compound and an active hydrogen group of the compound having the active hydrogen group and the photopolymerization initiating group, as shown in Synthesize Scheme 3.

-Synthesize Scheme 3-

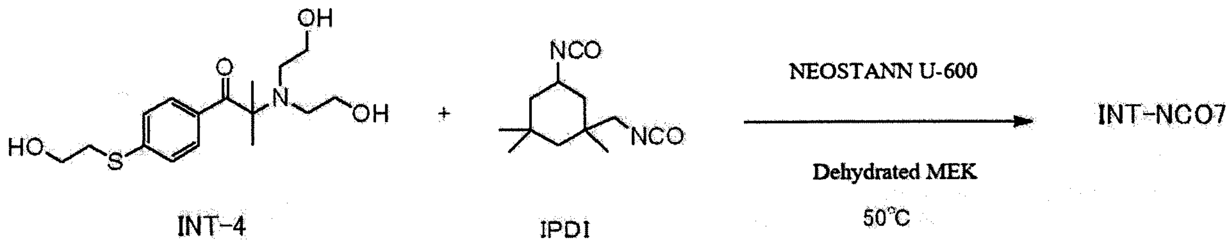

INT-4 IPDI

The isocyanate compound into which the photopolymerization initiating group is introduced is preferably a compound obtained by allowing a reaction between the compound having the active hydrogen group and the photopolymerization initiating group (initiator of Table 3), and the di- or higher functional isocyanate compound (isocyanate compound of Table 3), using combinations in Table 3.

[Table 3]

| Compound No. | Isocyanate compound into which photopolymerization initiating group is introduced | | | |
|---|---|---|---|---|
| | Material | | Composition | Application method |
| | Initiator | Isocyanate compound | Amount of active hydrogen group of initiator with respect to NCO group of isocyanate compound (mol%) | Bond type in three-dimensional cross-linked structure |
| INT-NCO 1 | INT-1 | NCO 103 | 40 | Side chain |
| INT-NCO 2 | INT-2 | NCO 105 | 40 | Main chain |
| INT-NCO 3 | INT-3 | NCO 109 | 30 | Main chain |
| iNT-NCO 4 | INT-4 | TDI | 37.5 | Main chain |
| INT-NCO 5 | INT4 | HXDI | 37.5 | Main chain |
| INT-NCO 6 | INT-4 | HDI | 37.5 | Main chain |
| INT-NCO 7 | INT-4 | IPDI | 37.5 | Main chain |
| INT-NCO 8 | INT4 | XDI | 37.5 | Main chain |
| INT-NCO 9 | INT-5 | NCO 103 | 40 | Main chain |
| INT-NCO 10 | INT-5 | NCO 104 | 40 | Main chain |

(continued)

| Compound No. | Isocyanate compound into which photopolymerization initiating group is introduced | | | |
|---|---|---|---|---|
| | Material | | Composition | Application method |
| | Initiator | Isocyanate compound | Amount of active hydrogen group of initiator with respect to NCO group of isocyanate compound (mol%) | Bond type in three-dimensional cross-linked structure |
| INT-NCO 11 | INT-5 | NCO 109 | 30 | Main chain |
| INT-NCO 12 | INT-5 | DURANATE 24A-100 | 40 | Main chain |
| INT-NGO 13 | INT-5 | TSE-100 | 40 | Main chain |
| INT-NCO 14 | INT-6 | NCO 110 | 20 | Main chain |
| INT-NCO 15 | INT-7 | DURANATE TKA-100 | 40 | Main chain |
| INT-NCO 16 | INT-8 | NCO 103 | 40 | Main chain |
| INT-NCO 17 | INT-8 | NCO 109 | 30 | Main chain |
| INT-NCO 18 | INT-8 | TSE-100 | 40 | Main chain |
| INT-NCO 19 | INT-9 | NCO 103 | 40 | Side chain |
| INT-NCO 20 | INT-10 | IPDI | 37.5 | Side chain |
| INT-NCO 21 | INT-11 | HDI | 40 | Side chain |
| iNT-NCO 22 | INT-11 | HXDI | 40 | Side chain |
| INT-NCO 23 | INT-11 | TMHDI | 40 | Side chain |
| INT-NCO 24 | INT-12 | DURANATE TKA-100 | 40 | Side chain |
| INT-NCO 25 | INT-13 | IPDI | 37.5 | Main chain |
| INT-NCO 26 | INT-14 | NCO 112 | 40 | Main chain |
| INT-NCO 27 | INT-15 | HXDI | 37.5 | Main chain |

In addition to the above examples, the isocyanate compound into which the photopolymerization initiating group is introduced is also preferably "INT-NCO-a" to "INT-NCO-e" which will be described below.

In a case of synthesizing the isocyanate compound into which the photopolymerization initiating group is introduced, the compound having the photopolymerization initiating group and the active hydrogen group may be used alone, or two or more kinds thereof may be used in combination.

The reaction between the active hydrogen group of the compound having the photopolymerization initiating group and the active hydrogen group (indicated as an initiator in Table 3), and the isocyanate group of the di- or higher

functional isocyanate compound (indicated as an isocyanate compound in Table 3) is preferably performed with an amount in which the number of moles of the active hydrogen group of the compound having the photopolymerization initiating group and the active hydrogen group is 1% to 60% (1 mol% to 60 mol%) of the number of moles of the isocyanate group of the di- or higher functional isocyanate compound, the reaction is more preferably performed with an amount in which the number of moles is 5% to 50% (5 mol% to 50 mol%), and the reaction is even more preferably performed with an amount in which the number of moles is 10% to 40% (10 mol% to 40 mol%).

(Polymerizable Group Capable of Being Contained in Shell)

As described above, the microcapsule has the polymerizable group in at least one of the core and the shell.
The microcapsule has the polymerizable group, which makes it possible that by irradiation with active energy ray, microcapsules adjacent to each other are bonded to each other so as to form a cross-linked structure, and therefore a film having a high level of cross-linking properties and excellent hardness can be formed.
The microcapsule may have the polymerizable group by the form in which the polymerizable group is introduced into the three-dimensional cross-linked structure of the shell or may have the polymerizable group by the form in which the polymerizable compound (that is, the compound having the polymerizable group) is contained in the core. In addition, the microcapsule may have the polymerizable group by both forms.
Hereinafter, a method for introducing the polymerizable group into the three-dimensional cross-linked structure of the shell will be described.
The polymerizable compound capable of being contained in the core will be described later.
Examples of the method for introducing the polymerizable group into the three-dimensional cross-linked structure of the shell include a method in which in a case where of forming the three-dimensional cross-linked structure of the shell, the above-described tri- or higher functional isocyanate compound, water or the above-described compound having two or more active hydrogen groups, and a monomer for introducing a polymerizable group are allowed to react with each other; a method in which in a case of manufacturing the above-described tri- or higher functional isocyanate compound, first, the above-described di- or higher functional isocyanate compound is allowed to react with a monomer for introducing a polymerizable group so as to manufacture an isocyanate compound into which the polymerizable group is introduced, and next, the isocyanate compound into which the polymerizable group is introduced, and water or the above-described compound having two or more active hydrogen groups are allowed to react with each other; a method in which in a case of manufacturing a microcapsule, a monomer for introducing a polymerizable group is dissolved in an oil-phase component together with components constituting the microcapsule, a water-phase component is added to and mixed with the oil-phase component, followed by emulsification.
Examples of the monomer for introducing a polymerizable group include a compound which has at least one active hydrogen group and has an ethylenically unsaturated bond on at least one terminal thereof.
The compound which has at least one active hydrogen group and has an ethylenically unsaturated bond on at least one terminal thereof can be represented by Formula (ma).

$$L^1Lc_mZ_n \quad \text{(ma)}$$

In Formula (ma), $L^1$ represents an (m + n)-valent linking group, m and n each independently represent an integer selected from 1 to 100, Lc represents a monovalent ethylenically unsaturated group, and Z represents an active hydrogen group.
$L^1$ is preferably an aliphatic group having a valency of 2 or higher, an aromatic group having a valency of 2 or higher, a heterocyclic group having a valency of 2 or higher, -O-, -S-, -NH-, -N<, -CO-, -SO-, $-SO_2-$, or a combination of these.
m and n each independently preferably represent 1 to 50, more preferably represent 2 to 20, even more preferably represent 3 to 10, and particularly preferably represent 3 to 5.
Examples of the monovalent ethylenically unsaturated group represented by Lc include an allyl group, a vinyl group, an acryloyl group, and a methacryloyl group.
Z is preferably OH, SH, NH, or $NH_2$, more preferably OH or $NH_2$, and even more preferably OH.
Examples of the compound which has at least one active hydrogen group and has an ethylenically unsaturated bond on at least one terminal thereof will be shown below, but the present invention is not limited to these structures thereof.
n in the compounds (a-3) and (a-14) represents an integer selected from 1 to 90, for example.

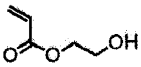
(a−1)

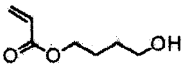
(a−2)

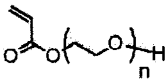
(a−3)

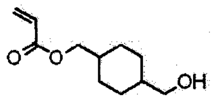
(a−4)

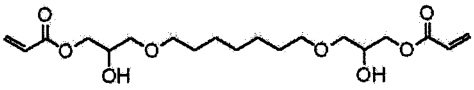
(a−5)

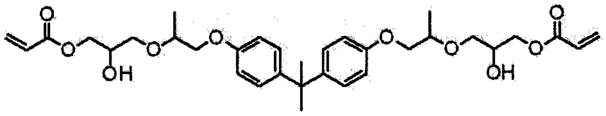
DA-250
(a−6)

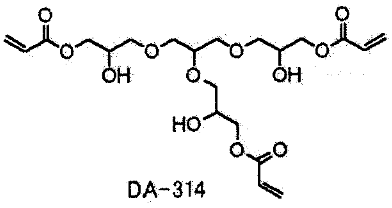
DA-314
(a−7)

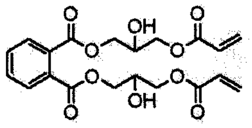
DA-721
(a−8)

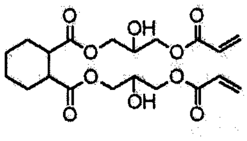
DA-722
(a−9)

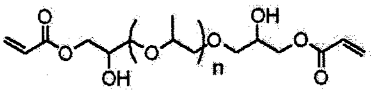
DA-911M n=1
(a−10)

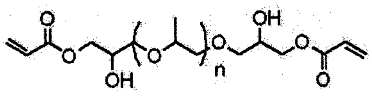
DA-920 n=3
(a−11)

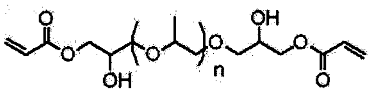
DA-931 n=11
(a−12)

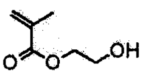
(a−13)

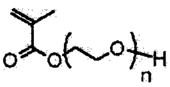
(a−14)

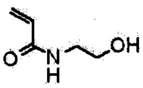
(a−15)

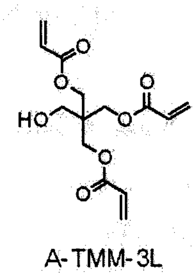
A-TMM-3L
(a−16)

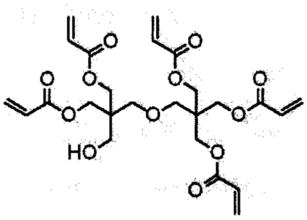
SR399E
(a−17)

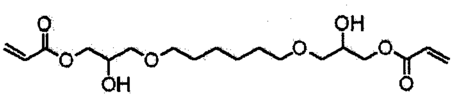
(a−18)

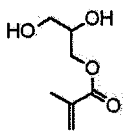
(a−19)

As the compound which has at least one active hydrogen group and has an ethylenically unsaturated bond on at least one terminal thereof, a commercially available product on the market may be used.

Examples of the commercially available product include acrylates such as hydroxyethyl acrylate (manufactured by OSAKA ORGANIC CHEMICAL INDUSTRY LTD), 4-hydroxybutyl acrylate and 1,4-cyclohexanedimethanol monoacrylate (all of which are manufactured by Nippon Kasei Chemical Co., Ltd), BLEMMER (registered trademark) AE-90U (n = 2), AE-200 (n = 4.5), AE-400 (n = 10), AP-150 (n = 3), AP-400 (n = 6), AP-550 (n = 9), and AP-800 (n = 13) (all of which are manufactured by NOF CORPORATION), and DENACOL (registered trademark) ACRYLATE DA-212, DA-250, DA-314, DA-721, DA-722, DA-911M, DA-920, and DA-931 (all of which are manufactured by Nagase ChemteX Corporation), methacrylates such as 2-hydroxyethyl methacrylate (manufactured by KYOEISHA CHEMICAL Co., LTD), and BLEMMER (registered trademark) APE-90 (n = 2), PE-200 (n = 4.5), PE-350 (n = 8), PP-1000 (N = 4 to 6), PP-500 (n = 9), and PP-800 (n = 13) (all of which are manufactured by NOF CORPORATION), acrylamide (manufactured by KJ Chemicals Corporation), A-TMM-3L (manufactured by SHIN-NAKAMURA CHEMICAL CO., LTD.), SR399E (manufactured by Sartomer Arkema Inc.).

Among these, as a compound which has at least one active hydrogen group and has an ethylenically unsaturated bond on at least one terminal thereof, at least one selected from hydroxyethyl acrylate (manufactured by OSAKA ORGANIC CHEMICAL INDUSTRY LTD), BLEMMER (registered trademark) AE-400 (n = 10) (by NOF CORPORATION), BLEMMER (registered trademark) AP-400 (n = 6) (by NOF CORPORATION), BLEMMER (registered trademark) PP-500 (n=9) (by NOF CORPORATION), DENACOL (registered trademark) ACRYLATE DA-212 (manufactured by Nagase ChemteX Corporation), A-TMM-3L (manufactured by SHIN-NAKAMURA CHEMICAL CO., LTD.), and SR399E (manufactured by Sartomer Arkema Inc.) is more preferable.

As described above, introduction of the polymerizable group into the shell can be carried out by allowing a reaction between, for example, an isocyanate compound into which the polymerizable group is introduced, and the above-described compound having two or more active hydrogen groups.

The isocyanate compound into which the polymerizable group is introduced can be manufactured by allowing a reaction between, for example, isocyanate groups of a tri- or higher functional isocyanate compound (hereinafter, will also be referred to as "polyisocyanate") and an active hydrogen group of the monomer for introducing a polymerizable group, as shown in Synthesize Scheme 4.

-Synthesize Scheme 4-

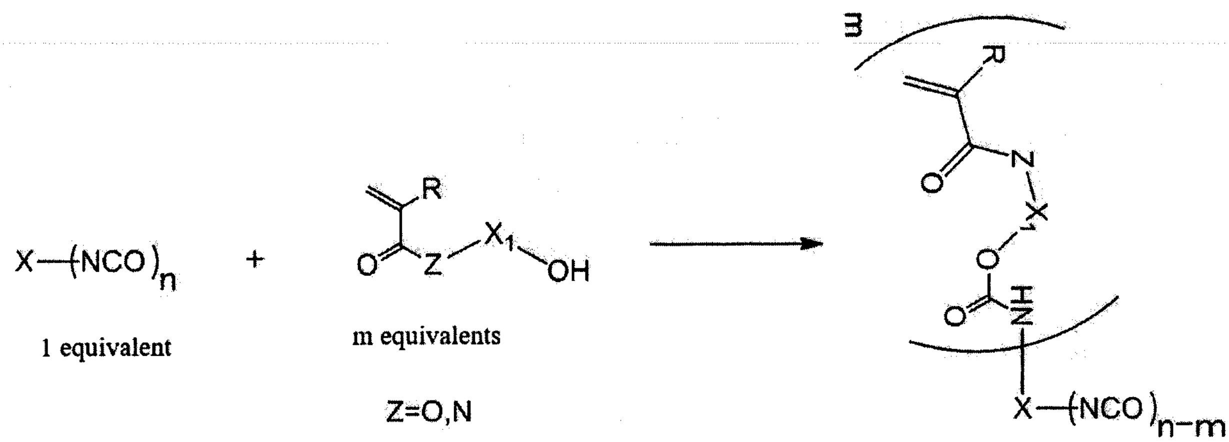


As the isocyanate compound into which the polymerizable group is introduced, a compound obtained by allowing a reaction between polyisocyanate (that is, a tri- or higher functional isocyanate compound), and the monomer for introducing a polymerizable group according to combinations shown in Table 4, is preferably used.

[Table 4]

| | Polyisocyanate structure | | Composition |
|---|---|---|---|
| Compound No. | Polyisocyanate | Monomer for introducing polymerizable group | Amount of active hydrogen group of monomer for introducing polymerizable group with respect to NCO group of polyisocyanate (mol%) |
| NCO 201 | NCO 104 | Hydroxybutyl acrylate | 15 |
| NCO 202 | NCO 104 | BLEMMER AP-400 | 15 |
| NCO 203 | NCO 104 | BLEMMER AE-400 | 15 |
| NCO 204 | NCO 104 | BLEMMER PP-500 | 15 |

(continued)

| | Polyisocyanate structure | | Composition |
|---|---|---|---|
| Compound No. | Polyisocyanate | Monomer for introducing polymerizable group | Amount of active hydrogen group of monomer for introducing polymerizable group with respect to NCO group of polyisocyanate (mol%) |
| NCO 205 | NCO 104 | DA212 | 15 |
| NCO 206 | NCO 104 | DA920 | 15 |
| NCO 207 | DURANATE 24A-100 | BLEMMER AP-400 | 15 |
| NCO 208 | D-127 | BLEMMER AP-400 | 15 |
| NCO 209 | SUMIDUR N3300 | BLEMMER AP-400 | 15 |
| NCO 210 | DURANATE TKA-100 | BLEMMER AP-400 | 15 |
| NCO 211 | DURANATE TSE-100 | BLEMMER AP-400 | 15 |

The monomer for introducing a polymerizable group may be one compound or may be a combination of two or more compounds.

In a case of manufacturing the isocyanate compound into which a polymerizable group is introduced, the polyisocyanate (that is, the tri- or higher functional isocyanate compound) and the monomer for introducing a polymerizable group (that is, a compound having at least one active hydrogen group and an ethylenically unsaturated bond on at least one terminal thereof) are preferably allowed to react with each other at a ratio in which number of moles of the active hydrogen group of the monomer for introducing a polymerizable group is 1% to 30% (more preferably 2% to 25% and even more preferably 3% to 20%) of the number of moles of the isocyanate group of the polyisocyanate.

In the isocyanate compound into which a polymerizable group is introduced, the average number of functional groups of the isocyanate group is equal to or smaller than 3 in some cases. However, even in these cases, as long as the raw materials for forming the shell contain at least one tri- or higher functional isocyanate compound, the shell having the three-dimensional cross-linked structure can be formed.

<Core of Microcapsule>

Components of the core of the microcapsule are not particularly limited, but the core preferably contains at least one of the photopolymerization initiator or the polymerizable compound.

The core may contain other components of the aqueous dispersion which will be described below, in addition to the above components.

(Photopolymerization Initiator)

The shell of the microcapsule comprises a photopolymerization initiating group.

The core of the microcapsule may contain at least one photopolymerization initiator.

That is, the microcapsule may contain at least one photopolymerization initiator in the interior thereof.

According to the aspect in which the core of the microcapsule contains a photopolymerization initiator, it is possible to use a photopolymerization initiator (for example, a carbonyl compound to be described below, an acylphosphine oxide compound to be described below, and the like) which cannot be readily used in the related art because the photopolymerization initiator has high sensitivity but exhibits low dispersibility or solubility in water. As a result, a range of selection of the photopolymerization initiator to be used broadens, and hence a range of selection of the light source to be used also broadens. Therefore, curing sensitivity can be improved compared to the related art.

As the photopolymerization initiator contained in the core of the microcapsule, a known photopolymerization initiator can be appropriately selected.

As described above, the photopolymerization initiator is a compound absorbing light (that is, active energy rays) so as to generate a radical.

As the photopolymerization initiator, a known compound can be used.

Preferable examples of the photopolymerization initiator include (a) carbonyl compound such as aromatic ketones, (b) acylphosphine oxide compound, (c) aromatic onium salt compound, (d) organic peroxide, (e) thio compound, (f) hexaarylbiimidazole compound, (g) ketoxime ester compound, (h) borate compound, (i) azinium compound, (j) metallocene compound, (k) active ester compound, (1) compound having carbon halogen bond, and (m) alkylamine compound.

Preferable examples of (a) carbonyl compound, (b) acylphosphine oxide compound, and (e) thio compound include compounds having a benzophenone skeleton or a thioxanthone skeleton described in "RADIATION CURING IN POLYMER SCIENCE AND TECHNOLOGY", J. P. FOUASSIER, J. F. RABEK (1993), pp. 77 to 117.

More preferable examples of the compounds include the $\alpha$-thiobenzophenone compound described in JP1972-6416B (JP-S47-6416B), the benzoin ether compound described in JP1972-3981B (JP-S47-3981B), the $\alpha$-substituted benzoin compound described in JP1972-22326B (JP-S47-22326B), the benzoin derivative described in JP1972-23664B (JP-S47-23664B), the aryolphosphonic acid ester described in JP1982-30704A (JP-S57-30704A), the dialkoxybenzophenone described in JP1985-26483B (JP-S60-26483B), the benzoin ethers described in JP1985-26403B (JP-S60-26403B) and JP1987-81345A (JP-S62-81345A), the $\alpha$-aminobenzophenones described in JP1989-34242B (JP-H01-34242B), US4318791A, and EP0284561A1, the p-di(dimethylaminobenzoyl)benzene described in JP1990-211452A (JP-H02-211452A), the thio-substituted aromatic ketone described in JP1986-194062A (JP-S61-194062A), the acylphosphine sulfide described in JP1990-9597B (JP-H02-9597B), the acylphosphine described in JP1990-9596B (JP-H02-9596B), the thioxanthones described in JP1988-61950B (JP-S63-61950B), the coumarins described in JP1984-42864B (JP-S59-42864B), and the compound described in WO2015/I58745A.

Furthermore, the photopolymerization initiator described in JP2008-105379A or JP2009-114290A is also preferable.

Examples of the commercially available product of the photopolymerization initiator include IRGACURE (registered trademark) 184, 369, 500, 651, 819, 907, 1000, 1300, 1700, and 1870, DAROCUR (registered trademark) 1173, 2959, 4265, and ITX, LUCIRIN (registered trademark) TPO [all of which are manufactured by BASF SE], ESACURE (registered trademark) KTO37, KTO46, KIP150, and EDB [all of which are manufactured by Lamberti S.p.A.], H-Nu (registered trademark) 470 and 470X [all of which are manufactured by Spectra Group Limited, Inc.], Omnipol TX and 9210 [all of which are manufactured by IGM Resins B. V.], Genopol AB-2 [manufactured by RAHN AG].

Among these, as the internal photopolymerization initiator, from the viewpoint of sensitivity to UV light, at least one compound selected from (a) carbonyl compound and (b) acylphosphine oxide compound is more preferable, and specific examples thereof include bis(2,4,6-trimethylbenzoyl)-phenylphosphine oxide (for example, IRGACURE (registered trademark) 819 manufactured by BASF SE), 2-(dimethylamine)-1-(4-morpholinophenyl)-2-benzyl-1-butanone (for example, IRGACURE (registered trademark) 369 manufactured by BASF SE), 2-methyl-1-(4-methylthiophenyl)-2-morpholinopropan-l-one (for example, IRGACURE (registered trademark) 907 manufactured by BASF SE), 1-hydroxy-cyclohexyl-phenyl-ketone (for example, IRGACURE (registered trademark) 184 manufactured by BASF SE), 2-hydroxy-2-methyl-1-phenyl-propan-1-one (for example, IRGACURE (registered trademark) 1173 manufactured by BASF SE), 2,4,6-trimethylbenzoyl-diphenyl-phosphine oxide (for example, DAROCUR (registered trademark) TPO, LUCIRIN (registered trademark) TPO (all of which are manufactured by BASF SE)).

Among these, from the viewpoint of improving sensitivity and from the viewpoint of suitability for LED light, as the internal photopolymerization initiator, (b) acylphosphine oxide compound is preferable, and a monoacylphosphine oxide compound (particularly preferably 2,4,6-trimethylbenzoyl-diphenyl-phosphine oxide) or a bisacylphosphine oxide compound (particularly preferably bis(2,4,6-trimethylbenzoyl)-phenylphosphine oxide) is more preferable.

In a case of incorporating an internal photopolymerization initiator into the core of the microcapsule, in a case of manufacturing the microcapsule, the photopolymerization initiator is dissolved as an oil-phase component together with the components constituting the microcapsule, a water-phase component is added to and mixed with the oil-phase component so as to emulsify the obtained mixture, and therefore the internal photopolymerization initiator can be incorporated into the core of the microcapsule.

In a case where the core of the microcapsule contains the internal photopolymerization initiator, a content of the internal photopolymerization initiator is preferably 0.1% by mass to 25% by mass, more preferably 0.5% by mass to 20% by mass, and even more preferably 1% by mass to 15% by mass, with respect to the total solid content of the microcapsule.

-Internal Content Rate of Photopolymerization Initiator-

In a case where the core of the microcapsule contains aphotopolymerization initiator, from the viewpoint of the curing sensitivity of a film, an internal content rate (% by mass) of the photopolymerization initiator is preferably equal to or higher than 10% by mass, more preferably equal to or higher than 50% by mass, even more preferably equal to or higher than 70% by mass, still more preferably equal to or higher than 80% by mass, yet more preferably equal to or higher than 90% by mass, much more preferably equal to or higher than 95% by mass, far more preferably equal to or

higher than 97% by mass, and particularly preferably equal to or higher than 99% by mass.

In a case where the aqueous dispersion contains two or more kinds of photopolymerization initiators, it is preferable that the internal content rate of at least one kind of photopolymerization initiator is within the aforementioned preferable range.

The internal content rate (% by mass) of the photopolymerization initiator means the amount of the photopolymerization initiator contained in the core of the microcapsule with respect to the total amount of the photopolymerization initiators in the aqueous dispersion in a case where the aqueous dispersion is prepared and refers to a value obtained as below.

-Method for Measuring Internal Content Rate (% by mass) of Photopolymerization Initiator-

The operation described below is performed under a condition of a liquid temperature of 25°C.

In a case where the aqueous dispersion does not contain a pigment, the operation described below is performed using the aqueous dispersion as it is. In a case where the aqueous dispersion contains a pigment, first, the pigment is removed from the aqueous dispersion by centrifugation, and then the operation described below is performed on the aqueous dispersion from which the pigment has been removed.

First, from the aqueous dispersion, two samples (hereinafter, referred to as "sample 1" and "sample 2") of the same mass are collected.

Tetrahydrofuran (THF) having a mass 100 times the mass of the total solid content in the sample 1 is added to and mixed with the sample 1, thereby preparing a diluted solution. The obtained diluted solution is subjected to centrifugation under conditions of 80,000 rpm and 40 minutes. The supernatant (hereinafter, referred to as "supernatant 1") generated by the centrifugation is collected. It is considered that by this operation, all of the photopolymerization initiators contained in the sample 1 is extracted into the supernatant 1. The mass of the photopolymerization initiator contained in the collected supernatant 1 is measured by liquid chromatography (for example, a liquid chromatography device manufactured by Waters Corporation). The obtained mass of the photopolymerization initiator is taken as "total amount of photopolymerization initiator".

Furthermore, the sample 2 is subjected to centrifugation under the same conditions as in the centrifugation performed on the aforementioned diluted solution. The supernatant (hereinafter, referred to as "supernatant 2") generated by the centrifugation is collected. It is considered that by this operation, the photopolymerization initiator that was not contained in the interior of the microcapsule in the sample 2 (that is, the free photopolymerization initiator) is extracted into the supernatant 2. The mass of the photopolymerization initiator contained in the collected supernatant 2 is measured by liquid chromatography (for example, a liquid chromatography device manufactured by Waters Corporation). The obtained mass of the photopolymerization initiator is taken as "amount of the free photopolymerization initiator".

Based on the "total amount of photopolymerization initiator" and the "amount of free photopolymerization initiator" described above, the internal content rate (% by mass) of the photopolymerization initiator is calculated according to the equation shown below.

Internal content rate (% by mass) of photopolymerization initiator = ((total amount of photopolymerization initiator - amount of free photopolymerization initiator)/total amount of photopolymerization initiator) × 100

In a case where the aqueous dispersion contains two or more kinds of photopolymerization initiators, by using the total amount of the two or more kinds of photopolymerization initiators as "total amount of photopolymerization initiators" and using the total amount of the two or more kinds of free photopolymerization initiators as "amount of free photopolymerization initiators", the total internal content rate of the two or more kinds of photopolymerization initiators may be determined. Alternatively, by using the amount of one kind of photopolymerization initiator as "total amount of photopolymerization initiator" and using the amount of the other one kind of free photopolymerization initiator as "amount of free photopolymerization initiator", the internal content rate of any one kind of photopolymerization initiator may be determined.

Whether or not the components (for example, a polymerizable compound to described later) other than the photopolymerization initiator are contained in the core of the microcapsule can be checked by the same method as the method for investigating whether or not the photopolymerization initiator is contained in the core of the microcapsule.

For a compound having a molecular weight equal to or greater than 1,000, by measuring the masses of the compounds contained in the supernatant 1 and the supernatant 2 described above by gel permeation chromatography (GPC) and taking the masses as "total amount of compound" and "amount of free compound" respectively, the internal content rate (% by mass) of the compound is determined.

In the present specification, in the measurement by a gel permeation chromatography (GPC), HLC (registered trademark)-8020 GPC (manufactured by Tosoh Corporation) may be used as a measurement device, three columns of TSKgel (registered trademark) Super Multipore HZ-H (4.6 mm ID × 15 cm, manufactured by Tosoh Corporation) may be used as columns, and tetrahydrofuran (THF) may be used as an eluent. Furthermore, GPC is performed using a differential refractive index (RI) detector under the measurement conditions of a sample concentration of 0.45% by mass, a flow rate of 0.35 ml/min, a sample injection amount of 10 μL, and a measurement temperature of 40°C.

A calibration curve is prepared from 8 samples of "Standard Sample TSK standard, polystyrene" manufactured by Tosoh Corporation: "F-40", "F-20", "F-4", "F-1", "A-5000", "A-2500", "A-1000", and "n-propylbenzene".

(Sensitizer)

The core of the microcapsule may contain at least one sensitizer.

In a case where the core of the microcapsule contains the sensitizer, the decomposition of the photopolymerization initiator by the irradiation with active energy rays can be further accelerated.

The sensitizer is a substance which becomes in an electron-excited state by absorbing specific active energy rays. By coming into contact with the photopolymerization initiator, the sensitizer in the electron-excited state performs an action such as electron transfer, energy transfer, or heating. As a result, the chemical change of the photopolymerization initiator, that is, e.g. the decomposition, the generation of a radical, an acid, or a base is accelerated.

Examples of the sensitizer include benzophenone, thioxanthone, isopropylthioxanthone, anthraquinone, a 3-acylcoumarin derivative, terphenyl, styryl ketone, 3-(aroylmethylene)thiazolyl, camphorquinone, eosin, rhodamine and erythrosine.

Furthermore, as the sensitizer, the compound represented by General Formula (i) described in JP2010-24276A and the compound represented by General Formula (I) described in JP1994-107718A (JP-H06-107718A) can also be suitably used.

Furthermore, the compounds described in WO2015/158745A, specifically tertiary aliphatic amines (for example, methyldiethanolamine, dimethylethanolamine, triethanolamine, triethylamine, and N-methylmorpholine); aromatic amines (for example, amyl para dimethylaminobenzoate, 2-butoxyethyl 4-(dimethylamino)benzoate, 2-(dimethylamino)ethyl benzoate, ethyl 4-(dimethylamino)benzoate, and 2-ethylhexyl 4-(dimethylamino)); (meth)acrylated amines [for example, dialkylaminoalkyl (meth)acrylate (such as diethylaminoethyl acrylate) and N-alkylmorpholine (meth)acrylate (such as N-alkylmorpholine acrylate)], can be suitably used.

Among the above compounds, as the sensitizer, from the viewpoints of the suitability for LED light and the reactivity with the photopolymerization initiator, at least one selected from thioxanthone, isopropylthioxanthone, and benzophenone is preferable, at least one selected from thioxanthone and isopropylthioxanthone is more preferable, and isopropylthioxanthone is even more preferable.

In a case where the core of the microcapsule includes the sensitizer, the core may include one kind of the sensitizer or may include two or more kinds thereof.

In a case where the core of the microcapsule contains the sensitizer, a content of the sensitizer is preferably 0.1% by mass to 20% by mass, more preferably 0.2% by mass to 15% by mass, and even more preferably 0.3% by mass to 10% by mass, with respect to the total solid content of the microcapsule.

(Polymerizable Compound)

The core of the microcapsule preferably contains the polymerizable compound.

According to the aspect in which the core of the microcapsule contains the polymerizable compound, curing sensitivity of a film and hardness of the film are further improved.

In a case where the core of the microcapsule contains the polymerizable compound, the core may contain only one kind of the polymerizable compound or may contain two or more kinds thereof.

In a case where the core of the microcapsule contains the polymerizable compound, a polymerizable group of the polymerizable compound functions as a polymerizable group of the core.

In the aspect in which the core of the microcapsule contains the polymerizable compound, not only the core but also the shell has the polymerizable group.

The polymerizable compound capable of being contained in the core of the microcapsule may any one of a polymerizable monomer, a polymerizable oligomer, and a polymerizable polymer, but is preferably a polymerizable monomer from the viewpoints of improving the curing sensitivity of a film and hardness of the film.

The content of the polymerizable compound (total content in a case of containing two or more kinds thereof) capable of being contained in the core of the microcapsule (preferably a polymerizable monomer, hereinafter, the same shall be applied) is preferably 10% by mass to 70% by mass, more preferably 20% by mass to 60% by mass, and even more preferably 30% by mass to 55% by mass, with respect to the total solid content of the microcapsule, from the

viewpoint of improving curing sensitivity of a film and hardness of the film.

The core of the microcapsule preferably contains a di- or lower functional polymerizable compound (preferably a di- or lower functional polymerizable monomer, hereinafter, the same shall be applied) and a tri- or higher functional polymerizable compound (preferably a tri- or higher functional polymerizable monomer, hereinafter, the same shall be applied). According to the aspect in which the core of the microcapsule contains a di- or lower functional polymerizable compound and a tri- or higher functional polymerizable compound, a film having excellent hardness and having excellent adhesiveness to a substrate can be formed. In the above aspect, it is considered that the di- or lower functional polymerizable compound contributes to the adhesiveness of the film to the substrate, and the tri- or higher functional polymerizable compound contributes to the hardness of the film.

In the case where the polymerizable compound contains the di- or lower functional polymerizable compound and the tri- or higher functional polymerizable compound, a ratio of the tri- or higher functional polymerizable compound is preferably 10% by mass to 90% by mass, more preferably 20% by mass to 70% by mass, and even more preferably 30% by mass to 55% by mass, with respect to a total mass of the di- or lower functional polymerizable compound and the tri- or higher functional polymerizable compound.

The molecular weight of the polymerizable compound is, in terms of a weight-average molecular weight, preferably 100 to 100,000, more preferably 100 to 30,000, even more preferably 100 to 10,000, still more preferably 100 to 4,000, yet more preferably 100 to 2,000, much more preferably 100 to 1,000, far more preferably 100 to 900, far more preferably 100 to 800, and particularly preferably 150 to 750.

The weight-average molecular weight of the polymerizable compound is a value measured by gel permeation chromatography (GPC). A measure method is as described above.

-Polymerizable Monomer-

The polymerizable monomer capable of being contained in the core of the microcapsule can be selected from a polymerizable monomer having a radically polymerizable ethylenically unsaturated bond (that is, a radically polymerizable monomer) and a polymerizable monomer having a cationic polymerizable group that can be cationically polymerized (that is, a cationic polymerizable monomer).

Examples of the radically polymerizable monomer include an acrylate compound, a methacrylate compound, a styrene compound, a vinylnaphthalene compound, an N-vinyl heterocyclic compound, unsaturated polyester, unsaturated polyether, unsaturated polyamide, and unsaturated urethane.

As the radically polymerizable monomer, a compound having an ethylenic unsaturated group and an ethylenically unsaturated group is preferable.

In a case where the core of the microcapsule contains the radically polymerizable monomer, the core may contain only one or two or more radically polymerizable monomers.

Examples of the acrylate compound include monofunctional acrylate compounds such as 2-hydroxyethyl acrylate, butoxyethyl acrylate, carbitol acrylate, cyclohexyl acrylate, tetrahydrofurfuryl acrylate, benzyl acrylate, tridecyl acrylate, 2-phenoxyethyl acrylate (PEA), bis(4-acryloxypolyethoxyphenyl)propane, oligoester acrylate, epoxy acrylate, isobornyl acrylate (IBOA), dicyclopentenyl acrylate, dicyclopentenyloxyethyl acrylate, dicyclopentanyl acrylate, cyclic trimethylolpropane formal acrylate, 2-(2-ethoxyethoxy)ethyl acrylate, 2-(2-vinyloxyethoxy)ethyl acrylate, octyl acrylate, decyl acrylate, isodecyl acrylate, lauryl acrylate, 3,3,5-trimethylcyclohexyl acrylate, 4-t-butylcyclohexyl acrylate, isoamyl acrylate, stearyl acrylate, isoamyl stearyl acrylate, isostearyl acrylate, 2-ethylhexyl diglycol acrylate, 2-hydroxybutyl acrylate, 2-acryloyloxyethylhydrophthalic acid, ethoxydiethylene glycol acrylate, methoxydiethyleneglycol acrylate, methoxypolyethylene glycol acrylate, methoxypropylene glycol acrylate, 2-hydroxy-3-phenoxypropyl acrylate, vinyl ether acrylate, 2-acryloyloxyethyl succinic acid, 2-acryloyloxy phthalic acid, 2-acryloxyethyl-2-hydroxyethyl phthalic acid, lactone modified acrylate, acryloyl morpholine, acrylamide, and substituted acrylamides (for example, N-methylol acrylamide and diacetone acrylamide);

difunctional acrylate compounds such as polyethylene glycol diacrylate, polypropylene glycol diacrylate, polytetramethylene glycol diacrylate, 1,3-butylene glycol diacrylate, 1,4-butanediol diacrylate, 1,6-hexanediol diacrylate (HDDA), 1,9-nonanediol diacrylate (NDDA), 1,10-decanediol diacrylate (DDDA), 3-methyl pentanediol diacrylate (3 MPDDA), neopentyl glycol diacrylate, tricyclodecanedimethanol diacrylate, bisphenol A ethylene oxide (EO) adduct diacrylate, bisphenol A propylene oxide (PO) adduct diacrylate, ethoxylated bisphenol A diacrylate, hydroxylated neopentyl glycol diacrylate, propoxylated neopentyl glycol diacrylate, alkoxylated dimethylol tricyclodecane diacrylate, polytetramethylene glycol diacrylate, alkoxylated cyclohexanone dimethanol diacrylate, alkoxylated hexanediol diacrylate, dioxane glycol diacrylate, cyclohexanone dimethanol diacrylate, diethylene glycol diacrylate, neopentyl glycol diacrylate, tetraethylene glycol diacrylate, dipropylene glycol diacrylate, tripropylene glycol diacrylate (TPGDA), and neopentyl glycol propylene oxide adduct diacrylate;

tri- or higher functional acrylate compounds such as trimethylolpropane triacrylate, pentaerythritol triacrylate, dipentaerythritol tetraacrylate, ethoxylated isocyanuric acid triacrylate, ε-caprolactone modified tris-(2-acryloxyethyl)

isocyanurate, ditrimethylolpropane tetraacrylate, dipentaerythritol pentaacrylate, dipentaerythritol hexaacrylate, ethoxylated trimethylolpropane triacrylate, propoxylated trimethylolpropane triacrylate, caprolactone modified trimethylolpropane triacrylate, pentaerythritol tetraacrylate, pentaerythritol ethoxy tetraacrylate, glycerin propoxy triacrylate, ethoxylated dipentaerythritol hexaacrylate, caprolactam modified dipentaerythritol hexaacrylate, propoxylated glycerin triacrylate, ethoxylated trimethylolpropane triacrylate, and propoxylated trimethylolpropane triacrylate.

Examples of the methacrylate compound include monofunctional methacrylate compounds such as methyl methacrylate, n-butyl methacrylate, allyl methacrylate, glycidyl methacrylate, benzyl methacrylate, dimethylaminomethyl methacrylate, methoxypolyethylene glycol methacrylate, methoxytriethylene glycol methacrylate, hydroxyethyl methacrylate, phenoxyethyl methacrylate, and cyclohexyl methacrylate;

difunctional methacrylate compounds such as polyethylene glycol dimethacrylate, polypropylene glycol dimethacrylate, 2,2-bis(4-methacryloxy polyethoxyphenyl)propane, and tetraethylene glycol dimethacrylate.

Examples of the styrene compound include styrene, p-methylstyrene, p-methoxystyrene, β-methylstyrene, p-methyl-β-methylstyrene, α-methylstyrene and p-methoxy-β-methylstyrene.

Examples of the vinylnaphthalene compound include 1-vinylnaphthalene, methyl-1-vinylnaphthalene, β-methyl-1-vinylnaphthalene, 4-methyl- 1-vinylnaphthalene and 4-methoxy- 1-vinylnaphthalene.

Examples of the N-vinyl heterocyclic compound include N-vinylcarbazole, N-vinylpyrrolidone, N-vinyl ethylacetamide, N-vinylpyrrole, N-vinylphenothiazine, N-vinylacetanilide, N-vinyl ethylacetamide, N-vinyl succinic acid imide, N-vinylphthalimide, N-vinylcaprolactam and N-vinylimidazole.

Examples of other radically polymerizable monomers include N-vinyl amides such as allyl glycidyl ether, diallyl phthalate, triallyl trimellitate, and N-vinylformamide.

Among these radically polymerizable monomer, as the di- or lower functional polymerizable monomer, at least one kind selected from 1,6-hexanediol diacrylate (HDDA), 1,9-nonanediol diacrylate (NDDA), 1,10-decanediol diacrylate (DDDA), 3-methyl pentanediol diacrylate (3 MPDDA), neopentyl glycol diacrylate, tricyclodecanedimethanol diacrylate, diethylene glycol diacrylate, tetraethylene glycol diacrylate, dipropylene glycol diacrylate, tripropylene glycol diacrylate (TPGDA), cyclohexanone dimethanol diacrylate, alkoxylated hexanediol diacrylate, polyethylene glycol diacrylate, and polypropylene glycol diacrylate, is preferable.

In addition, as the tri- or higher functional polymerizable monomer, at least one kind selected from trimethylolpropane triacrylate, pentaerythritol triacrylate, dipentaerythritol tetraacrylate, ditrimethylolpropane tetraacrylate, dipentaerythritol pentaacrylate, dipentaerythritol hexaacrylate, ethoxylated trimethylolpropane triacrylate, propoxylated trimethylolpropane triacrylate, caprolactone modified trimethylolpropane triacrylate, pentaerythritol tetraacrylate, pentaerythritol ethoxytetraacrylate, glycerin propoxy triacrylate, ethoxylated dipentaerythritol hexaacrylate, caprolactam modified dipentaerythritol hexaacrylate, propoxylated glycerin triacrylate, ethoxylated trimethylolpropane triacrylate, and propoxylated trimethylolpropane triacrylate, is preferable.

As a combination of the di- or lower functional radically polymerizable monomer and the tri- or higher functional radically polymerizable monomer, a combination of a di- or lower functional acrylate compound and a tri- or higher functional acrylate compound is preferable, a combination of a difunctional acrylate compound and a tri- or higher functional acrylate compound is even more preferable, a combination of a difunctional acrylate compound and a tri- to octa-acrylate compound is still more preferable, and a combination of a difunctional acrylate compound and a tri- to hexa-acrylate compound is yet more preferable.

Furthermore, the most preferable combination thereof is a combination of, as a difunctional acrylate compound, at least one kind selected from 1,6-hexanediol diacrylate (HDDA), 1,9-nonanediol diacrylate (NDDA), 1,10-decanediol diacrylate (DDDA), 3-methylpentadiol diacrylate (3 MPDDA), neopentyl glycol diacrylate, tricyclodecane dimethanol diacrylate, diethylene glycol diacrylate, tetraethylene glycol diacrylate, dipropylene glycol diacrylate, tripropylene glycol diacrylate (TPGDA), cyclohexanone dimethanol diacrylate, polyethylene glycol diacrylate, and polypropylene glycol diacrylate, and, as a tri- to hexa-acrylate compound, at least one kind selected from trimethylolpropane triacrylate, pentaerythritol triacrylate, dipentaerythritol tetraacrylate, ditrimethylolpropane tetraacrylate, dipentaerythritol pentaacrylate, dipentaerythritol hexaacrylate, ethoxylated trimethylolpropane triacrylate, propoxylated trimethylolpropane triacrylate, pentaerythritol tetraacrylate, pentaerythritol ethoxytetraacrylate, glycerin propoxy triacrylate, ethoxylated dipentaerythritol hexaacrylate, caprolactam modified dipentaerythritol hexaacrylate, propoxylated glycerin triacrylate, ethoxylated trimethylolpropane triacrylate, and propoxylated trimethylolpropane triacrylate.

Examples of the cationic polymerizable monomer include an epoxy compound, a vinyl ether compound, and an oxetane compound.

As the cationic polymerizable monomer, a compound having at least one olefin, thioether, acetal, thioxane, thietane, aziridine, N-heterocyclic ring, O-heterocyclic ring, S-heterocyclic ring, P-heterocyclic ring, aldehyde, lactam, or a cyclic ester group is preferable.

Examples of the epoxy compound include di- or lower functional epoxy compounds such as 1,4-butanediol diglycidyl ether, 3-(bis(glycidyloxymethyl)methoxy)-1,2-propanediol, limonene oxide, 2-biphenyl glycidyl ether, 3,4-epoxycyclohexylmethyl-3',4'-epoxycyclohexane carboxylate, epoxide derived from epichlorohydrin-bisphenol S, epoxidized

styrene, epoxide derived from epichlorohydrin-bisphenol F, epoxide derived from epichlorohydrin-bisphenol A, epoxidized novolak and alicyclic polyepoxide.

Examples of the alicyclic diepoxide include a copolymer of an epoxide and a compound containing a hydroxyl group, such as glycol, polyol, and vinyl ether. Specific examples thereof include 3,4-epoxycyclohexylmethyl-3',4'-epoxycycloethylcarboxylate, bis(3,4-epoxyhexylmethyl)adipate, limonene diepoxide and diglycidyl ester of hexahydrophthalic acid.

In addition, examples of other epoxy compounds include tri- or higher functional epoxy compounds such as polyglycidyl ester of polybasic acid, polyglycidyl ether of polyol, polyglycidyl ether of polyoxyalkylene glycol, polyglycidyl ester of aromatic polyol, a urethane polyepoxy compound, and polyepoxy polybutadiene.

Examples of the vinyl ether compound include di- or lower functional vinyl ether compounds such as ethyl vinyl ether, n-butyl vinyl ether, isobutyl vinyl ether, octadecyl vinyl ether, cyclohexyl vinyl ether, butanediol divinyl ether, hydroxybutyl vinyl ether, cyclohexane dimethanol monovinyl ether, phenyl vinyl ether, p-methylphenyl vinyl ether, p-methoxyphenyl vinyl ether, methyl vinyl ether, β-methyl vinyl ether, β-chloro iso vinyl ether, diethylene glycol divinyl ether, triethylene glycol divinyl ether, n-propyl vinyl ether, isopropyl vinyl ether, dodecyl vinyl ether, diethylene glycol monovinyl ether, cyclohexane dimethanol divinyl ether, 4-(vinyloxy)butyl benzoate, bis[4-(vinyloxy)butyl] adipate, bis[4-(vinyloxy)butyl] succinate, 4-(vinyloxymethyl)cyclohexylmethyl benzoate, bis[4-(vinyloxy)butyl] isophthalate, bis[4-(vinyloxymethyl)cyclohexylmethyl] glutarate, 4-(vinyloxy)butyl steatite, bis[4-(vinyloxy)butyl] hexadiyl dicarbamate, bis[4-(vinyloxy)methyl]cyclohexyl]methyl] terephthalate, bis[4-(vinyloxy)methyl]cyclohexyl]methyl] isophthalate, bis[4-(vinyloxy)butyl] (4-methyl-1,3-phenylene)-biscarbamate, bis[4-vinyloxy)butyl] (methylenedi-4,1-phenylene)biscarbamate, and 3-amino-1-propanol vinyl ether; and

tri- or higher functional vinyl ether compounds such as tris[4-(vinyloxy)butyl] trimellitate.

Examples of the oxetane compound include 3-ethyl-3-hydroxymethyl-1-oxetane, 1,4-bis[3-ethyl-3-oxetanylmethoxy)methyl] benzene, 3-ethyl-3-phenoxymethyl-oxetane, bis([1-ethyl(3-oxetanyl)]methyl) ether, 3-ethyl-3-[(2-ethylhexyloxy)methyl] oxetane, 3-ethyl-[(triethoxysilylpropoxy)methyl] oxetane and 3,3 -dimethyl-2-(p-methoxyphenyl)-oxetane.

In addition to the radically polymerizable monomers exemplified above, it is possible to use the commercially available products described in "Cross-linking Agent Handbook" edited by Shinzo Yamashita (1981, TAISEI-SHUPPAN CO., LTD.); "UV·EB Curing Handbook (raw materials)" edited by Kiyomi Kato (1985, Kobunshi Kankokai); "Application and Market of UV·EB Curing Technology" edited by RadTech Japan, p. 79, (1989, CMC); "Polyester Resin Handbook" written by Eichiro Takiyama, (1988, NIKKAN KOGYO SHIMBUN, LTD.) and to use radically polymerizable and cross-linkable monomers known in the technical field.

Furthermore, in addition to the cationic polymerizable monomers exemplified above, it is possible to use the compounds described in "Advances in Polymer Science" by J. V. Crivello et al., 62, pages 1 to 47 (1984), "Handbook of Epoxy Resins" by Lee et al., McGraw Hill Book Company, New York (1967), and "Epoxy Resin Technology" by P. F. Bruins et al. (1968).

In addition, as the polymerizable monomer, for example, the photocurable polymerizable monomers used in photopolymerizable compositions described in JP1995-159983A (JP-H07-159983A), JP1995-31399B (JP-H07-31399B), JP1996-224982A (JP-H08-224982A), JP1998-863A (JP-H10-863A), JP1997-134011A (JP-H09-134011A), JP2004-514014A, are known. These monomers can also be suitably applied as the polymerizable monomer capable of being contained in the core of the microcapsule.

As the polymerizable monomer, a commercially available product on the market may be used.

Examples of the commercially available product of the polymerizable monomer include AH-600 (difunctional), AT-600 (difunctional), UA-306H (hexafunctional), UA-306T (hexafunctional), UA-306I (hexafunctional), UA-510H (decafunctional), UF-8001G (difunctional), DAUA-167 (difunctional), LIGHT ACRYLATE NPA (difunctional), and LIGHT ACRYLATE 3EG-A (difunctional) (all of which are manufactured by KYOEISHA CHEMICAL Co., Ltd.), SR339A (PEA, monofunctional), SR506 (IBOA, monofunctional), CD262 (difunctional), SR238 (HDDA, difunctional), SR341 (3MPDDA, difunctional), SR508 (difunctional), SR306H (difunctional), CD560 (difunctional), SR833S (difunctional), SR444 (trifunctional), SR454 (trifunctional), SR492 (trifunctional), SR499 (trifunctional), CD501 (trifunctional), SR502 (trifunctional), SR9020(trifunctional), CD9021 (trifunctional), SR9035 (trifunctional), SR494 (tetrafunctional), and SR399E (pentafunctional) (all of which are manufactured by Sartomer Arkema Inc.), A-NOD-N (NDDA, difunctional), A-DOD-N (DDDA, difunctional), A-200 (difunctional), APG-400 (difunctional), A-BPE-10 (difunctional), A-BPE-20 (difunctional), A-9300 (trifunctional), A-9300-1CL (trifunctional), A-TMPT (trifunctional), A-TMM-3L (trifunctional), A-TMMT (tetrafunctional), and AD-TMP (tetrafunctional) (all of which are manufactured by Shin-Nakamura Chemical Co., Ltd.), UV-7510B (trifunctional) (manufactured by Nippon Synthetic Chemical Industry Co., Ltd.), KAYARAD DCPA-30 (hexafunctional) and KAYARAD DPEA-12 (hexafunctional) (all of which are manufactured by Nippon Kayaku Co., Ltd.).

In addition, as the polymerizable monomer, it is possible to suitably use the commercially available products such as neopentyl glycol propylene oxide adduct diacrylate (NPGPODA), SR531, SR285, and SR256 (all of which are manufactured by Sartomer Arkema Inc.), A-DHP (dipentaerythritol hexaacrylate, SHIN-NAKAMURA CHEMICAL CO.,

LTD.), ARONIX (registered trademark) M-156 (manufactured by TOAGOSEI CO., LTD.), V-CAP (manufactured by BASF SE) and VISCOAT #192 (manufactured by OSAKA ORGANIC CHEMICAL INDUSTRY LTD).

In a case of manufacturing the microcapsule, the polymerizable monomer is dissolved as an oil-phase component together with the components constituting the microcapsule, and a water-phase component is added to and mixed with the oil-phase component, followed by emulsification, and therefore the polymerizable monomer can be incorporated into the core of the microcapsule.

The molecular weight of the polymerizable monomer is, in terms of a weight-average molecular weight, preferably 100 to 4,000, more preferably 100 to 2,000, even more preferably 100 to 1,000, still more preferably 100 to 900, yet more preferably 100 to 800, and particularly preferably 150 to 750.

The weight-average molecular weight of the polymerizable monomer is a value measured by gel permeation chromatography (GPC). A measure method is as described above.

-Polymerizable Oligomer and Polymerizable Polymer-

An aspect in which the polymerizable compound is a polymerizable oligomer or a polymerizable polymer is advantageous in that cure shrinkage of a film is decreased and a deterioration in adhesiveness of the film to a substrate is suppressed.

Examples of the polymerizable oligomer or the polymerizable polymer include oligomers or polymers such as an acrylic resin, a urethane resin, polyester, polyether, polycarbonate, an epoxy resin, and polybutadiene.

In addition, as the polymerizable oligomer or the polymerizable polymer, resins such as epoxy acrylate, aliphatic urethane acrylate, aromatic urethane acrylate, and polyester acrylate may be used.

Among these, as the polymerizable oligomer or the polymerizable polymer, from the viewpoint of decreasing cure shrinkage, a resin which has a hard segment and a soft segment in combination and is capable of stress relaxation in a case of curing is preferable, and particularly, at least one oligomer or polymer selected from the group consisting of a urethane resin, a polyester resin, and an epoxy resin is more preferable.

As the polymerizable group having the polymerizable oligomer or the polymerizable polymer, an ethylenically unsaturated group such as a (meth)acrylic group, a vinyl group, an allyl group, and a styryl group, and an epoxy group, are preferable, and from the viewpoint of polymerization reactivity, at least one group selected from the group consisting of a (meth)acryloyl group, a vinyl group, and a styryl group is more preferable, and a (meth)acryloyl group is particularly preferable.

In a case where the core of the microcapsule contains the polymerizable oligomer or the polymerizable polymer as the polymerizable compound, the polymerizable oligomer or the polymerizable polymer may have only one or two or more polymerizable groups.

These polymerizable groups can be introduced into polymers or oligomers by polymer reaction or copolymerization.

For example, by using a reaction between a polymer or an oligomer having a carboxy group on a side chain, and glycidyl methacrylate, or a reaction between a polymer or an oligomer having an epoxy group, and an ethylenically unsaturated group-containing carboxylic acid such as a methacrylic acid, the polymerizable groups can be introduced into polymers or oligomers.

As the polymerizable oligomer and the polymerizable polymer, a commercially available product on the market may be used.

Examples of the commercially available product of the polymerizable oligomer and the polymerizable polymer include acrylic resins such as (ACA) Z200M, (ACA) Z230AA, (ACA) Z251, and (ACA) Z254F (all of which are manufactured by DAICEL-ALLNEX LTD.), and HA7975D (Hitachi Chemical Co., Ltd.);

urethane resins such as EBECRYL (registered trademark) 8402, EBECRYL (registered trademark) 8405, EBECRYL (registered trademark) 9270, EBECRYL (registered trademark) 8311, EBECRYL (registered trademark) 8701, KRM 8667, and KRM 8528 (all of which are manufactured by DAICEL-ALLNEX LTD.), CN964, CN9012, CN968, CN996, CN975, and CN9782 (all of which are manufactured by Sartomer Arkema Inc.), UV-6300B, UV-7600B, UV-7605B, UV-7620EA, and UV-7630B (all of which are manufactured by Nippon Synthetic Chemical Industry Co., Ltd.), U-6HA, U-15HA, U-108A, U-200PA, and UA-4200 (all of which are manufactured by Shin-Nakamura Chemical Co., Ltd.), TL2300, HA4863, TL2328, TL2350, and HA7902-1 (all of which are manufactured by Hitachi Chemical Co., Ltd.), and 8UA-017, 8UA-239, 8UA-239H, 8UA-140, 8UA-585H, 8UA-347H, and 8UX-015A (all of which are manufactured by TAISEI FINE CHEMICAL CO., LTD.);

polyester resins such as CN294, CN2254, CN2260, CN2271E, CN2300, CN2301, CN2302, CN2303, and CN2304 (all of which are manufactured by Sartomer Arkema Inc.), and EBECRYL (registered trademark) 436, EBECRYL (registered trademark) 438, EBECRYL (registered trademark) 446, EBECRYL (registered trademark) 524, EBECRYL (registered trademark) 525, EBECRYL (registered trademark) 811, and EBECRYL (registered trademark) 812

(all of which are manufactured by DAICEL-ALLNEX LTD.);
polyether resins such as BLEMMER (registered trademark) ADE-400A and BLEMMER (registered trademark) ADP-400 (all of which are manufactured by NOF CORPORATION);
polycarbonate resins such as polycarbonate diol diacrylate (UBE INDUSTRIES, LTD.);
epoxy resins such as EBECRYL (registered trademark) 3708 (DAICEL-ALLNEX LTD.), CN120, CN120B60, CN120B80, and CN120E50 (all of which are manufactured by Sartomer Arkema Inc.), and HA7851 (Hitachi Chemical Co., Ltd.); and
polybutadiene resins such as CN301, CN303, and CN307 (all of which are manufactured by Sartomer Arkema Inc.).

(Resin)

The core of the microcapsule may contain at least one resin.
The term "resin" referred herein indicates a resin other than above-described polymerizable oligomer and polymerizable polymer, that is, a resin not having a polymerizable group.
In a case where the core of the microcapsule contains a resin, strength of the microcapsule can be increased, and hardness of a formed film, and the like can be further increased.
The resin capable of being contained in the core of the microcapsule is not particularly limited, and examples thereof include known resins such as a polyacrylate resin, a polystyrene resin, a polyurethane resin, a polycarbonate resin, and a polyester resin.
The weight-average molecular weight of the resin capable of being contained in the core of the microcapsule is preferably 5,000 to 500,000, more preferably 10,000 to 200,000, even more preferably 10,000 to 100,000, and particularly preferably 10,000 to 50,000.
The content of the resin (a total content in a case where two or more kinds thereof are contained) capable of being contained in the core of the microcapsule is preferably 1% by mass to 50% by mass, more preferably 5% by mass to 40% by mass, and even more preferably 10% by mass to 40% by mass with respect to the total solid content of the microcapsule.

(Water)

The aqueous dispersion of the present disclosure contains water as a dispersion medium of the microcapsule.
The content of water in the aqueous dispersion is not particularly limited, and for example, is preferably 10% by mass to 99% by mass, more preferably 20% by mass to 95% by mass, even more preferably 30% by mass to 90% by mass, and particularly preferably 50% by mass to 90% by mass with respect to the total amount of the aqueous dispersion.

(Coloring Material)

The aqueous dispersion of the present disclosure may contain at least one coloring material.
In a case where the aqueous dispersion of the present disclosure contains a coloring material, the coloring material is preferably contained in the exterior of the microcapsule.
The coloring material is not particularly limited and can be used by being arbitrarily selected from known coloring materials such as a pigment, a water-soluble dye, and a dispersed dye. Among these, the pigment is more preferable as the coloring material, because the pigment has excellent weather fastness and a high level of color reproducibility.
The pigment is not particularly and can be appropriately selected according to the purpose. Examples of the pigment include known organic pigments and inorganic pigments. In addition, examples of the pigment include commercially available pigment dispersions, and surface-treated pigments (e.g. those obtained by dispersing a pigment in water, a liquid organic compound, an insoluble resin as a dispersion medium, those obtained by treating pigment surfaces with a resin and a pigment derivative).
Examples of the organic pigments and inorganic pigments include a yellow pigment, a red pigment, a magenta pigment, a blue pigment, a cyan pigment, a green pigment, an orange pigment, a purple pigment, a brown pigment, a black pigment, and a white pigment.
In addition, examples of the pigment include commercially available pigment dispersions, and surface-treated pigments (e.g. those obtained by treating pigment surfaces with a dispersant such as a resin, a pigment derivative, and a self-dispersing pigment having a hydrophilic group on a particle surface). Furthermore, as the pigment, pigment dispersions on the market may be used.
Among these, as the pigment, a pigment of which a pigment surface is treated with a resin having a hydrophilic group, and a self-dispersing pigment having a hydrophilic group on a particle surface are preferably used. As the hydrophilic group, an anionic group (e.g. a carboxy group, a phosphoric acid group, and a sulfonic acid group) is preferable.

In the present specification, the term "self-dispersing pigment" refers to a pigment which is obtained by, to a pigment surface, directly linking or indirectly bonding a plurality of hydrophilic functional groups and/or a salt thereof (hereinafter will also be referred to as "dispersibility imparting group") via e.g. an alkyl group, an alkyl ether group, or an aryl group, and which exhibits at least one of water dispersibility or water solubility under absence of a dispersant for dispersing the pigment so as to be able to maintain a dispersion state in the aqueous dispersion (for example, an ink).
For example, generally, an ink containing the self-dispersing pigment as a colorant does not necessarily contain a dispersant that is to be contained to disperse the pigment, and therefore is advantageous in that foaming caused by deterioration of an anti-foaming property due to the dispersant occurs less, leading to easy preparation of an ink having excellent jetting stability.
Examples of the dispersibility imparting group bonded to the surface of the self-dispersing pigment include -COOH, -CO, -OH, $-SO_3H$, $-PO_3H_2$, and quaternary ammonium, and salts thereof. In regard to the bonding of the dispersibility imparting group, the pigment subjected to a physical treatment or a chemical treatment so as to bond (graft) an active species having the dispersibility imparting group or the dispersibility imparting group to the pigment surface. Examples of the physical treatment include a vacuum plasma treatment. Examples of the chemical treatment include a wet oxidation method in which the pigment surface is oxidized with an oxidizing agent in water, and a method in which a carboxy group is bonded via a phenyl group by bonding p-aminobenzoic acid to the pigment surface.
Preferable examples of the self-dispersing pigment include a self-dispersing pigment which is surface-treated by oxidation treatment using a hypohalous acid and/or a salt of a hypohalous acid as an oxidizing agent or oxidation treatment using ozone as an oxidizing agent.
As the self-dispersing pigment, a commercially available product may be used.
Examples of the commercially available product of the self-dispersing pigment include MICROJET CW-1 (trade name; Orient Chemical Industries Co., Ltd.), CAB-O-JET (registered trademark) 200, CAB-O-JET (registered trademark) 300, and CAB-O-JET (registered trademark) 450C (trade name; Cabot Corporation).
In a case where a pigment is used as a coloring material, a pigment dispersant may be used in a case of preparing pigment particles as necessary.
Regarding the coloring material such as a pigment and the pigment dispersant, paragraphs "0180" to "0200" in JP2014-040529A can be referred to as appropriate.

(Other Components)

If necessary, the aqueous dispersion of the present disclosure may contain other components in addition to the components described above.
The other components may be contained in the cell of the microcapsule (that is, the interior of the microcapsule) or may be contained in the exterior of the microcapsule.

-Organic Solvent-

The aqueous dispersion of the present disclosure may contain at least one organic solvent.
In a case where the aqueous dispersion of the present disclosure contains an organic solvent, the adhesiveness between the film and the substrate can be further improved.
In a case where the aqueous dispersion of the present disclosure contains the organic solvent, a content of the organic solvent is preferably 0.05% by mass to 50% by mass and particularly preferably 0.1% by mass to 20% by mass with respect to the total amount of the aqueous dispersion.
Specific examples of the organic solvent are as below.

- Alcohols (e.g. methanol, ethanol, propanol, isopropanol, butanol, isobutanol, sec-butanol, tert-butanol, pentanol, hexanol, cyclohexanol, and benzyl alcohol)
- Polyhydric alcohols (e.g. ethylene glycol, diethylene glycol, triethylene glycol, polyethylene glycol, propylene glycol, dipropylene glycol, polypropylene glycol, butylene glycol, hexanediol, pentanediol, glycerin, hexanetriol, thiodiglycol, 2-methylpropanediol)
- Polyhydric alcohol ethers (e.g. ethylene glycol monomethyl ether, ethylene glycol monoethyl ether, ethylene glycol monobutyl ether, diethylene glycol monoethyl ether, diethylene glycol monomethyl ether, diethylene glycol monobutyl ether, propylene glycol monomethyl ether, propylene glycol monobutyl ether, tripropylene glycol monomethyl ether, dipropylene glycol monomethyl ether, dipropylene glycol dimethyl ether, ethylene glycol monomethyl ether acetate, triethylene glycol monomethyl ether, triethylene glycol monoethyl ether, triethylene glycol monobutyl ether, ethylene glycol monophenyl ether, and propylene glycol monophenyl ether)
- Amines (e.g. ethanolamine, diethanolamine, triethanolamine, N-methyldiethanolamine, N-ethyldiethanolamine, morpholine, N-ethylmorpholine, ethylenediamine, diethylenediamine, triethylenetetramine, tetraethylenepentamine, polyethyleneimine, pentamethyldiethylenetriamine, tetramethylpropylenediamine)

- Amides (e.g. formamide, N,N-dimethylformamide, N,N-dimethylacetamide)
- Heterocyclic rings (e.g. 2-pyrrolidone, N-methyl-2-pyrrolidone, cyclohexyl pyrrolidone, 2-oxazolidone, 1,3-dimethyl-2-imidazolidinone, and y-butyrolactone)
- Sulfoxides (e.g. dimethyl sulfoxide)
- Sulfones (e.g. sulfolane)
- Others (e.g. urea, acetonitrile, and acetone)

-Surfactant-

The aqueous dispersion of the present disclosure may contain at least one surfactant.

In a case where the aqueous dispersion of the present disclosure contains the surfactant, wettability of a dispersion or a composition containing the dispersion to a substrate is improved. Examples thereof include nonionic surfactants such as polyoxyethylene alkyl ethers, polyoxyethylene alkyl allyl ethers, acetylene glycols, polyoxyethylene/polyoxypropylene block copolymers, and siloxanes.

In addition, examples of the surfactant include an organic fluoro compound. The organic fluoro compound is preferably hydrophobic.

Examples of the organic fluoro compound include a fluorine-based surfactant, an oil-like fluorine-based compound (for example, fluorine oil), a solid-like fluorine compound resin (for example tetrafluoroethylene resin), and organic fluoro compounds described in JP1982-9053B (JP-S57-9053B) (the eighth column to the seventeenth column) and JP1987-135826A (JP-S62-135826A) can be exemplified.

As described above, in the aqueous dispersion of the present disclosure, the shell of the microcapsule has the anionic group and the nonionic group as the hydrophilic groups, and thus the dispersion stability of the microcapsule becomes excellent. Therefore, it is possible to not to substantially contain an anionic surfactant which is to be added to improve the dispersibility.

The phrase "not to substantially contain" means that the content of the anionic surfactant is 1% by mass or less (preferably 0.1% by mass or less) with respect to the total amount of the aqueous dispersion.

The aspect in which the aqueous dispersion substantially does not contain the anionic surfactant is advantageous in that foaming of the aqueous dispersion and a composition using the same can be suppressed. In addition, the aspect in which the aqueous dispersion substantially does not contain the anionic surfactant is particularly advantageous in that in a case where the aqueous dispersion is combined with a pigment dispersion having an anionic dispersing group, it is possible to suppress a phenomenon in which an ion concentration in a system increases due to the anionic surfactant, leading to a decrease in a degree of ionization in the anionic pigment dispersant and thus a decrease in the dispersibility of the pigment.

In the aqueous dispersion of the present disclosure, an aspect in which the content of the anionic surfactant is 1% by mass or less with respect to the total amount of the aqueous dispersion, is adopted.

-Polymerization Inhibitor-

The aqueous dispersion of the present disclosure may contain a polymerization inhibitor.

In a case where the aqueous dispersion of the present disclosure contains the polymerization inhibitor, the storage stability of the aqueous dispersion can be further improved.

Examples of the polymerization inhibitor include p-methoxyphenol, quinones (hydroquinone, benzoquinone, methoxybenzoquinone, and the like), phenothiazine, catechols, alkyl phenols (dibutylhydroxytoluene (BHT) and the like), alkyl bisphenols, zinc dimethyldithiocarbamate, copper dimethyldithiocarbamate, copper dibutyldithiocarbamate, copper salicylate, thiodipropionic acid esters, mercaptobenzimidazole, phosphites, 2,2,6,6-tetramethylpiperidin-1-oxyl (TEMPO), 2,2,6,6-tetramethyl-4-hydroxypiperidin-1-oxyl (TEMPOL), cupferron Al, and a tris(N-nitroso-N-phenylhydroxylamine)aluminum salt.

Among these, as the polymerization inhibitor, at least one kind of compound selected from p-methoxyphenol, catechols, quinones, alkyl phenols, TEMPO, TEMPOL, cupferron Al, and a tris(N-nitroso-N-phenylhydroxylamine)aluminum salt is preferable, and at least one kind of compound selected from p-methoxyphenol, hydroquinone, benzoquinone, BHT, TEMPO, TEMPOL, cupferron Al, and a tris(N-nitroso-N-phenylhydroxylamine)aluminum salt is more preferable.

-Ultraviolet Absorber-

The aqueous dispersion of the present disclosure may contain an ultraviolet absorber.

In a case where the aqueous dispersion of the present disclosure contains an ultraviolet absorber, the weather

fastness and the like of the film can be further improved.

Examples of the ultraviolet absorber are not particularly limited and include known ultraviolet absorbers such as a benzotriazole-based compound, a benzophenone-based compound, a triazine-based compound, and a benzoxazole-based compound.

(Component Capable of Being Contained in the Exterior of Microcapsule)

The aqueous dispersion of the present disclosure may contain, in the exterior of the microcapsule, e.g. a photopolymerization initiator, a polymerizable compound, a water-soluble resin, a water-dispersible resin, as necessary, from the viewpoint of controlling film properties, adhesiveness, and jetting properties.

The phrase "aqueous dispersion contains a photopolymerization initiator in the exterior of the microcapsule" means that the aqueous dispersion contains a photopolymerization initiator that is not contained in the core of the microcapsule. The same applied to a case in which e.g. a polymerizable compound, a water-soluble resin, a water-dispersible resin, is contained in the exterior of the microcapsule.

- Photopolymerization Initiator Capable of Being Contained in the Exterior of Microcapsule-

Examples of the photopolymerization initiator capable of being contained in the exterior of the microcapsule include the same photopolymerization initiator as described above (photopolymerization initiator contained in the interior of the microcapsule).

As the photopolymerization initiator capable of being contained in the exterior of the microcapsule, a water-soluble or water-dispersible photopolymerization initiator is preferable. Specifically, preferable examples thereof include DAROCUR (registered trademark) 1173, IRGACURE (registered trademark) 2959, IRGACURE (registered trademark) 754, DAROCUR (registered trademark) MBF, IRGACURE (registered trademark) 819DW, and IRGACURE (registered trademark) 500 (all of which are manufactured by BASF SE), an acylphosphine oxide compound described in WO2014/095724A.

The term "water-soluble" used for the photopolymerization initiator capable of being contained in the exterior of the microcapsule refers to a property in which in a case where the resin is dried for 2 hours at 105°C, the amount of the resin dissolving in 100 g of distilled water having a temperature of 25°C is greater than 1 g.

Furthermore, the term "water-dispersible" used for the photopolymerization initiator capable of being contained in the exterior of the microcapsule refers to a property in which the resin is water-insoluble but is dispersed in water. The term "water-insoluble" refers to a property in which in a case where the resin is dried for 2 hours at 105°C, the amount of the resin dissolving in 100 g of distilled water having a temperature of 25°C is equal to or smaller than 1 g.

-Polymerizable Compound Capable of Being Contained in the Exterior of Microcapsule-

Examples of the polymerizable compound capable of being contained in the exterior of the microcapsule include radically polymerizable compounds such as a compound having an ethylenically unsaturated group, acrylonitrile, styrene, unsaturated polyester, unsaturated polyether, unsaturated polyamide, and unsaturated urethane.

Among these, as the polymerizable compound capable of being contained in the exterior of the microcapsule, a compound having an ethylenically unsaturated group is preferable, and a compound having a (meth)acryloyl group is particularly preferable. Furthermore, as the polymerizable compound, a water-soluble or a water-dispersible polymerizable compound is preferable.

The term "water-soluble" used for the water-soluble polymerizable compound has the same meaning as the term "water-soluble" used for the "water-soluble photopolymerization initiator" described above, and the term "water-dispersible" used for the water-dispersible polymerizable compound has the same meaning as the term "water-dispersible" used for the "water-dispersible photopolymerization initiator" described above.

From the viewpoint of the water solubility or the water dispersibility, as the polymerizable compound capable of being contained in the exterior of the microcapsule, a compound having at least one kind of structure selected from the group consisting of an amide structure, a polyethylene glycol structure, a polypropylene glycol structure, a carboxy group, and a salt of a carboxy group is preferable.

From the viewpoint of the water solubility or the water dispersibility, as the polymerizable compound capable of being contained in the exterior of the microcapsule, for example, at least one kind of compound selected from (meth)acrylic acid, sodium (meth)acrylate, potassium (meth)acrylate, N,N-dimethylacrylamide, N,N-diethylacrylamide, morpholine acrylamide, N-2-hydroxyethyl (meth)acrylamide, N-vinylpyrrolidone, N-vinylcaprolactam, 2-hydroxyethyl (meth)acrylate, 3-hydroxypropyl (meth)acrylate, 2-hydroxypropyl (meth)acrylate, glycerin monomethacrylate, N-[tris(3-acryloylaminopropyloxymethylene)methyl]acrylamide, diethylene glycol bis(3-acryloylaminopropyl)ether, polyethylene glycol di(meth)acrylate, polypropylene glycol di(meth)acrylate, compounds represented by General Formulas (a) to (d),

and ethoxylated trimethylolpropane triacrylate (for example, SR9035 manufactured by Sartomer Arkema Inc.) is preferable, and at least one kind of compound selected from (meth)acrylic acid, N,N-dimethylacrylamide, N-2-hydroxyethyl (meth)acrylamide, 2-hydroxyethyl (meth)acrylate, glycerin monomethacrylate, N-[tris(3-acryloylaminopropyloxymethylene)methyl]acrylamide, diethylene glycol bis(3-acryloylaminopropyl)ether, polyethylene glycol di(meth)acrylate, polypropylene glycol di(meth)acrylate, compounds represented by General Formulas (a) to (d), and ethoxylated trimethylolpropane triacrylate (for example, SR9035 manufactured by Sartomer Arkema Inc.) is more preferable.

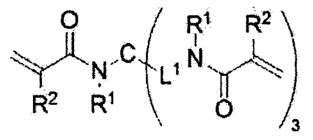

General Formula (a)

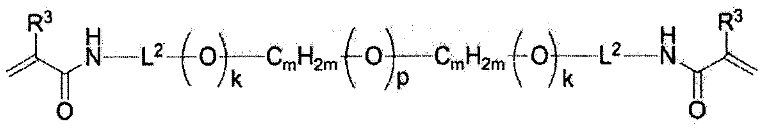

General Formula (b)

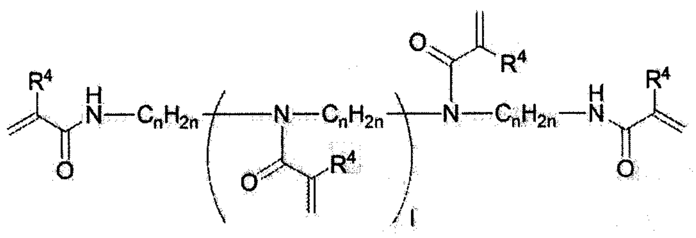

General Formula (c)

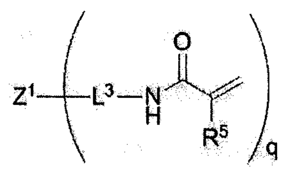

General Formula (d)

In General Formula (a), a plurality of $R^1$'s each independently represent a hydrogen atom, an alkyl group, an aryl group or a heterocyclic group, a plurality of $R^2$'s each independently represent a hydrogen atom or a methyl group, and a plurality of $L^1$'s each independently represent a single bond or a divalent linking group.

In General Formula (b), a plurality of $R^3$'s each independently represent a hydrogen atom or a methyl group, a plurality of $L^2$'s each independently represent an alkylene group having from 1 to 8 carbon atoms, a plurality of k's and p each independently represent 0 or 1, and a plurality of m's each independently represent an integer from 0 to 8, provided that at least one of k's or p is 1.

In General Formula (c), a plurality of $R^4$'s each independently represent a hydrogen atom or a methyl group, a plurality of n's each independently represent an integer from 1 to 8, 1 represents an integer of 0 or 1.

In General Formula (d), $Z^1$ represents a residue obtained by removing q hydrogen atoms from the hydroxyl group of the polyol, q represents an integer from 3 to 6, a plurality of $R^5$'s each independently represent a hydrogen atom or a methyl group, and a plurality of $L^3$'s each independently represent an alkylene group having from 1 to 8 carbon atoms.

Specific examples of the compounds represented by General Formula (a) to General Formula (d) include compounds represented by the following AM-1 to AM-4.

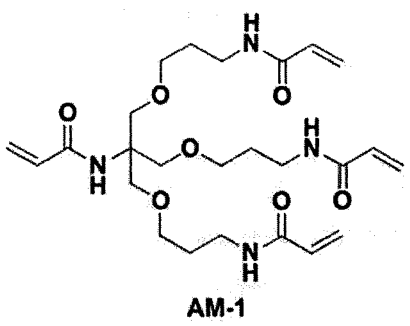

AM-1

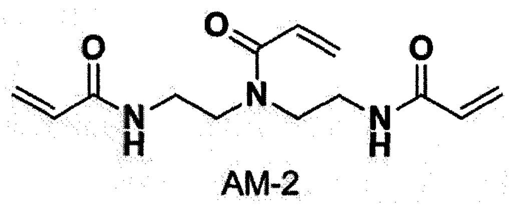

AM-2

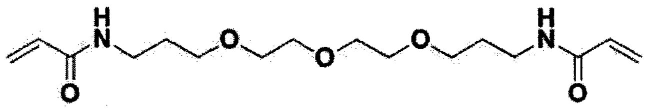

AM-3

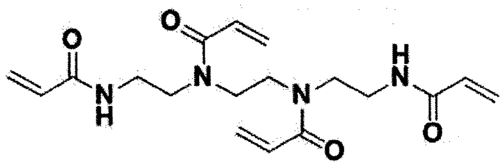

AM-4

The above AM-1 to AM-4 can be synthesized by a method described in JP5591858B.

-Water-Soluble Resin or Water-Dispersible Resin Capable of Being Contained in the Exterior of Microcapsule-

A structure of the water-soluble resin or the water-dispersible resin capable of being contained in the exterior of the microcapsule is not particularly limited and may be an arbitrary structure. Examples of the structure of the water-soluble resin or the water-dispersible resin capable of being contained in the exterior of the microcapsule include structures such as a chain structure, a branched structure, a star structure, a cross-linked structure, and a network structure.

The term "water-soluble" used for the water-soluble resin capable of being contained in the exterior of the microcapsule has the same meaning as the term "water-soluble" used for the "photopolymerization initiator capable of being contained in the exterior of the microcapsule" described above, and the term "water-dispersible" used for the water-dispersible resin capable of being contained in the exterior of the microcapsule has the same meaning as the term "water-dispersible" used for the "photopolymerization initiator capable of being contained in the exterior of the microcapsule" described above.

In addition, the water-soluble resin or the water-dispersible resin is preferably a resin having a functional group selected from a carboxy group, a salt of a carboxy group, a sulfo group, a salt of a sulfo group, a sulfate group, a salt of a sulfate group, a phosphonic acid group, a salt of a phosphonic acid group, a phosphoric acid group, a salt of a phosphoric acid group, an ammonium base, a hydroxyl group, a carboxylic acid amide group, and an alkyleneoxy group.

As a countercation of the aforementioned salt, an alkali metal cation such as sodium or potassium, an alkali earth metal cation such as calcium or magnesium, an ammonium cation, or a phosphonium cation is preferable, and an alkali metal cation is particularly preferable.

As an alkyl group contained in the ammonium group of the ammonium base, a methyl group or an ethyl group is preferable.

In addition, as a counteranion of the ammonium base, a halogen anion such as chlorine or bromine, a sulfate anion, a nitrate anion, a phosphate anion, a sulfonate anion, a carboxylate anion, or a carbonate anion is preferable, and a halogen anion, a sulfonate anion, or a carboxylate anion is particularly preferable.

As a substituent on a nitrogen atom of the carboxylic acid amide group, an alkyl group having 8 or less carbon atoms is preferable, and an alkyl group having 6 or less carbon atoms is particularly preferable.

The resin having an alkyleneoxy group preferably has an alkyleneoxy chain formed of repeating alkyleneoxy groups. The number of alkyleneoxy groups contained in the alkyleneoxy chain is preferably 2 or greater, and particularly preferably 4 or greater.

<Preferable Physical Properties of Aqueous Dispersion>

In a case where the temperature of the aqueous dispersion of the present disclosure is set at a range of 25°C to 50°C, the viscosity of the aqueous dispersion is preferably 3 mPa·s to 15 mPa·s, and more preferably 3 mPa·s to 13 mPa·s. Particularly, in a case where the temperature of the aqueous dispersion of the present disclosure is set at 25°C, the viscosity of the aqueous dispersion is preferably equal to or lower than 50 mPa·s. In a case where the viscosity of the aqueous dispersion is within the above range, in a case of adopting the aqueous dispersion for ink jet recording as an ink composition, a high level of jetting stability can be realized.

The viscosity of the aqueous dispersion is a value measured using a viscometer (VISCOMETER TV-22, manufactured by TOKI SANGYO CO., LTD).

[Method for Manufacturing Aqueous Dispersion].

As the method for manufacturing an aqueous dispersion of the present invention, from the viewpoint of easily obtaining the above-described aqueous dispersion, a method for manufacturing an aqueous dispersion which will be described below is subject-matter of this invention.

The method for manufacturing an aqueous dispersion of the present invention (hereinafter will be referred to as "manufacture method of the present embodiment") includes a microcapsule-forming step in which an oil-phase

component is mixed with a water-phase component so as to be emulsified, and thus the above-described microcapsule is formed.

The oil-phase component contains an organic solvent, a tri- or higher functional isocyanate compound, an isocyanate compound into which the photopolymerization initiating group is introduced, and at least one of an isocyanate compound into which the polymerizable group is introduced or the polymerizable compound.

The water-phase component contains water.

In the manufacture method of the present embodiment, at least one of a condition that the oil-phase component contains an isocyanate compound into which the nonionic group is introduced, or a condition that at least one of the oil-phase component or the water-phase component has the compound having the nonionic group and an active hydrogen group, is satisfied.

Furthermore, in the manufacture method of the present embodiment, at least one of a condition that the oil-phase component contains an isocyanate compound into which the anionic group is introduced, or a condition that at least one of the oil-phase component or the water-phase component has the compound having the anionic group and an active hydrogen group, is satisfied.

An active hydrogen group is a hydroxyl group, a primary amino group, a secondary amino group, or a mercapto group.

In the manufacture method of the present embodiment, at least one of the oil-phase component or the water-phase component may contain the above-described compound having two or more active hydrogen groups.

<Microcapsule-Forming Step>

In the microcapsule-forming step, the oil-phase component is mixed with the water-phase component, the obtained mixture is emulsified, and therefore the microcapsule in which the shell having the three-dimensional cross-linked structure is formed is formed so as to surround the core. The formed microcapsule is a dispersoid in the manufactured aqueous dispersion.

Meanwhile, water in the water-phase component is a dispersion medium in produced the aqueous dispersion.

In more detail, in the microcapsule-forming step, the shell having the three-dimensional cross-linked structure containing a urea bond is formed by a reaction between a tri- or higher functional isocyanate compound and water.

A case in which the tri- or higher functional isocyanate compound has a urethane bond means that a urethane bond is also contained in the three-dimensional cross-linked structure of the shell.

In a case where at least one of the oil-phase component or the water-phase component contains the above-described compound having two or more active hydrogen groups, the shell having the three-dimensional cross-linked structure containing a urethane bond is formed by a reaction between a tri- or higher functional isocyanate compound and the compound having two or more active hydrogen groups.

In the manufacture method of the present embodiment, any one of the compound having the nonionic group and the active hydrogen group, and the isocyanate compound into which a nonionic group is introduced is a material for introducing the nonionic group into the shell.

In more detail, in a case where at least one of the oil-phase component or the water-phase component contains the compound having the nonionic group and the active hydrogen group, the nonionic group is introduced into the shell (that is, the shell having the nonionic group is formed) by a reaction between the active hydrogen group of the compound, and an isocyanate group of any one of isocyanate compounds (for example, a tri- or higher functional isocyanate compound) contained in the mixture.

Meanwhile, in a case where the oil-phase component contains the isocyanate compound into which the nonionic group is introduced, the isocyanate compound into which the nonionic group is introduced also relates to the reaction for forming the shell, and therefore the nonionic group is introduced into the shell (that is, the shell having the nonionic group is formed).

According to the aspect in which the oil-phase component contains the isocyanate compound into which the nonionic group is introduced, it becomes easier to form the shell having the nonionic group. From such a viewpoint, the aspect in which the oil-phase component contains the isocyanate compound into which the nonionic group is introduced is preferable.

In addition, any one of the compound having an anionic group and an active hydrogen group, and the isocyanate compound into which the anionic group is introduced is a material for introducing the anionic group into the shell.

In more detail, in a case where at least one of the oil-phase component or the water-phase component contains the compound having the anionic group and the active hydrogen group, the anionic group is introduced into the shell (that is, the shell having the anionic group is formed) by a reaction between the active hydrogen group of the compound, and an isocyanate group of any one of isocyanate compounds (for example, a tri- or higher functional isocyanate compound) contained in the mixture.

Meanwhile, in a case where the oil-phase component contains the isocyanate compound into which the anionic

group is introduced, the isocyanate compound into which the anionic group is introduced also relates to the reaction for forming the shell, and therefore the anionic group is introduced into the shell (that is, the shell having the anionic group is formed).

The aspect in which at least one of the oil-phase component or the water-phase component contains the compound having the anionic group and the active hydrogen group, is advantageous in that it is easy to prepare a material, that is, the compound having the anionic group and the active hydrogen group (for example, α-amino acid such as lysine). From such a viewpoint, the aspect in which at least one of the oil-phase component or the water-phase component contains the compound having the anionic group and the active hydrogen group is preferable. In this aspect, it is more preferable that the compound having the anionic group and the active hydrogen group is contained in at least the water-phase component.

Meanwhile, from the viewpoint of ease of forming the shell having the anionic group, an aspect in which the oil-phase component contains the isocyanate compound into which the anionic group is introduced is also preferable.

In addition, among the oil-phase component in the present embodiment, "an isocyanate compound into which the photopolymerization initiating group is introduced" is a material for introducing the photopolymerization initiating group into the microcapsule.

In more detail, in a case where the oil-phase component has the photopolymerization initiator, the shell having the three-dimensional cross-linked structure is formed (that is, the microcapsule having the shell and the core containing the photopolymerization initiator is formed) so as to surround the core containing the photopolymerization initiator.

Meanwhile, in the case of the present invention where the oil-phase component contains the isocyanate compound into which the photopolymerization initiating group is introduced, the isocyanate compound into which the photopolymerization initiating group is introduced also relates to the reaction for forming the shell, and therefore the photopolymerization initiating group is introduced into the shell (that is, the shell having the photopolymerization initiating group is formed).

The aspect in which the oil-phase component contains the photopolymerization initiator is advantageous in that a range of selection of the material (photopolymerization initiator) broadens, and it is easy to use the photopolymerization initiator having a low level of solubility with respect to water.

Meanwhile, the aspect of the present invention, in which the oil-phase component contains the isocyanate compound into which the photopolymerization initiating group is introduced is advantageous in that the migration can be effectively suppressed, as described above.

In addition, among the oil-phase component in the present embodiment, "at least one of the isocyanate compound into which the polymerizable group is introduced or the polymerizable compound" is a material for introducing the polymerizable group into the microcapsule.

In more detail, in a case where the oil-phase component has the polymerizable compound, the shell having the three-dimensional cross-linked structure is formed (that is, the microcapsule having the shell and the core containing the polymerizable compound is formed) so as to surround the core containing the polymerizable compound.

Meanwhile, in a case where the oil-phase component contains the isocyanate compound into which the polymerizable group is introduced, the isocyanate compound into which the polymerizable group is introduced also relates to the reaction for forming the shell, and therefore the polymerizable group is introduced into the shell (that is, the shell having the polymerizable group is formed).

The aspect in which the oil-phase component contains the polymerizable compound is advantageous in that a range of selection of the material (polymerizable compound) broadens, and it is easy to use a di- or lower functional polymerizable compound and a tri- or higher functional polymerizable compound in combination.

Meanwhile, the aspect in which the oil-phase component contains the isocyanate compound into which the polymerizable group is introduced is advantageous in hardness of a formed film, because a cross-linking of the microcapsules with each other is more easily formed by light irradiation in a case where the film is formed by using the manufactured aqueous dispersion.

Examples of the organic solvent contained in the oil-phase component include e.g. ethyl acetate and methyl ethyl ketone.

It is preferable that at least some of the organic solvent is removed during the formation process of the microcapsule or after the formation of the microcapsule.

In addition, the organic solvent may remain as one component of the core during the formation process of the microcapsule.

The detailed descriptions of the tri- or higher functional isocyanate compound, the compound having two or more active hydrogen groups, the compound having the nonionic group and the active hydrogen group, the isocyanate compound into which the nonionic group is introduced, the isocyanate compound into which the photopolymerization initiating group is introduced, the photopolymerization initiator, the isocyanate compound into which the polymerizable group is introduced, the polymerizable compound, the compound having the anionic group and the active hydrogen group, and the isocyanate compound into which the anionic group is introduced, which are described above, are as

explained in the section of "Aqueous Dispersion" described above.

In addition, in the manufacture method of the present embodiment, a total amount obtained by subtracting an amount of the organic solvent and the water from an amount of the oil-phase component and the water-phase component, corresponds to a total solid content of the microcapsule in the manufactured aqueous dispersion.

In regard to a preferable range of an amount used of each component used in the manufacture method of the present embodiment, it is possible to refer to the section of "Aqueous Dispersion" described above. In a case of referring to this section, the term "content" and the term "total solid content of the microcapsule" in the section of "Aqueous Dispersion" described above are replaceable with respect to the term "amount used" and the term "total amount obtained by subtracting an amount of the organic solvent and the water from an amount of the oil-phase component and the water-phase component", respectively.

In the manufacture method of the present embodiment, in a case where the oil-phase component contains the isocyanate compound into which the nonionic group is introduced, a total content of the tri- or higher functional isocyanate compound and the isocyanate compound into which the nonionic group is introduced is preferably 5% by mass to 50% by mass, more preferably 10% by mass to 45% by mass, and particularly preferably 15% by mass to 40% by mass with respect to the total amount obtained by subtracting an amount of the organic solvent and the water from an amount of the oil-phase component and the water-phase component.

In the manufacture method of the present embodiment, in the case where the oil-phase component contains the isocyanate compound into which the nonionic group is introduced, an amount of the nonionic group in the isocyanate compound into which the nonionic group is introduced is preferably 20% by mass to 80% by mass, more preferably 30% by mass to 70% by mass, and particularly preferably 40% by mass to 60% by mass with respect to the total content of the tri- or higher functional isocyanate compound and the isocyanate compound into which the nonionic group is introduced.

In addition, in the manufacture method of the present embodiment, a total content of the isocyanate compound in the oil-phase component is preferably 5% by mass to 90% by mass, more preferably 10% by mass to 80% by mass, and particularly preferably 15% by mass to 75% by mass with respect to the total amount obtained by subtracting an amount of the organic solvent and the water from an amount of the oil-phase component and the water-phase component.

In addition, at least one of the oil-phase component and the water-phase component may contain a basic compound as a neutralizer for an unneutralized anionic group (e.g. carboxy group, sulfo group, phosphoric acid group, phosphonic acid group, sulfate group). Therefore, during the formation process of the microcapsule, the neutralized anionic group (that is, an anionic group in the form of a salt; for example, a salt of a carboxy group, a salt of a sulfo group, a salt of a phosphoric acid group, a salt of a phosphonic acid group, a salt of a sulfate group) can be formed.

In a case of using the basic compound (neutralizer), it is preferable that the basic compound (neutralizer) is contained in at least water-phase component.

Examples of the basic compound include an inorganic base such as sodium hydroxide and potassium hydroxide, an organic base such as triethylamine. Among these, as the basic compound, an inorganic base such as sodium hydroxide and potassium hydroxide is preferable.

In addition, examples of the salt in the anionic group in the form of a salt include an alkali metal salt such as a sodium salt and a potassium salt; an organic amine salt such as a triethylamine salt. Among these, as the salt in the anionic group in the form of a salt, an alkali metal salt such as a sodium salt and a potassium salt is preferable.

As long as each component contained in the oil-phase component is mixed, all components may be mixed at once, or each component may be divided so as to be mixed separately.

A case of each component contained in the water-phase component is similar to the case of the oil-phase component, and as long as each component is mixed, all components may be mixed at once, or each component may be divided so as to be mixed separately.

A method for mixing the oil-phase component with the water-phase component is not particularly limited and examples thereof include mixing by stirring.

A method for emulsifying the mixture obtained by mixing is not particularly limited and examples thereof include emulsification by an emulsification device (for example, a disperser) such as a homogenizer.

The rotation speed of the disperser used for the emulsification is 5,000 rpm to 20,000 rpm for example, and preferably 10,000 rpm to 15,000 rpm.

The rotation time during the emulsification is 1 minute to 120 minutes for example, preferably 3 minutes to 60 minutes, more preferably 3 minutes to 30 minutes, and even more preferably 5 minutes to 15 minutes.

The emulsification during the microcapsule-forming step may be carried out while heating.

By carrying out the emulsification while heating, the reaction for forming the microcapsule by the emulsification can further effectively proceed. In addition, by carrying out the emulsification while heating, at least some of the organic solvent contained as the oil-phase component can be easily removed from the mixture.

The heating temperature in the case of carrying out the emulsification while heating (that is, reaction temperature) is preferably 35°C to 70°C and more preferably 40°C to 60°C.

The heating time in the case of carrying out the emulsification while heating (that is, reaction time) is preferably 6 hours to 50 hours, more preferably 12 hours to 40 hours and particularly preferably 15 hours to 35 hours.
In addition, the microcapsule-forming step may have an emulsification stage of emulsifying a mixture (at a temperature of lower than 35°C, for example), and a heating stage of heating the emulsion obtained in the emulsification stage (at a temperature of 35°C or higher, for example).
According to the aspect in which the microcapsule-forming step has the emulsification stage and the heating stage, the shell having firmer three-dimensional cross-linked structure is formed, and therefore it is possible to manufacture the aqueous dispersion by which a film having excellent hardness can be formed.
In the aspect in which the microcapsule-forming step has the emulsification stage and the heating stage, preferable ranges of a heating temperature and a heating time in the heating stage are respectively the same as preferable ranges of a heating temperature and a heating time in a case of carrying out the emulsification while heating.
Furthermore, the heating stage may have a first heating stage of removing an organic solvent in the emulsion, and a second heating stage of heating the emulsion at a temperature higher than that of the first heating stage.
According to the aspect in which the heating stage has the first heating stage and the second heating stage, which is more preferable aspect, because the shell having firmer three-dimensional cross-linked structure is formed.
Preferable examples of an aspect of the manufacture method include the following aspects (1) to (7).
The aspect (1) is an aspect in which the oil-phase component contains the organic solvent, the tri- or higher functional isocyanate compound, the isocyanate compound into which the nonionic group is introduced, the photopolymerization initiator, and the polymerizable compound, and the water-phase component contains water and the compound having the anionic group and the active hydrogen group (not according to the invention).
The aspect (2) is an aspect in which the oil-phase component contains the organic solvent, the tri- or higher functional isocyanate compound, the compound having the nonionic group and the active hydrogen group, the photopolymerization initiator, and the polymerizable compound, and the water-phase component contains water and the compound having the anionic group and the active hydrogen group (not according to the invention).
The aspect (3) is an aspect in which the oil-phase component contains the organic solvent, the tri- or higher functional isocyanate compound, the isocyanate compound into which the nonionic group is introduced, the isocyanate compound into which the anionic group is introduced, the photopolymerization initiator, and the polymerizable compound, and the water-phase component contains water (not according to the invention).
The aspect (4) is an aspect in which the oil-phase component contains the organic solvent, the tri- or higher functional isocyanate compound, the isocyanate compound into which the nonionic group is introduced, the photopolymerization initiator, the isocyanate compound into which the polymerizable group is introduced, and the polymerizable compound, and the water-phase component contains water and the compound having the anionic group and the active hydrogen group (not according to the invention).
The aspect (5) is an aspect in which the oil-phase component contains the organic solvent, the tri- or higher functional isocyanate compound, the isocyanate compound into which the nonionic group is introduced, the isocyanate compound into which the photopolymerization initiating group is introduced, the isocyanate compound into which the polymerizable group is introduced, and the polymerizable compound, and the water-phase component contains water and the compound having the anionic group and the active hydrogen group (according to the invention).
The aspect (6) is an aspect in which the oil-phase component contains the organic solvent, the tri- or higher functional isocyanate compound, the isocyanate compound into which the nonionic group is introduced, the isocyanate compound into which the anionic group is introduced, the photopolymerization initiator, and the isocyanate compound into which the polymerizable group is introduced, and the water-phase component contains water (not according to the invention).
The aspect (7) is an aspect in which the oil-phase component contains the organic solvent, the tri- or higher functional isocyanate compound, the isocyanate compound into which the nonionic group is introduced, the isocyanate compound into which the anionic group is introduced, the isocyanate compound into which the photopolymerization initiating group is introduced, and the isocyanate compound into which the polymerizable group is introduced, and the water-phase component contains water (according to the invention).

<Other steps>

The manufacture method of the present embodiment may include steps other than the microcapsule-forming step as necessary.
Examples of the other steps include a step of adding other components.
The other components to be added are as described above as other components that can be contained in the aqueous dispersion.

[Image Forming Method]

A method for forming an image by using the above-described aqueous dispersion is not particularly limited.
As an image forming method of the present disclosure, an image forming method of the present embodiment (i.e. invention) which is to be described later is preferable from the viewpoint that an image having excellent harness can be formed on a recording medium.
The image forming method of the present embodiment (i.e. invention) includes an application step of applying the aqueous dispersion of the present invention described above onto the recording medium, and an irradiation step of irradiating the aqueous dispersion applied onto the recording medium with light (that is, active energy rays).
According to the image forming method of the present embodiment, an image having excellent hardness is formed on the recording medium. In addition, the formed image also has excellent adhesiveness with respect to the recording medium.

<Application Step>

The application step is a step of applying the aqueous dispersion of the present invention onto the recording medium.
As the aspect in which the aqueous dispersion is applied onto the recording medium, an aspect is particularly preferable in which the aqueous dispersion (that is, an ink jet ink) is applied onto the recording medium by an ink jet method by using the aqueous dispersion of the present invention as the ink jet ink.
As the recording medium, the above-described substrate (for example, plastic substrate) can be used.
The application of the aqueous dispersion onto the recording medium by the ink jet method can be performed using a known ink jet recording device.
The ink jet recording device is not particularly limited, and a known ink jet recording device by which an intended resolution is achieved can be appropriately selected and used. That is, with any of known ink jet recording devices including commercially available products, the application of the aqueous dispersion onto the recording medium in the image forming method of the present embodiment can be carried out.
Examples of the ink jet recording device include a device including e.g. an ink supply system, a temperature sensor, a heating means.
The ink supply system includes, for example, a base tank containing the ink as the aqueous dispersion of the present invention, supply piping, an ink supply tank disposed immediately before an ink jet head, a filter, and a piezo-type ink jet head. The piezo-type ink jet head can be driven such that the head can jet multi-sized dots preferably having a size of 1 pl to 100 pl and more preferably having a size of 8 pl to 30 pl, preferably at a resolution of 320 dots per inch (dpi) × 320 dpi to 4,000 dpi × 4,000 dpi, more preferably at a resolution of 400 dpi × 400 dpi to 1,600 dpi × 1,600 dpi, and even more preferably at a resolution of 720 dpi x 720 dpi. In the above description, dpi represents the number of dots per 2.54 cm (1 inch).

<Irradiation Step>

The irradiation step is a step of irradiating the aqueous dispersion applied onto the recording medium with active energy rays.
By irradiating the aqueous dispersion applied onto the recording medium with active energy rays, the cross-linking reaction between the microcapsules in the aqueous dispersion proceeds, the image is fixed, and hence the film hardness of the image can be improved.
Examples of the active energy rays that can be used in the irradiation step include e.g. ultraviolet rays (UV light), visible rays and electron beams. Among these, UV light is preferable.
The peak wavelength of the active energy rays (light) depends on an absorption property of a sensitizer that is used as necessary, but is preferably 200 nm to 405 nm, more preferably 220 nm to 390 nm, and even more preferably 220 nm to 385 nm, for example.
In a case where the photopolymerization initiator and the sensitizer are not used in combination, the peak wavelength is preferably 200 nm to 310 nm and more preferably 200 nm to 280 nm, for example.
In a case of the irradiation with the active energy rays (light), the illuminance of an exposure surface is 10 $mW/cm^2$ to 2,000 $mW/cm^2$ for example, and preferably 20 $mW/cm^2$ to 1,000 $mW/cm^2$.
As a source for generating the active energy rays (light), a mercury lamp, a metal halide lamp, a UV fluorescent lamp, a gas laser, and a solid-state laser are widely known.
Furthermore, industrially and environmentally, it is extremely useful to substitute the aforementioned light sources with a semiconductor ultraviolet light-emitting device.
Among the semiconductor ultraviolet light-emitting devices, a light emitting diode (LED) and a laser diode (LD)

are compact, have long service life and high efficiency, and incur low costs, and thus are expected as a light source.

As the light source, a metal halide lamp, an ultra-high pressure mercury lamp, a high-pressure mercury lamp, a medium-pressure mercury lamp, a low-pressure mercury lamp, LED, or a blue-violet laser is preferable.

In a case where the sensitizer and the photopolymerization initiator are used in combination, among the above light sources, an ultra-high pressure mercury lamp that can radiate light having a wavelength of 365 nm, 405 nm, or 436 nm, a high-pressure mercury lamp that can radiate light having a wavelength of 365 nm, 405 nm, or 436 nm, or LED that can radiate light having a wavelength of 355 nm, 365 nm, 385 nm, 395 nm, or 405 nm is more preferable, and LED that can radiate light having a wavelength of 355 nm, 365 nm, 385 nm, 395 nm, or 405 nm is most preferable.

In the case where the photopolymerization initiator and the sensitizer are not used in combination, a metal halide lamp, a medium-pressure mercury lamp, or a low-pressure mercury lamp is preferable.

In the irradiation step, the time for which the aqueous dispersion applied onto the recording medium is irradiated with the active energy rays is 0.01 seconds to 120 seconds for example, and preferably 0.1 seconds to 90 seconds.

As irradiation conditions of the active energy rays and a basic irradiation method, the irradiation conditions and the irradiation method disclosed in JP1985-132767A (JP-S60-132767A) can be appropriately referred to.

Specifically, as the irradiation method of the active energy rays, a method in which a light source is provided on both sides of a head unit including an ink jet device and the head unit as well as the light source are scanned by a so-called shuttle method, or a method in which the irradiation with the active energy rays is performed by a separate light source that is not associated with driving, is preferable.

It is preferable that the irradiation of the active energy rays is performed at a certain time interval (for example, 0.01 seconds to 120 seconds and preferably 0.01 seconds to 60 seconds) after the aqueous dispersion lands and is dried by heating.

<Other steps>

The image forming method of the present embodiment may include steps other than the above-described application step and the irradiation step.

Examples of the other steps include a heating and drying step.

(Heating and drying step)

The image forming method of the present embodiment may further include, as necessary, the heating and drying step of heating and drying the aqueous dispersion on the recording medium, after the application step and before the irradiation step.

In the heating and drying step, water contained in the aqueous dispersion applied onto the recording medium, and an organic solvent that is used in combination with water if necessary are evaporated, and therefore the image is fixed.

A heating means for carrying out the heating and drying is not particularly limited, and examples thereof include a heating means such as a heat drum, hot air, an infrared lamp, a heating oven, and a heat plate.

The heating temperature is preferably 40°C or higher, more preferably 40°C to 150°C, and even more preferably 40°C to 80°C.

The heating time can be appropriately set in consideration of e.g. compositions of the aqueous dispersion and a printing rate.

The aqueous dispersion fixed by heating is further optically fixed by being irradiated with the active energy rays in the irradiation step.

## Examples

Hereinafter, the present invention will be more specifically described based on examples.

[Preparation of Material for introducing Nonionic Group into Shell]

As a material for introducing the nonionic group into the shell (isocyanate compound into which the nonionic group is introduced), the following material was prepared.

• "TAKENATE (registered trademark) D-116N" manufactured by Mitsui Chemicals, Inc.: 50% by mass ethyl acetate solution of an adduct of trimethylolpropane (TMP), m-xylylene diisocyanate (XDI), and polyethylene glycol monomethyl ether (EO90)(having the structure shown below).

The adduct is a mixture of an isocyanate compound into which a nonionic group (in more detail, in Formula (W), the group in which $R^{W1}$ is an ethylene group, $R^{W2}$ is a methyl group, and nw is 90) is introduced, and a trifunctional isocyanate compound.

The isocyanate compound into which the nonionic group is introduced contributes to the introduction of the nonionic group into the shell, and the trifunctional isocyanate compound contributes to the formation of the shell having the three-dimensional cross-linked structure.

In the adduct (that is, a solid content of D-116N), a content of the nonionic group (in more detail, in Formula (W), the group in which $R^{W1}$ is an ethylene group, $R^{W2}$ is a methyl group, and nw is 90) is 50% by mass with respect to the whole adduct.

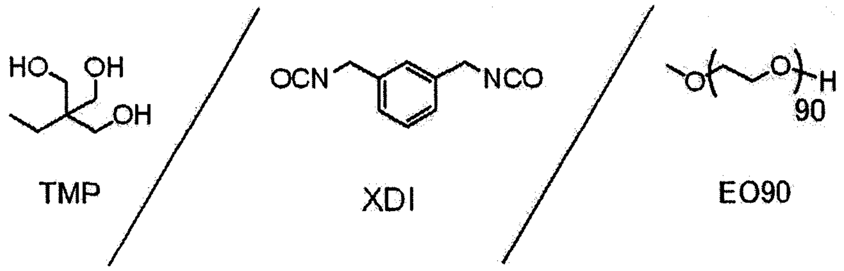
TMP XDI EO90

D-116N

• "UNIOL D4000" manufactured by NOF CORPORATION: Polypropylene glycol (in more detail, polypropylene glycol having a repeating number of the propyleneoxy chain of about 68 and having OH groups at both ends) (concentration of solid contents: 100% by mass)

[Preparation of Material for introducing Anionic Group into Shell]

As a material for introducing an anionic group into the shell, each lysine which is a compound having the anionic group and an active hydrogen group (hereinafter will also be referred to as "lysine"), β-alanine (hereinafter will also be referred to as "β-alanine"), taurine (hereinafter will also be referred to as "taurine"), and ethanolamine phosphate (hereinafter will also be referred to as "EAP") was prepared, respectively. Structures of these compounds are shown below.

In addition, as the material for introducing the anionic group into the shell, COOH-NCO-1, COOH-NCO-2, and COOH-NCO-3, which are isocyanate compounds into which the anionic groups are introduced were prepared, respectively. Structures of these compounds are shown below.

In a case where lysine and COOH-NCO-3 were used as the material for introducing the anionic group into the shell, Structure (X3) described above was formed as a partial structure (structure of a part containing the anionic group) of the shell.

In a case where β-alanine, taurine, and EAP were used as the material for introducing the anionic group into the shell, Structure (X4) described above was formed as a partial structure (structure of a part containing the anionic group) of the shell.

In a case where COOH-NCO-1 was used as the material for introducing the anionic group into the shell, Structure (X1) described above was formed as a partial structure (structure of a part containing the anionic group) of the shell.

In a case where COOH-NCO-2 was used as the material for introducing the anionic group into the shell, Structure (X2) described above was formed as a partial structure (structure of a part containing the anionic group) of the shell.

Amounts (mmol/g) of the anionic group per 1 g of each of the materials are 6.84 mmol/g (lysine), 11.22 mmol/g (β-alanine), 7.99 mmol/g (taurine), 14.18 mmol/g (EAP), 1.248 mmol/g (COOH-NCO-1), 1.128 mmol/g (COOH-NCO-2), and 1.159 mmol/g (COOH-NCO-3), respectively.

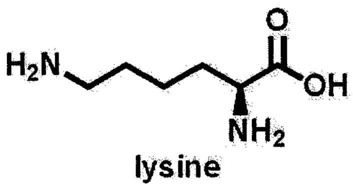
lysine

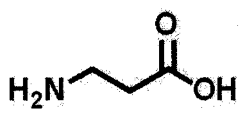
β-alanine

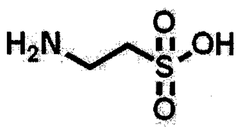
taurine

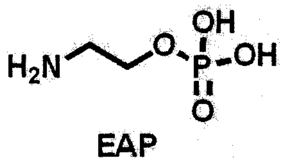

EAP

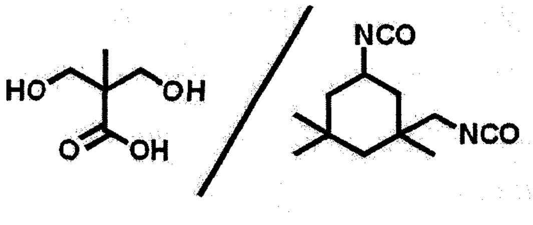

COOH-NCO-1

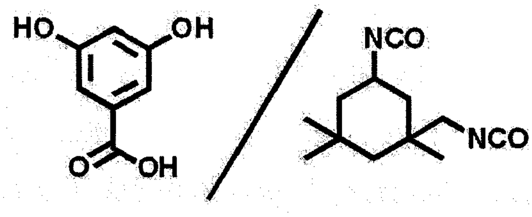

COOH-NCO-2

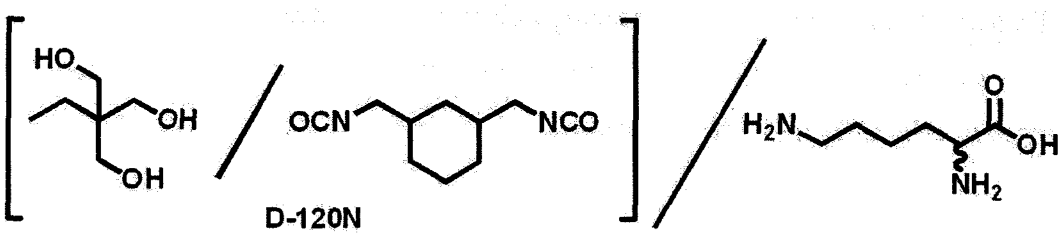

D-120N

COOH-NCO-3

COOH-NCO-1, COOH-NCO-2, and COOH-NCO-3 were synthesized as below.

<Synthesis of COOH-NCO-1>

2,2-Dimethylolpropionic acid (DMPA) (45 g), isophorone diisocyanate (hereinafter will also be referred to as "IPDI") (223.72 g), and ethyl acetate (499.05 g) were added to a three-neck flask and heated to 50°C, and then NEOSTANN (registered trademark) U-600 (inorganic bismuth catalyst, manufactured by NITTO KASEI CO., LTD., hereinafter will also be simply referred to as "U-600") (0.7677 g) was added thereto so as to allow a reaction for 3 hours, and therefore COOH-NCO-1 (concentration of solid contents: 35% by mass) was obtained.

<Synthesis of COOH-NCO-2>

$\alpha$-Resorcylic acid (45 g), IPDI (194.7 g), and ethyl acetate (445.2 g) were added to a three-neck flask and heated to 50°C, and then U-600 (0.7677 g) was added thereto so as to allow a reaction for 3 hours, and therefore COOH-NCO-2 (concentration of solid contents: 35% by mass) was obtained.

<Synthesis of COOH-NCO-3>

Lysine 45 g, D-120 N (294.07 g), and ethyl acetate (419.16 g) were added to a three-neck flask and heated to 50°C, and then U-600 (0.7677 g) was added thereto so as to allow a reaction for 3 hours, and therefore COOH-NCO-3 (concentration of solid contents: 35% by mass) was obtained.

D-120 is TAKENATE (registered trademark) D-120 to be described later.

[Preparation of Other Materials for Forming Shell]

As other materials for forming the shell, the following materials were prepared.

- "TAKENATE (registered trademark) D-110N" manufactured by Mitsui Chemicals, Inc.: 75% by mass ethyl acetate solution of an adduct (trifunctional isocyanate compound) of trimethylolpropane (TMP) and m-xylylene diisocyanate

(XDI)

- "TAKENATE (registered trademark) D-120N" manufactured by Mitsui Chemicals, Inc.: 75% by mass ethyl acetate solution of an adduct (trifunctional isocyanate compound) of trimethylolpropane (TMP) and 1,3-bis(isocyanatomethyl)cyclohexane (HXDI)

[Preparation of Material for introducing Polymerizable Group into Shell]

As a material for introducing the polymerizable group into the shell (isocyanate compound into which the polymerizable group is introduced), the following materials were prepared.

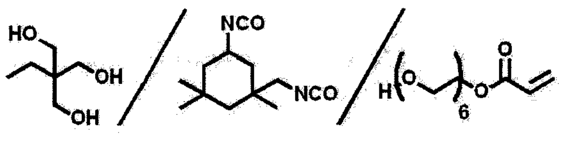

CC-NCO-1

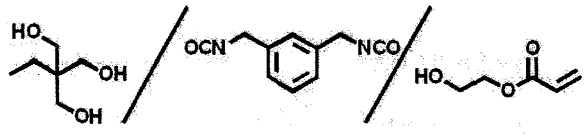

CC-NCO-2

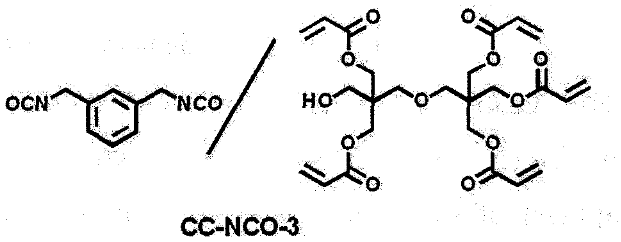

CC-NCO-3

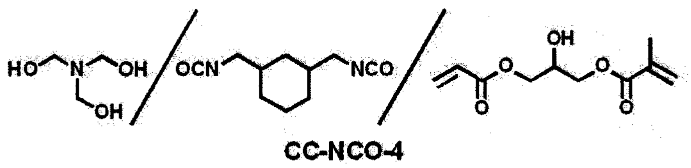

CC-NCO-4

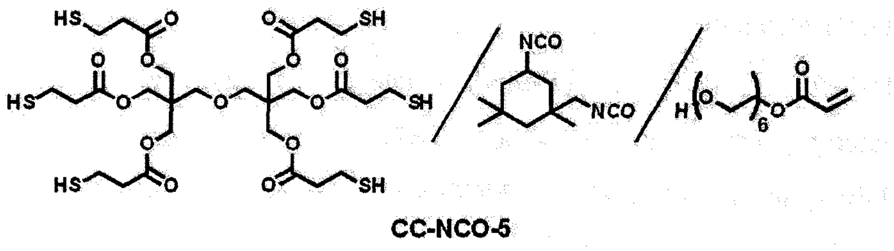

CC-NCO-5

CC-NCO-1, CC-NCO-2, CC-NCO-3, CC-NCO-4, and CC-NCO-5 were synthesized as below.

<CC-NCO-1>

Trimethylolpropane (hereinafter will also be referred to as "TMP") (10 g), IPDI (66.27 g), and ethyl acetate (185.2 g) were added to a three-neck flask and heated to 50°C, and then TOYOCAT-RX21 (reaction type catalyst, manufactured by TOSOH CORPORATION) (0.285 g) was added thereto so as to allow a reaction for 3 hours. After the reaction, BLEMMER AP-400 (manufactured by NOF CORPORATION) (23.43 g) was added thereto so as to allow a reaction for 6 hours at 50°C, and therefore CC-NCO-1 (concentration of solid contents: 35% by mass) was obtained.

<CC-NCO-2>

TMP (10 g), m-xylylene diisocyanate (hereinafter will also be referred to as "XDI") (56.10 g), and ethyl acetate (137.2 g) were added to a three-neck flask and heated to 50°C, and then TOYOCAT-RX21 (reaction type catalyst, manufactured by TOSOH CORPORATION) (0.285 g) was added thereto so as to allow a reaction for 3 hours. After the

reaction, hydroxyethyl acrylate (HEA) (7.79 g) was added thereto so as to allow a reaction for 6 hours at 50°C, and therefore CC-NCO-2 (concentration of solid contents: 35% by mass) was obtained.

<CC-NCO-3>

XDI (50.0 g) and ethyl acetate (222.3 g) were added to a three-neck flask and heated to 50°C, and then TOYOCAT-RX21 (reaction type catalyst, manufactured by TOSOH CORPORATION) (0.285 g) and dipentaerythritol pentaacrylate (DPPA) (69.7 g) were added thereto so as to allow a reaction for 6 hours at 50°C, and therefore CC-NCO-3 (concentration of solid contents: 35% by mass) was obtained.

<CC-NCO-4>

Trihydroxymethylamine (10 g), HXDI (1,3-bis(isocyanatomethyl)cyclohexane) (72.53 g), and ethyl acetate (186.7 g) were added to a three-neck flask and heated to 50°C, and then TOYOCAT-RX21 (reaction type catalyst, manufactured by TOSOH CORPORATION) (0.285 g) was added thereto so as to allow a reaction for 3 hours. After the reaction, 701A (2-hydroxy-3-acryloyloxypropyl methacrylate; manufactured by Shin-Nakamura Chemical Co., Ltd.) (18.0 g) was added thereto so as to allow a reaction for 6 hours at 50°C, and therefore CC-NCO-4 (concentration of solid contents: 35% by mass) was obtained.

<CC-NCO-5>

Dipentaerythritol hexakis(3-mercaptopropionate) (DPMP) (25 g), IPDI (56.77 g), and ethyl acetate (189.3 g) were added to a three-neck flask and heated to 50°C, and then TOYOCAT-RX21 (reaction type catalyst, manufactured by TOSOH CORPORATION) (0.285 g) was added thereto so as to allow a reaction for 3 hours. After the reaction, BLEMMER AP-400 (polypropylene glycol monoacrylate, manufactured by NOF CORPORATION) (20.1 g) was added thereto so as to allow a reaction for 6 hours at 50°C, and therefore CC-NCO-5 (concentration of solid contents: 35% by mass) was obtained.

[Preparation of Material for introducing Polymerization Initiating Group into Shell]

As a material for introducing the polymerization initiating group (isocyanate compound into which the polymerization initiating group is introduced), the following materials were prepared.

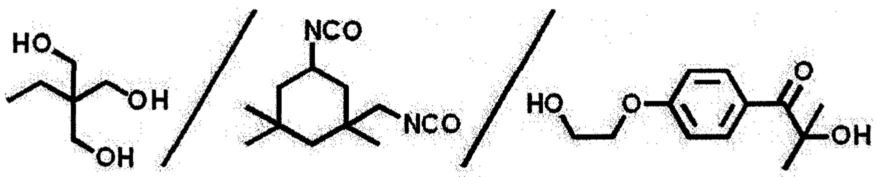

INI-NCO-a

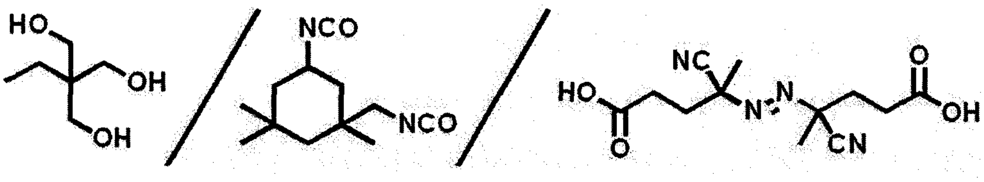

INI-NCO-b

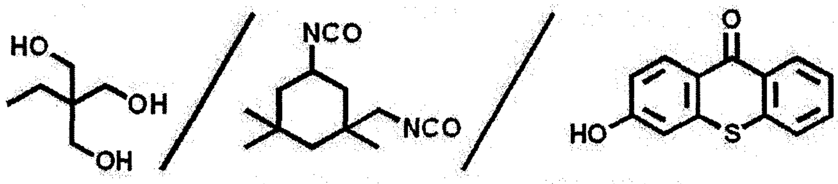

INI-NCO-c

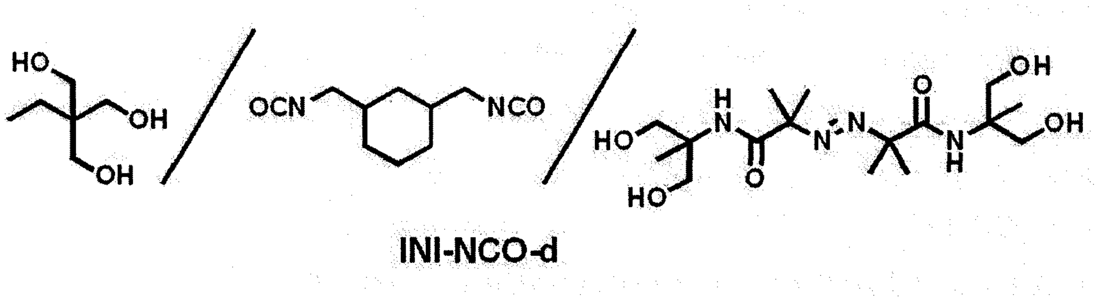

INI-NCO-d

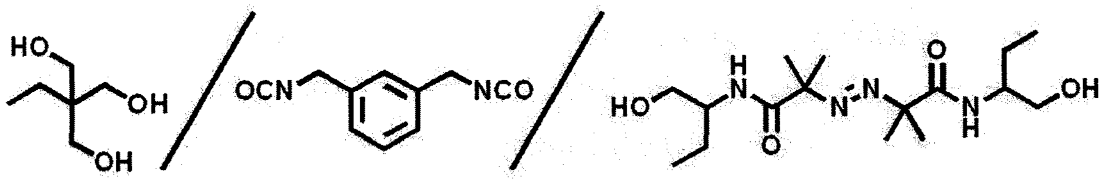

INI-NCO-e

INI-NCO-a, INI-NCO-b, INI-NCO-c, INI-NCO-d, and INI-NCO-e were synthesized as below.

<INI-NCO-a>

TMP (10 g), IPDI (66.27 g), and ethyl acetate (181.9 g) were added to a three-neck flask and heated to 50°C, and then TOYOCAT-RX21 (reaction type catalyst, manufactured by TOSOH CORPORATION) (0.285 g) was added thereto so as to allow a reaction for 3 hours. After the reaction, IRGACURE (registered trademark) 2959 (alkylphenone photopolymerization initiator; 1 - [4-(2-hydroxyethoxy)-phenyl] -2-hydroxy-2-methyl-1 -propan-1 -one, manufactured by BASF) (6.69 g) was added thereto so as to allow a reaction for 6 hours at 50°C, and therefore INI-NCO-a (concentration of solid contents: 35% by mass) was obtained.

<INI-NCO-b>

TMP (10 g), IPDI (66.27 g), and ethyl acetate (185.0 g) were added to a three-neck flask and heated to 50°C, and then TOYOCAT-RX21 (reaction type catalyst, manufactured by TOSOH CORPORATION) (0.285 g) was added thereto so as to allow a reaction for 3 hours. After the reaction, V-501 (photopolymerization initiator; 4,4'-azobis(4-cyanopentanoic acid) manufactured by Wako Pure Chemical Industries, Ltd.) (8.36 g) was added thereto so as to allow a reaction for 6 hours at 50°C, and therefore INI-NCO-b (concentration of solid contents: 35% by mass) was obtained.

<INI-NCO-c>

TMP (10 g), IPDI (66.27 g), and ethyl acetate (182.1 g) were added to a three-neck flask and heated to 50°C, and then TOYOCAT-RX21 (reaction type catalyst, manufactured by TOSOH CORPORATION) (0.285 g) was added thereto so as to allow a reaction for 3 hours. After the reaction, hydroxy thioxanthone (photopolymerization initiator) (6.81 g) was added thereto so as to allow a reaction for 6 hours at 50°C, and therefore INI-NCO-c (concentration of solid contents: 35% by mass) was obtained.

<INI-NCO-d>

TMP (10 g), HXDI (57.91 g), and ethyl acetate (174.8 g) were added to a three-neck flask and heated to 50°C, and then TOYOCAT-RX21 (reaction type catalyst, manufactured by TOSOH CORPORATION) (0.285 g) was added thereto so as to allow a reaction for 3 hours. After the reaction, VA-082 (photopolymerization initiator; 2,2'-azobis[N-[1,1-bis(hydroxymethyl)ethyl]-2-methylpropanamide], manufactured by Wako Pure Chemical Industries, Ltd.) (11.22 g) was added thereto so as to allow a reaction for 6 hours at 50°C, and therefore INI-NCO-d (concentration of solid contents: 35% by mass) was obtained.

<INI-NCO-e>

TMP (10 g), XDI (56.10 g), ethyl acetate (169.7 g) were added to a three-neck flask and heated to 50°C, and then TOYOCAT-RX21 (reaction type catalyst, manufactured by TOSOH CORPORATION) (0.285 g) was added thereto so as to allow a reaction for 3 hours. After the reaction, VA-086 (photopolymerization initiator; 2,2'-azobis[2-methyl-N-(2-hydroxyethyl)propionamide], manufactured by Wako Pure Chemical Industries, Ltd.) (10.27 g) was added thereto so as to allow a reaction for 6 hours at 50°C, and therefore INI-NCO-e (concentration of solid contents: 35% by mass) was obtained.

[Preparation of Polymerizable Compound Contained in Core] As the polymerizable compound contained in the core, the following polymerizable monomers were prepared.

- "SR833S" manufactured by Sartomer Arkema Inc.: Tricyclodecanedimethanol diacrylate (difunctional polymerizable monomer)
- "SR399E" manufactured by Sartomer Arkema Inc.: Dipentaerythritol pentaacrylate (pentafunctional polymerizable monomer)

[Preparation of Photopolymerization Initiator Contained in Core]

As the photopolymerization initiator contained in the core, the following photopolymerization initiators were prepared.

- "Omnipol TX" manufactured by IGM Resins B.V.: Multimerized thioxanthone
- "Genopol AB-2" manufactured by IGM Resins B.V.: Polymerized 4-dimethylaminobenzoic acid ester
- "Omnipol 9210" manufactured by IGM Resins B.V.: A mixture of polyethylene glycol di(β-4-[4-(2-dimethylamino-2-benzyl)butaonylphenyl]piperazine)propionate and ethoxylated pentaerythritol tetraacrylate
- IRGACURE (registered trademark )819 manufactured by BASF SE: Acylphosphine oxide photopolymerization initiator (in more detail, bis(2,4,6-trimethylbenzoyl)-phenylphosphine oxide)

[Preparation of Other Materials for Forming Core]

As other materials for forming the core, the following material was prepared.

• "Polystyrene Mw 35,000" manufactured by Sigma-Aldrich Co. LLC.: Polystyrene (weight-average molecular weight: 35,000)

[Examples 1 to 25 and Comparative Examples 1 and 2]

<Manufacture of Aqueous Dispersion Having Microcapsule in Example 13, Reference Examples 1 to 6, 8, 9, 12, and 25, and Comparative Examples 1 and 2>

Aqueous dispersions having the microcapsules of Example 13, Reference Examples 1 to 6, 8, 9, 12,, and 25, and Comparative Examples 1 and 2 were manufactured as aqueous dispersions using materials other than COOH-NCO-1, COOH-NCO-2, and COOH-NCO-3 as materials for introducing the anionic group. Hereinafter, details thereof will be described below.

(Preparation of Oil-Phase Component)

Among components shown in Table 5 and Table 6, a component other than the material for introducing the anionic group was mixed with 55 g of ethyl acetate and stirred at room temperature for 15 minutes, and therefore an oil-phase component was obtained.

(Preparation of Water-Phase Component)

The material for introducing the anionic group shown in Table 5 and Table 6 was dissolved in 50 g of distilled water 50 g, and therefore a water-phase component was obtained.

(Microcapsule-Forming Step)

The oil-phase component was mixed with the water-phase component, the obtained mixture was emulsified using a homogenizer for 12 minutes at 12,000 rpm, and therefore an emulsion was obtained.

The obtained emulsion was added to 25 g of distilled water, and the obtained liquid was stirred at room temperature for 30 minutes.

Subsequently, the liquid after the stirring was heated to 45°C and stirred for 4 hours in a state of maintaining the liquid temperature at 45°C so as to distill off ethyl acetate from the liquid. Subsequently, the liquid in which the ethyl acetate was distilled off was heated to 50°C and stirred for 24 hours in a state of maintaining the liquid temperature at 50°C, and therefore a microcapsule was formed in the liquid. Subsequently, the liquid containing microcapsules was diluted with distilled water so that a concentration of solid contents became 20% by mass, and therefore aqueous dispersions having the microcapsules (aqueous dispersions of the microcapsules of Example 13, Reference Examples 1 to 6, 8, 9, 12, and 25, and Comparative Examples 1 and 2) were obtained.

<Manufacture of Aqueous Dispersion Having Microcapsule in Examples 19 to 24 and Reference Examples 7, 10, 11, and 14 to 18>

Aqueous dispersions having the microcapsules of Examples 19 to 24 and Reference Examples 7, 10, 11, and 14 to 18 were manufactured as aqueous dispersions using COOH-NCO-1, COOH-NCO-2, or COOH-NCO-3 as materials for introducing the anionic group. Hereinafter, details thereof will be described below.

(Preparation of Oil-Phase Component)

All components shown in Table 5 and Table 6 were mixed with 19 g of ethyl acetate and stirred at room temperature for 15 minutes, and therefore an oil-phase component was obtained.

(Preparation of Water-Phase Component)

As a water-phase component, 43.1 g of distilled water was prepared.

(Microcapsule-Forming Step)

The oil-phase component was mixed with the water-phase component, the obtained mixture was emulsified using a homogenizer for 12 minutes at 12,000 rpm, and therefore an emulsion was obtained.

The obtained emulsion was added to 10 g of distilled water, and the obtained liquid was stirred at room temperature for 30 minutes.

Subsequently, the liquid after the stirring was heated to 45°C and stirred for 4 hours in a state of maintaining the liquid temperature at 45°C so as to distill off ethyl acetate from the liquid. Subsequently, the liquid in which the ethyl acetate was distilled off was heated to 50°C and stirred for 24 hours in a state of maintaining the liquid temperature at 50°C, and therefore a microcapsule was formed in the liquid. Subsequently, the liquid containing microcapsules was diluted with distilled water so that a concentration of solid contents became 20% by mass, and therefore aqueous dispersions having the microcapsules (aqueous dispersions having the microcapsules of Examples 19 to 24 and Reference Examples 7, 10, 11, and 14 to 18) were obtained.

<Checking Relating to Aqueous Dispersion Having Microcapsule>

With respect to each of the aqueous dispersions having the microcapsules of Examples 13 and 19 to 24, Reference Examples 1 to 12, 14 to 18, and 25, and Comparative Examples 1 and 2, the following checking was performed.

(Volume Average Particle Diameter of Microcapsule)

A volume average particle diameter of the microcapsule was measured by a light scattering method. The measurement of the volume average particle diameter of the microcapsule by the light scattering method was carried

out by using a wet-type particle size distribution measurement apparatus, LA-960 (manufactured by HORIBA, Ltd.).

As the results, all of the volume average particle diameters of the microcapsules contained in Examples 13 and 19 to 24, Reference Examples 1 to 12, 14 to 18, and 25,and Comparative Examples 1 and 2 were within a range of 0.10 μm to 0.20 μm.

(Checking Whether Shell of Microcapsule Has Three-Dimensional Cross-Linked Structure)

Whether the shell of the microcapsule actually has the three-dimensional cross-linked structure was checked by the following method. The operation described below was performed under a condition of a liquid temperature of 25°C.

From the aqueous dispersion having the microcapsule obtained as above, a sample was collected. Tetrahydrofuran (THF) having a mass 100 times the mass of the total solid content (microcapsule in the present example) in the sample was added to and mixed with the collected sample, thereby preparing a diluted solution of the aqueous dispersion. The obtained diluted solution was subjected to centrifugation (80,000 rpm, 40 minutes). After centrifugation, the presence or absence of a residue was checked by visual observation. In a case where a residue was checked, water was added to the residue, and the resultant was stirred for 1 hour by using a stirrer so as to redisperse the residue in water, thereby obtaining a redispersion liquid. For the obtained redispersion liquid, by using a wet-type particle size distribution measurement apparatus (LA-960, manufactured by HORIBA, Ltd.), the particle size distribution was measured by a light scattering method. In a case where the particle size distribution could be checked by the operation described above, it was determined that the shell of the microcapsule has the three-dimensional cross-linked structure.

As the results, it was checked that all of the shells of the microcapsules contained in the aqueous dispersions of Examples 13 and 19 to 24, Reference Examples 1 to 12, 14 to 18, and 25, and Comparative Examples 1 and 2, had the three-dimensional cross-linked structures.

(Checking Whether Core of Microcapsule Contains Photopolymerization Initiator)

In the aqueous dispersion having the microcapsule, whether the core of the microcapsule actually contains the photopolymerization initiator was checked by measuring an internal content rate (%) of the photopolymerization initiator. The details thereof are as described below. The operation described below was performed under a condition of a liquid temperature of 25°C.

From the aqueous dispersion having the microcapsule, two samples (hereinafter, will be referred to as "sample 1A" and "sample 2A") having the same mass were collected.

Tetrahydrofuran (THF) having a mass 100 times the mass of the total solid content in the sample 1A was added to and mixed with the sample 1A, thereby preparing a diluted solution. The obtained diluted solution was subjected to centrifugation under conditions of 80,000 rpm and 40 minutes. The supernatant (hereinafter, will be referred to as "supernatant 1A") generated by the centrifugation was collected. The mass of the photopolymerization initiator contained in the collected supernatant 1A was measured using a liquid chromatography device, "Waters 2695" manufactured by WATERS. The obtained mass of the photopolymerization initiator was taken as "total amount of photopolymerization initiator".

Furthermore, the sample 2A was subjected to centrifugation under the same conditions as in the centrifugation performed on the aforementioned diluted solution. The supernatant (hereinafter, will be referred to as "supernatant 2A") generated by the centrifugation was collected. The mass of the photopolymerization initiator contained in the collected supernatant 2A was measured using the aforementioned liquid chromatography device. The obtained mass of the photopolymerization initiator was taken as "amount of free photopolymerization initiator".

Based on the "total amount of photopolymerization initiator" and the "amount of free photopolymerization initiator", the internal content rate (% by mass) of the photopolymerization initiator was determined according to the following equation.

$$\text{Internal content rate (\% by mass) of photopolymerization initiator} = ((\text{total amount of photopolymerization initiator} - \text{amount of free photopolymerization initiator})/\text{total amount of photopolymerization initiator}) \times 100$$

The measurement of the internal content rate of the photopolymerization initiator was performed on each of the four photopolymerization initiators.

As the results, all of the internal content rates of the four photopolymerization initiators in the aqueous dispersions of Examples 13 and 19 to 24, Reference Examples 1 to 12, 14 to 18, and 25, and Comparative Examples 1 and 2 were 99% or more, and it was confirmed that the cores of the microcapsules actually contained the four photopolymerization

initiators.

(Checking Whether Core of Microcapsule Contains Polymerizable Compound)

In the aqueous dispersion having the microcapsule, whether the core of the microcapsule actually contains the polymerizable compound was checked by measuring an internal content rate (%) of the polymerizable compound (polymerizable monomer in the present example).

The internal content rate of the polymerizable compound was measured by the same method as that of the internal content rate of the photopolymerization initiator.

With respect to examples including two polymerizable compounds, the measurement of the internal content rate of the polymerizable compound was performed on each of the two polymerizable compounds.

As the result, the internal content rate of the polymerizable compound was 99% or more (in the example including the two polymerizable compounds, all of the internal content rates of the two polymerizable compounds were 99% or more), and it was confirmed that the cores of the microcapsules actually contained the polymerizable compounds.

<Manufacture of Ink Jet Ink (Colorless Ink)>

Components shown in the following "composition of colorless ink" were mixed so as to prepare an ink jet ink.

The manufactured ink jet ink is also one aspect of the aqueous dispersion having the microcapsule.

In the present example, the ink jet ink manufactured herein is referred to as "colorless ink" so as to be distinguished from the aqueous dispersion having the microcapsule which was manufactured above.

-Composition of Colorless Ink-

| | |
|---|---|
| • Aqueous dispersion having the microcapsule | 50 g |
| Fluorine-based surfactant (nonionic surfactant) (trade name: CAPSTONE (registered trademark) FS-31, manufacture by DuPont, concentration of solid contents: 25% by mass) | 0.3 g |
| • Glycerin (organic solvent) | 5 g |
| • Water | 45 g |

<Evaluation on Colorless Ink >

The following evaluation was carried out using the colorless ink obtained above.

The results are shown in Table 5 and Table 6.

(Pencil Hardness of Cured Film)

The colorless ink obtained above was applied onto a polystyrene (PS) sheet ("falcon hi impact polystyrene" manufactured by Robert Home Company) as a substrate in a thickness of 10 μm by using Bar No.2 of the K hand coater manufactured by RK Print Coat Instruments Ltd. The obtained coated film was dried by being heated for 3 minutes at 60°C. Subsequently, the coated film after the drying was irradiated with ultraviolet rays (UV light) so as to cure the coated film, and therefore a cured film was obtained.

For the irradiation with ultraviolet rays (UV light), as an exposure light source, an experimental UV mini conveyor device CSOT (manufactured by Yuasa Power Supply Ltd.) was used which was equipped with an ozoneless metal halide lamp MAN 250L and in which a conveyor speed was set to be 35 m/min and an exposure intensity was set to be 2.0 W/cm$^2$.

By using UNI (registered trademark) manufactured by MITSUBISHIPENCIL CO., LTD as a pencil, a pencil hardness test was performed on the obtained cured film based on JIS K5600-5-4 (1999).

The acceptable range of the pencil hardness is equal to or higher than HB, and it is preferable that the pencil hardness is equal to or higher than H. The cured film having a pencil hardness of equal to or lower than B is not preferable, because in a case of being handled, there is a possibility that scratches are generated.

(Adhesiveness (Crosshatch Test))

A cured film was formed in the same manner as the cured film in the evaluation of the pencil hardness.

The obtained cured film was subjected to a crosshatch test based on ISO 2409 (cross-cut method), and adhesiveness to a substrate was evaluated according to the following evaluation standards.

During the crosshatch test, cuts were made at an interval of 1 mm, and 25 square lattices having a size of 1

mm × 1 mm were formed.

In the following evaluation standards, "A" shows that the adhesiveness of the cured film is most excellent. In addition, in the following evaluation standards, "A" and "B" are acceptable levels for practical use.

In the following evaluation standards, the proportion (%) of peeled lattices is a value obtained by the following equation. The total number of lattices in the following equation is 25.

$$\text{Proportion (\%) of peeled lattices} = [(\text{number of peeled lattices})/(\text{total number of lattices})] \times 100$$

-Evaluation Standards of Adhesiveness of Cured Film-

A: The proportion (%) of peeled lattices was 0%.
B: The proportion (%) of peeled lattices was higher than 0% and equal to or lower than 5%.
C: The proportion (%) of peeled lattices was higher than 5%.

(Jetting Properties of Colorless Ink)

As one of indices of dispersion stability of the colorless ink, evaluation was performed on jetting properties of the colorless ink.

The colorless ink obtained as above (within a day at room temperature after the preparation) was jetted from a head of an ink jet printer (SP-300V, manufactured by Roland DG Corporation) for 30 minutes (a first jetting), and then the jetting was stopped.

After predetermined minutes elapsed after the jetting was stopped, the colorless ink was jetted again from the aforementioned head onto a polyvinyl chloride (PVC) sheet (AVERY 400 GLOSS WHITE PERMANENT manufactured by AVERY DENNISON CORPORATION) as a substrate, thereby forming a 5 cm × 5 cm solid image.

By visually observing the obtained image, whether or not dead pixels occurred due to defective nozzles and the like was checked, and the jetting properties of the colorless ink were evaluated according to the following evaluation standards.

In the following evaluation standards, "A" shows that the jetting properties of the colorless ink are most excellent. In addition, in the following evaluation standards, "A", "B", and "C" are acceptable levels for practical use.

-Evaluation Standards of Jetting Properties of Colorless Ink-

A: In the jetting after a lapse of 5 minutes after the first jetting was stopped, the dead pixels occurring due to defective nozzles and the like were not observed, and an excellent image was obtained.
B: In the jetting after a lapse of 4 minutes after the first jetting was stopped, the dead pixels occurring due to defective nozzles and the like were not observed, and an excellent image was obtained, but in the jetting after a lapse of 5 minutes after the first jetting was stopped, the slight occurrence of the dead pixels was recognized to the extent that would not cause any problems in practical use.
C: In the jetting after a lapse of 3 minutes after the first jetting was stopped, the dead pixels occurring due to defective nozzles and the like were not observed, and an excellent image was obtained, but in the jetting after a lapse of 4 minutes after the first jetting was stopped, the slight occurrence of the dead pixels was recognized to the extent that would not cause any problems in practical use.
D: Even in the jetting performed within 3 minutes after the first jetting was stopped, the dead pixels occurred due to defective nozzles and the like, and the image did not have a level tolerable in practical use.

(Storage Stability of Colorless Ink)

As one of indices of dispersion stability of the colorless ink, evaluation was performed on storage stability of the colorless ink.

The above colorless ink was sealed in a container and 2 weeks elapsed at 60°C.

With respect to the colorless ink after a lapse of 2 weeks, an evaluation test that is the same as the evaluation

test on the jetting properties was carried out, and the storage stability of the colorless ink was evaluated according to the same evaluation standards.

In the above evaluation standards, "A" shows that the storage stability of the colorless ink is most excellent. In addition, in the above evaluation standards, "A", "B", and "C" are acceptable levels for practical use.

(Migration)

The colorless ink was jetted from a head of an ink jet printer (SP-300V, manufactured by Roland DG Corporation), and therefore a solid image (0.01 $m^2$ or larger) was formed on the polyvinyl chloride (PVC) sheet (AVERY 400 GLOSS WHITE PERMANENT manufactured by AVERY DENNISON CORPORATION) as a substrate. In this case, a concentration of solid image was adjusted so that an application amount of colorless ink became 15 g per 1 $m^2$.

The substrate on which the solid image was formed was cut to the size of 0.01 $m^2$, and 10 mL of a mixed liquid of water ethanol = 70:30 was added dropwise on a surface of the solid image of the cut substrate. The substrate on which the mixed liquid was added dropwise was put into a glass airtight container so that the dropwise added mixed liquid does not volatilize, and the substrate was left alone at 40°C for 10 days. After being left alone for 10 days, a total amount of elution (overall migration amount (OML)) of eluted components from the solid image into the dropwise added mixed liquid was measured so as to carry out evaluation according to the following evaluation standard. The measurement of the total amount of elution was carried out by measuring a mass of residual components obtained by allowing volatilization of the mixed liquid of water-ethanol which was left alone for 10 days.

In the following evaluation standard, "A" shows that the migration was most suppressed. In addition, in the following evaluation standards, "A", "B", and "C" are acceptable levels of the migration for practical use.

-Evaluation Standards of Migration of Colorless Ink-

A: The total amount of eluted components from the solid image was 10 ppb or less.
B: The total amount of eluted components from the solid image was more than 10 ppb and 50 ppb or less.
C: The total amount of eluted components from the solid image was more than 50 ppb and 100 ppb or less.
D: The total amount of eluted components from the solid image was more than 100 ppb and 2,000 ppb or less.
E: The total amount of eluted components from the solid image was more than 2,000 ppb.

[Table 5]

| | Microcapsule material (amount of unit: g) | | | | | | | | | | | | | | | | | Amount of nonionic group (N) (% by mass) | Amount of anionic group (A) (mmol /g; | A/N | Evaluation result | | | | |
|---|---|---|---|---|---|---|---|---|---|---|---|---|---|---|---|---|---|---|---|---|---|---|---|---|---|
| | Shell material | | | | | | | | | | Core material | | | | | | | | | | Pencil hardness | | Jetting properties: | Storage, stability | Migration |
| | Material for introducing nonionic group | | Material for introducing anionic group | | Other shell materials | | Material for introducing polymerizable group | | Material for introducing photopolymerization initiating group | | Polymerizable compound | | Photopolymerization initiator | | | | Resin | | | | | | | | |
| | Type | Amount | Type | Amount | D-110N | D-120N | Type | Amount | Type | Amount | SR 833S | SR 399E | TX | AB-2' | 921C | IRG819 | Polystyrene | | | | | | | | |
| Ref.-Example 1 | D-116N | 16.5 | Lysine | 3.3 | - | - | - | - | - | - | 10 | - | 1.8 | 1.8 | 3.5 | - | - | 14.4 | 0.79 | 0.055 | F | B | A | A | C |
| Ref.-Example 2 | D116N | 18.5 | Lysine | 1.9 | - | - | - | - | - | - | 10 | - | 1.8 | 1.8 | 3.5 | - | - | 16.4 | 0.46 | 0.028 | F | B | B | B | C |
| Ref.-Example 3 | D-116N | 9 | Lysine | 3.4 | - | - | - | - | - | - | 10 | - | 1.8 | 1.8 | 3.5 | - | - | 9.0 | 0.93 | 0.103 | F | B | B | B | C |
| Ref.-Example 4 | D-116N | 16.5 | β-Alanine | 3.3 | - | - | - | - | - | - | 10 | - | 1.8 | 1.8 | 3.5 | - | - | 14.4 | 1.29 | 0.090 | F | B | A | A | C |
| Ref.-Example 5 | -116N | 16.5 | Lysine | 3.3 | - | - | - | - | - | - | 5 | 5 | 1.8 | 1.8 | 3.5 | - | - | 14.4 | 0.79 | 0.055 | 2H | A | A | A | C |
| Ref.-Example 6 | D-4000 | 4 | Lysine | 3.3 | 7.5 | - | - | - | - | - | 10 | - | 1.8 | 1.8 | 3.5 | - | - | 13.3 | 0.75 | 0.056 | F | B | A | B | C |
| Ref.-Example 7 | D-H6N | 6.4 | COOH-NCO-1 | 5.1 | - | 4.6 | - | - | - | - | 5 | 5 | - | | - | 0.5 | - | 8.4 | 0.34 | 0.040 | 2H | A | A | B | C |
| Ref.-Example 8 | D-116N | 16.5 | Taurine | 2.1 | - | - | - | - | - | - | 10 | - | 1.8 | 1.8 | 3.5 | - | - | 15.0 | 0.61 | 0.041 | F | B | B | B | C |
| Ref.-Example 9 | D-116N | 16.5 | EAP | 2.8 | - | - | - | - | - | - | 10 | - | 1.8 | 1.8 | 3.5 | - | - | 14.7 | 1.41 | 0.096 | F | B | B | B | C |

(continued)

| | Microcapsule material (amount of unit: g) | | | | | | | | | | | | | | | | | Amount of nonionic group (N)(% by mass) | Amount of anionic group (A) (mmol/g; | A/N | Evaluation result | | | | |
|---|---|---|---|---|---|---|---|---|---|---|---|---|---|---|---|---|---|---|---|---|---|---|---|---|---|
| | Shell material | | | | | | | | | | Core material | | | | | | | | | | Pencil hardness | | Jetting properties: | Storage, stability | Migration |
| | Material for introducing nonionic group | | Material for introducing anionic group | | Other shell materials | | Material for introducing polymerizable group | | Material for introducing photopolymerization initiating group | | Polymerizable compound | | Photopolymerization initiator | | | | Resin | | | | | | | | |
| | Type | Amount | Type | Amount | D-110N | D-120N | Type | Amount | Type | Amount | SR 833S | SR 399E | TX | AB-2' | 921 C | IRG819 | Polystyrene | | | | | | | | |
| Ref.-Example 10 | D-116N | 6.4 | COOH-NCO-2 | 5.1 | - | 4.6 | - | - | - | - | 5 | 5 | - | - | - | 0.5 | - | 8.4 | 0.33 | 0.039 | 2H | A | A | B | C |
| Ref.-Example. 11 | D-U6N | 6.4 | COOH-NCO-3 | 5.1 | - | 4.6 | - | - | - | - | 5 | 5 | - | - | - | 0.5 | - | 8.4 | 0.31 | 0.037 | 2H | A | A | B | C |
| Ref.-Example 12 | . 116N | 16.5 | Lysine | 3.3 | - | | - CC-NCO-1 | 7.5 | - | - | 10 | - | 1.8 | 1.8 | 3.5 | - | - | 13.2 | 0.72 | 0.055 | F | B | A | A | B |
| Example 13 | D-116N | 16.5 | Lysine | 3.3 | - | | - CC-NCO-1 | 7.5 | INI-NCO-a | 20 | 10 | - | - | - | - | - | - | 13.2 | 0.72 | 0.055 | F | B | A | A | A |
| Ref. = Reference | | | | | | | | | | | | | | | | | | | | | | | | | |

[Table 6]

| | Microcapsule material (amount of unit: g) | | | | | | | | | | | | | | | | | Amount of nonionic group (N)(% by mass) | Amount of anionic group (A) (mmol/g) | A/N | Evaluation result | | | | |
|---|---|---|---|---|---|---|---|---|---|---|---|---|---|---|---|---|---|---|---|---|---|---|---|---|---|
| | Shell material | | | | | | | | | | Core material | | | | | | | | | | Pencil hardness | Adhesiveness | Jetting properties | Storage stability | Migration |
| | Material for introducing nonionic group | | Material for introducing anionic group | | Other shell materials | | Material for introducing polymerizable group | | Material for introducing photopolymerization initiating group | | Polymerizable compound | | Photopolymerization initiator | | | | Resin | | | | | | | | |
| | Type | Amount | Type | Amount | D-110N | D-120N | Type | Amount | Type | Amount | SR833S | SR399E | TX | AB-2 | 9210[1] | IRG819 | Polystyrene | | | | | | | | |
| Ref.-Example 14 | D-116N | 6.4 | COOH-NCO-1 | 5.1 | - | 4.6 | CC-NCO-1 | 25 | - | - | - | - | - | - | - | 0.5 | - | 9.0 | 0.36 | 0.040 | F | B | A | B | B |
| Ref.-Example 15 | D-116N | 6.4 | COOH-NCO-1 | 5.1 | - | 4.6 | CC-NCO-2 | 25 | - | - | - | - | - | - | - | 0.5 | - | 9.0 | 0.36 | 0.040 | F | B | A | B | B |
| Ref.-Example 16 | D-116N | 6.4 | COOH-NCO-1 | 5.1 | - | 4.6 | CC-NCO-3 | 25 | - | - | - | - | - | - | - | 0.5 | - | 9.0 | 0.36 | 0.040 | F | B | A | B | B |
| Ref.-Example 17 | D-116N | 6.4 | COOH-NCO-1 | 5.1 | - | 4.6 | CC-NCO-4 | 25 | - | - | - | | | | - | 0.5 | - | 9.0 | 0.36 | 0.040 | F | B | A | B | B |
| Ref.-Example 18 | D-116N | 6.4 | COOH-NCO-1 | 5.1 | - | 4.6 | CC-NCO-5 | 25 | . | - | - | - | - | - | - | 0.5 | - | 9.0 | 0.36 | 0.040 | F | B | A | B | B |
| Example 19 | D-116N | 6.4 | COOH-NCO-1 | 5.1 | - | 4.6 | CC-NCO-1 | 10 | INI-NCO-a | 1 | - | - | - | - | - | - | 5 | 9.3 | 0.37 | 0.040 | F | B | A | B | A |

(continued)

| | Microcapsule material (amount of unit: g) | | | | | | | | | | | | | | | | | | Amount of nonionic group (N)(% by mass) | Amount of anionic group (A) (mmol/g) | A/N | Evaluation result | | | | |
|---|---|---|---|---|---|---|---|---|---|---|---|---|---|---|---|---|---|---|---|---|---|---|---|---|---|---|
| | Shell material | | | | | | | | | | Core material | | | | | | | | | | | | | | | |
| | Material for introducing nonionic group | | Material for introducing anionic group | | Other shell materials | | Material for introducing polymerizable group | | Material for introducing photopolymerization initiating group | | Polymerizable compound | | Photopolymerization initiator | | | | Resin | | | | | Pencil hardness | Adhesiveness | Jetting properties | Storage stability | Migration |
| | Type | Amount | Type | Amount | D-110N | D-120N | Type | Amount | Type | Amount | SR833S | SR399E | TX | AB-2 | 9210[1] | IRG819 | Polystyrene | | | | | | | | |
| Example 20 | D-116N | 6.4 | COOH-NCO-1 | 5.1 | - | 4.6 | CC-NCO-2 | 10 | INI-NCO-b | 1 | - | - | - | - | - | - | 5 | 9.3 | 0.37 | 0.040 | F | B | A | B | A |
| Example 21 | D-116N | 6.4 | COOH-NCO-1 | 5.1 | - | 4.6 | CC-NCO-3 | 10 | INI-NCO-c | 1 | - | - | - | - | - | - | 5 | 9.3 | 0.37 | 0.040 | F | B | A | B | A |
| Example 22 | D-116N | 6.4 | COOH-NCO-1 | 5.1 | - | 4.6 | CC-NCO-4 | 10 | INI-NCO-d | 1 | - | - | - | - | - | - | 5 | 9.3 | 0.37 | 0.040 | F | B | A | B | A |
| Example 23 | D-116N | 6.4 | COOH-NCO-1 | 5.1 | - | 4.6 | CC-NCO-5 | 10 | INI-NCO-e | 1 | - | - | - | - | - | - | 5 | 9.3 | 0.37 | 0.040 | F | B | A | B | A |
| Example 24 | D-116N | 6.4 | COOH-NCO-2 | 5.1 | - | 4.6 | CC-NCO-1 | 10 | INI-NCO-a | 1 | - | - | - | - | - | - | 5 | 9.3 | 0.36 | 0.039 | F | B | A | B | A |
| Ref.-Example 25 | D-116N | 16.5 | Lysine | 3.3 | - | - | - | - | - | - | - | 10 | 1.8 | 1.8 | 3.5 | - | - | 14.4 | 0.79 | 0.055 | 2H | B | A | A | C |

(continued)

| | Microcapsule material (amount of unit: g) | | | | | | | | | | | | | | | | | Amount of nonionic group (N)(% by mass) | Amount of anionic group (A) (mmol/g) | A/N | Evaluation result | | | | |
|---|---|---|---|---|---|---|---|---|---|---|---|---|---|---|---|---|---|---|---|---|---|---|---|---|---|
| | Shell material | | | | | | | | | | Core material | | | | | | | | | | Pencil hardness | Adhesiveness | Jetting properties | Storage stability | Migration |
| | Material for introducing nonionic group | | Material for introducing anionic group | | Other shell materials | | Material for introducing polymerizable group | | Material for introducing photopolymerization initiating group | | Polymerizable compound | | Photopolymerization initiator | | | | Resin | | | | | | | | |
| | Type | Amount | Type | Amount | D-110N | D-120N | Type | Amount | Type | Amount | SR 833S | SR399E | TX | AB-2 | 9210[1] | IRG819 | Polystyrene | | | | | | | | |
| Comparative example 1 | - | . | Lysine | 3.3 | 11 | - | - | - | - | - | 10 | - | 1.8 | 1.8 | 3.5 | - | - | 0.0 | 0.79 | - | F | C | C | c | c |
| Comparative example 2 | - | - | Lysine | 3.3 | 11 | - | - | - | - | - | 5 | 5 | 1.8 | 1.8 | 3.5 | - | - | 0.0 | 0.79 | - | H | A | C | C | C |
| Ref. = Reference | | | | | | | | | | | | | | | | | | | | | | | | | |

As shown in Table 5 and Table 6, in Examples 13 and 19 to 24, Reference Examples 1 to 12, 14 to 18, and 25, using the aqueous dispersion including: the microcapsule that has the shell having the three-dimensional cross-linked structure containing at least one bond selected from a urethane bond and a urea bond and the anionic group and the nonionic group as a hydrophilic group, and has the core, in which at least one of a condition that the shell has the photopolymerization initiating group or a condition that the core contains the photopolymerization initiator is satisfied, and in which at least one of the shell or the core has the polymerizable group; and including water, the pencil hardness of the cured film was excellent, and the jetting properties and the storage stability (that is, dispersion stability of the aqueous dispersion) were excellent.

With respect to the above results, the jetting properties and storage stability (that is, the dispersion stability of the aqueous dispersion) decreased in Comparative Examples 1 and 2 in which the three-dimensional cross-linked structure of the shell does not have the nonionic group.

In addition, it was understood from the comparison between Reference Examples 1, 4, 8, and 9 that in the case in which the anionic group of the shell is was a carboxy group (Reference Examples 1 and 4), the dispersion stability of the aqueous dispersion was excellent compared to the case in which the anionic group of the shell was a sulfo group or a phosphoric acid group (Reference Examples 8 and 9).

In addition, it was understood from the comparison between Reference Examples 5 and 6 that in the case in which the nonionic group of the shell was the group (W) which is a monovalent nonionic group (Reference Example 5 using D-116N), the dispersion stability of the aqueous dispersion was excellent compared to the case in which the nonionic group of the shell was a polyethylene glycol group which is a divalent nonionic group (Reference Example 6 using D-4000).

In addition, it was understood from the comparison between Reference Examples 1 and 5 that in the case in which the core contains the di- or lower functional polymerizable compound (SR833S) and the tri- or higher functional polymerizable compound (SR399E) (Reference Example 5), the pencil hardness of the cured film was excellent compared to the case in which the core only contains the di- or lower functional polymerizable compound (SR833S).

In addition, it was understood from the comparison between Reference Examples 5 and 25 that in the case in which the core contains the di- or lower functional polymerizable compound (SR833S) and the tri- or higher functional polymerizable compound (SR399E) (Reference Example 5), the adhesiveness of the cured film to the substrate was excellent compared to the case in which the core only contains the tri- or higher functional polymerizable compound (SR399E) (Reference Example 25).

In addition, it was understood from the comparison between Reference Examples 14 to 18 and Examples 19 to 24 that in the case in which the three-dimensional cross-linked structure of the shell has the polymerization initiating group (Examples 19 to 24), the effect of suppressing the migration in the cured film was excellent compared to the case in which the three-dimensional cross-linked structure of the shell did not have the polymerization initiating group (Reference Examples 14 to 18).

[Reference Examples 101 to 107]

<Preparation of Coloring Ink>

A coloring ink was manufactured as an ink jet ink by using each of the aqueous dispersions having the microcapsules of Reference Examples 1 and 5.

In more details, each of components shown in Table 7 was mixed, and therefore the coloring ink was manufactured.

The manufactured coloring ink is also an aspect of the aqueous dispersion having the microcapsule, but the term "coloring ink" referred herein is distinguished from the aqueous dispersions having the microcapsules of which each was manufactured in each example and reference example above.

The manufactured coloring ink was evaluated in the same manner as each of the evaluations of the adhesiveness, the jetting properties, and the storage stability, which were carried out on the above colorless ink. The results are shown in Table 7.

[Table 7]

| | Component of coloring ink (amount of unit: g) | | | | | | | | | | | | | Evaluation result of coloring ink | | |
|---|---|---|---|---|---|---|---|---|---|---|---|---|---|---|---|---|
| | Aqueous dispersion having microcapsule | | Pigment dispersion | | Nonionic surfactant | | Anionic surfactant | | Other additives | | Solvent | | Water | Adhesiveness | Jetting properties | Storage stability |
| | Tvpe | Amount | Type | Amount | Type | Amount | Type | Amount | Type | Amount | Type | Amount | | | | |
| Ref.-Example 101 | Ref.-Example 1 | 34.3 | CAB-O-JET 450 CYAN PIGMENT | 10 | CAPSTONE FS-3100 | 0.45 | - | - | TEGO TWIN 4000 | 0.15 | Glycerin | 5 | 50.1 | B | A | A |
| Ref.-Example 102 | Ref.-Example 1 | 34.3 | CAB-O-JET 450 CYAN PIGMENT | 10 | - | - | ALKANOL XC | 1 | - | - | Glycerin | 5 | 49.7 | B | B | A |
| Ref.-Example 103 | Ref.-Example 1 | 34.3 | CAB-O-JET 450 CYAN PIGMENT | 10 | - | - | ALKANOL XC | 1.5 | - | - | Glycerin | 5 | 49.2 | B | B | B |
| Ref.-Example 104 | Ref.-Example 5 | 82 | PRO-JET CYAN APD1000 | 13 | CAPSTONE FS-31 | 0.3 | - | - | - | - | 2-Methylpropanedio | 4.7 | - | B | A | A |
| Ref.-Example 105 | Ref.-Example 5 | 82 | PRO-JET CYAN APD1000 | 13 | CAPSTONE FS-31 | 0.3 | Sodium dodecyl sulfate | 0.4 | - | - | 2-Methylpropanediol | 4.3 | - | B | B | A |
| Ref.-Example 106 | Ref.-Example 5 | 82 | PRO-JET CYAN APD1000 | 13 | CAPSTONE FS-31 | 0.3 | LAVELIN FP | 0.3 | - | - | 2-Methylpropanediol | 4.4 | - | B | B | A |
| Ref.-Example 107 | Ref.-Example 5 | 82 | PRO-JET CYAN APD1000 | 13 | CAPSTONE FS-31 | 0.3 | Sodium dodecyl sulfate | 1.5 | - | - | 2-Methylpropanedio | 3.2 | - | B | B | B |

Ref. = Reference

-Explanation of Table 7-

- Cab-o-jet 450C Cyan pigment: An anionic self-dispersing cyan pigment dispersion (concentration of solid contents: 15% by mass, solvent: water) manufactured by Cabot Corporation
- Pro-jet Cyan APD 1000: Cyan pigment dispersion (concentration of solid contents: 14% by mass, solvent: water) manufactured by FUJIFILM Imaging Colorants Limited.
- Capstone FS-3100: Fluorine-based surfactant (nonionic surfactant) (concentration of solid contents: 100% by mass) manufactured by DuPont.
- Capstone FS-31: Fluorine-based surfactant (nonionic surfactant) (concentration of solid contents: 25% by mass, solvent: water) manufactured by DuPont.
- Alkanol XC: Anionic surfactant (concentration of solid contents: 100% by mass) manufactured by DuPont.
- LAVELIN FP: Anionic surfactant (concentration of solid contents: 100% by mass) manufactured by DKS Co. Ltd.
- Tego Twin 4000: Siloxane-based additive (concentration of solid contents: 100% by mass) manufactured by Evonik Degussa Japan Co., Ltd.

As shown in Table 7, in each of Reference Examples 101 to 107, the results of each of the evaluations of the adhesiveness, the jetting properties, and the storage stability were excellent.

In particular, among Reference Examples 101, 102, and 104 to 106 in which the content of the anionic surfactant was 1% by mass or less, the storage stability was particularly excellent.

## Claims

**1.** An aqueous dispersion comprising a microcapsule and water, the microcapsule comprising:

a shell having a three-dimensional cross-linked structure comprising: at least one bond selected from the group consisting of a urethane bond and a urea bond; and an anionic group and a nonionic group as hydrophilic groups; and
a core,
the nonionic group being a monovalent group having a polyether structure,
the shell comprising a photopolymerization initiating group that is a residue obtained by removal of at least one hydrogen atom from at least one active hydrogen group of a photopolymerization initiator having an at least one active hydrogen group, the active hydrogen group being a hydroxyl group, a primary amino group, a secondary amino group, or a mercapto group, and
at least one of the shell comprising a polymerizable group or the core comprising a polymerizable compound being satisfied.

**2.** The aqueous dispersion according to claim 1, wherein the nonionic group is a group (W) represented by the following Formula (W):

$$*\left(R^{W1}-O\right)_{nw}R^{W2} \qquad \text{Formula (W)}$$

wherein, in Formula (W), $R^{W1}$ represents an alkylene group having from 1 to 6 carbon atoms that may be branched, $R^{W2}$ represents a branched or unbranched alkyl group having from 1 to 6 carbon atoms, nw represents an integer from 2 to 200, and * represents a binding position.

**3.** The aqueous dispersion according to claim 1 or 2, wherein the three-dimensional cross-linked structure contains at least one structure represented by the following Formulae (X1) to (X4):

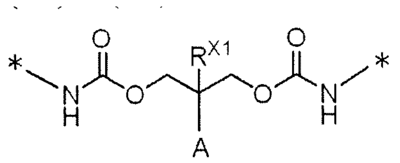

Formula (X1)

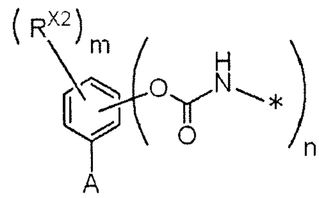

Formula (X2)

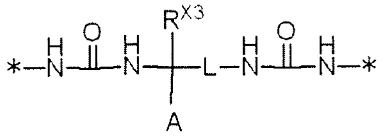

Formula (X3)

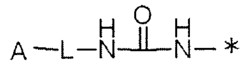

Formula (X4)

wherein, in Formula (X1), $R^{X1}$ represents a hydrogen atom or an alkyl group having from 1 to 10 carbon atoms, A represents an anionic group, and * represents a binding position;
wherein, in Formula (X2), $R^{X2}$ represents an alkyl group having from 1 to 10 carbon atoms, A represents an anionic group, n represents an integer from 1 to 5, m represents an integer from 0 to 4, a total of m and n is an integer from 1 to 5, and * represents a binding position;
wherein, in Formula (X3), $R^{X3}$ represents a hydrogen atom or an alkyl group having from 1 to 10 carbon atoms, A represents an anionic group, L represents a divalent linking group, and * represents a binding position; and
wherein, in Formula (X4), A represents an anionic group, L represents a divalent linking group, and * represents a binding position.

**4.** The aqueous dispersion according to any one of claims 1 to 3, wherein the anionic group is at least one of a carboxy group or a salt of a carboxy group.

**5.** The aqueous dispersion according to any one of claims 1 to 4, wherein an amount of the nonionic group is from 1% by mass to 20% by mass with respect to a total solid content of the microcapsule.

**6.** The aqueous dispersion according to any one of claims 1 to 5, wherein an amount of the anionic group per 1g of a total solid content of the microcapsule is from 0.2 mmol/g to 1.5 mmol/g.

**7.** The aqueous dispersion according to any one of claims 1 to 6, wherein, in a case in which an amount of the nonionic group is N% by mass with respect to a total solid content of the microcapsule, and an amount of the anionic group per 1g of the total solid content of the microcapsule is A mmol/g, a ratio of A to N is 0.02 to 0.15.

**8.** The aqueous dispersion according to any one of claims 1 to 7, wherein the core comprises a photopolymerization initiator.

**9.** The aqueous dispersion according to claim 8, wherein the photopolymerization initiator comprised in the core is at least one compound selected from the group consisting of a carbonyl compound and an acylphosphine oxide compound.

**10.** The aqueous dispersion according to any one of claims 1 to 9, wherein the core contains a di- or lower functional polymerizable compound and a tri- or higher functional polymerizable compound.

**11.** The aqueous dispersion according to any one of claims 1 to 10, wherein a content of an anionic surfactant is 1% by mass or less with respect to a total amount of the aqueous dispersion.

**12.** The aqueous dispersion according to any one of claims 1 to 11, wherein a total solid content of the microcapsule is 50% by mass or more with respect to a total solid content of the aqueous dispersion.

**13.** Use of the aqueous dispersion according to any one of claims 1 to 12 as an ink jet ink.

**14.** A method for manufacturing the aqueous dispersion according to any one of claims 1 to 12, the method comprising

a microcapsule-forming step including:

mixing an oil-phase component with a water-phase component comprising water, the oil-phase component comprising: an organic solvent; a tri- or higher functional isocyanate compound; an isocyanate compound into which the photopolymerization initiating group is introduced; and at least one of an isocyanate compound into which the polymerizable group is introduced or the polymerizable compound; and
emulsifying the mixture so as to form the microcapsule,
at least one of the oil-phase component comprising an isocyanate compound into which the nonionic group is introduced or at least one of the oil-phase component or the water-phase component comprising a compound having the nonionic group and an active hydrogen group that is a hydroxyl group, a primary amino group, a secondary amino group, or a mercapto group being satisfied, and
at least one of the oil-phase component comprising an isocyanate compound into which the anionic group is introduced or at least one of the oil-phase component or the water-phase component comprising a compound having the anionic group and an active hydrogen group that is a hydroxyl group, a primary amino group, a secondary amino group, or a mercapto group being satisfied.

**15.** An image forming method comprising:

an application step of applying the aqueous dispersion according to any one of claims 1 to 12 onto a recording medium; and
an irradiation step of irradiating the aqueous dispersion applied onto the recording medium with active energy rays.

## Patentansprüche

**1.** Wässrige Dispersion aufweisend eine Mikrokapsel und Wasser, wobei die Mikrokapsel aufweist:

eine Schale mit einer dreidimensional vernetzten Struktur, aufweisend: mindestens eine Bindung, die ausgewählt ist aus der aus einer Urethan-Bindung und einer Harnstoff-Bindung bestehenden Gruppe; und eine anionische Gruppe und eine nicht-ionische Gruppe als hydrophile Gruppen; und
einen Kern,
wobei die nicht-ionische Gruppe eine monovalente Gruppe mit einer Polyether-Struktur ist,
die Schale eine Photopolymerisation auslösende Gruppe aufweist, die ein durch Entfernen mindestens eines Wasserstoffatoms von mindestens einer aktiven Wasserstoffgruppe eines Photopolymerisations-Initiators mit mindestens einer aktiven Wasserstoffgruppe erhaltener Rest ist, wobei die aktive Wasserstoffgruppe eine Hydroxylgruppe, eine primäre Aminogruppe, eine sekundäre Aminogruppe oder eine Mercaptogruppe ist, und wobei
erfüllt ist, dass die Schale eine polymerisierbare Gruppe aufweist und/oder der Kern eine polymerisierbare Verbindung aufweist.

**2.** Wässrige Dispersion nach Anspruch 1, wobei die nicht-ionische Gruppe eine Gruppe (W) ist, die repräsentiert wird durch die folgende Formel (W):

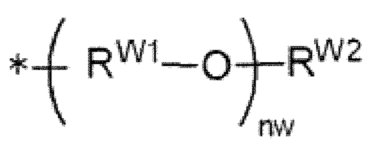

Formel (W)

wobei, in Formel (W), $R^{W1}$ eine Alkylengruppe mit von 1 bis 6 Kohlenstoffatomen, die verzweigt sein kann, repräsentiert, $R^{W2}$ eine verzweigte oder unverzweigte Alkylgruppe mit von 1 bis 6 Kohlenstoffatomen repräsentiert, nw eine ganze Zahl von 2 bis 200 repräsentiert, und * eine Bindungsposition repräsentiert.

**3.** Wässrige Dispersion nach Anspruch 1 oder 2, wobei die dreidimensional vernetzte Struktur mindestens eine Struktur enthält, die repräsentiert wird durch die folgenden Formeln (X1) bis (X4):

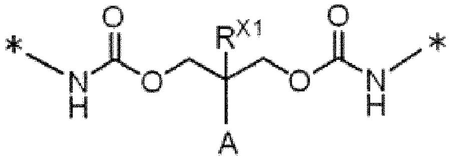

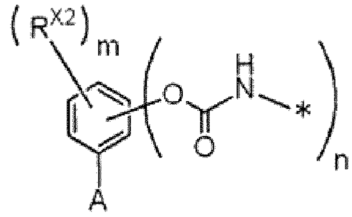

Formel (X1)

Formel (X2)

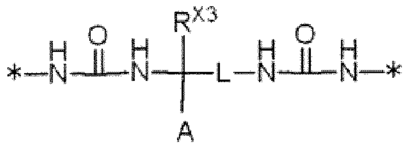

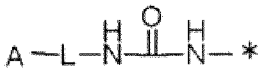

Formel (X3)

Formel (X4)

wobei, in Formel (X1), $R^{X1}$ ein Wasserstoffatom oder Alkylgruppe mit von 1 bis 10 Kohlenstoffatomen repräsentiert, A eine anionische Gruppe repräsentiert, und * eine Bindungsposition repräsentiert;
wobei, in Formel (X2), $R^{X2}$ eine Alkylgruppe mit von 1 bis 10 Kohlenstoffatomen repräsentiert, A eine anionische Gruppe repräsentiert, n eine ganze Zahl von 1 bis 5 repräsentiert, m eine ganze Zahl von 0 bis 4 repräsentiert, die Summe von m und n eine ganze Zahl von 1 bis 5 ist, und * eine Bindungsposition repräsentiert;
wobei, in Formel (X3), $R^{X3}$ ein Wasserstoffatom oder eine Alkylgruppe mit von 1 bis 10 Kohlenstoffatomen repräsentiert, A eine anionische Gruppe repräsentiert, L eine bivalente Verbindungsgruppe repräsentiert, und * eine Bindungsposition repräsentiert; und
wobei, in Formel (X4), A eine anionische Gruppe repräsentiert, L eine bivalente Verbindungsgruppe repräsentiert, und * eine Bindungsposition repräsentiert.

4. Wässrige Dispersion nach einem der Ansprüche 1 bis 3, wobei die anionische Gruppe eine Carboxylgruppe und/oder ein Salz einer Carboxylgruppe ist.

5. Wässrige Dispersion nach einem der Ansprüche 1 bis 4, wobei eine Menge der nicht-ionischen Gruppe von 1 Masse% bis 20 Masse%, bezogen auf einen Gesamtfeststoffgehalt der Mikrokapsel, beträgt.

6. Wässrige Dispersion nach einem der Ansprüche 1 bis 5, wobei eine Menge der anionischen Gruppe pro 1g eines Gesamtfeststoffgehalts der Mikrokapsel von 0,2 mmol/g bis 1,5 mmol/g beträgt.

7. Wässrige Dispersion nach einem der Ansprüche 1 bis 6, wobei in einem Fall, in dem eine Menge der nicht-ionischen Gruppe N Masse% bezogen auf einen Gesamtfeststoffgehalt der Mikrokapsel beträgt, und eine Menge der anionischen Gruppe pro 1g des Gesamtfeststoffgehalts der Mikrokapsel A mmol/g beträgt, ein Verhältnis von A zu N 0,02 bis 0,15 beträgt.

8. Wässrige Dispersion nach einem der Ansprüche 1 bis 7, wobei der Kern einen Photopolymerisations-Initiator aufweist.

9. Wässrige Dispersion nach Anspruch 8, wobei der in dem Kern enthaltene Photopolymerisations-Initiator mindestens eine Verbindung ist, die ausgewählt ist aus der Gruppe, die aus einer Carbonylverbindung und einer Acylphosphinoxid-Verbindung besteht.

10. Wässrige Dispersion nach einem der Ansprüche 1 bis 9, wobei der Kern eine bifunktionelle oder niedrigerfunktionelle polymerisierbare Verbindung und eine trifunktionelle oder höherfunktionelle polymerisierbare Verbindung enthält.

11. Wässrige Dispersion nach einem der Ansprüche 1 bis 10, wobei ein Gehalt an einem anionischen grenzflächenaktiven Mittel 1 Masse% oder weniger, bezogen auf eine Gesamtmenge der wässrigen Dispersion, beträgt.

**12.** Wässrige Dispersion nach einem der Ansprüche 1 bis 11, wobei ein Gesamtfeststoffgehalt der Mikrokapsel 50 Masse% oder mehr, bezogen auf einen Gesamtfeststoffgehalt der wässrigen Dispersion, beträgt.

**13.** Verwendung der wässrigen Dispersion nach einem der Ansprüche 1 bis 12 als eine Tintenstrahltinte.

**14.** Verfahren zur Herstellung der wässrigen Dispersion nach einem der Ansprüche 1 bis 12, wobei das Verfahren einen Mikrokapsel-Bildungsschritt aufweist, umfassend:

Mischen einer Ölphasen-Komponente mit einer Wasserphasen-Komponente, die Wasser aufweist, wobei die Ölphasen-Komponente aufweist: ein organisches Lösungsmittel; eine trifunktionelle oder höherfunktionelle Isocyanat-Verbindung; eine Isocyanat-Verbindung, in die die Photopolymerisation auslösende Gruppe eingeführt ist; und eine Isocyanat-Verbindung, in die die polymerisierbare Gruppe eingeführt ist und/oder die polymerisierbare Verbindung; und
Emulgieren des Gemisches, um die Mikrokapsel zu bilden,
wobei erfüllt ist, dass die Ölphasen-Komponente, die eine Isocyanat-Verbindung aufweist, in die die nicht-ionische Gruppe eingeführt ist, und/oder mindestens eine der Komponenten Ölphasen-Komponente oder Wasserphasen-Komponente eine Verbindung mit der nicht-ionischen Gruppe und einer aktiven Wasserstoffgruppe, die eine Hydroxylgruppe, eine primäre Aminogruppe, eine sekundäre Aminogruppe oder eine Mercaptogruppe ist, aufweist, und wobei
erfüllt ist, dass die Ölphasen-Komponente, die eine Isocyanat-Verbindung aufweist, in die die anionische Gruppe eingeführt ist, und/oder mindestens eine der Komponenten Ölphasen-Komponente oder Wasserphasen-Komponente eine Verbindung mit der anionischen Gruppe und einer aktiven Wasserstoffgruppe, die eine Hydroxylgruppe, eine primäre Aminogruppe, eine sekundäre Aminogruppe oder eine Mercaptogruppe ist, aufweist.

**15.** Bilderzeugungsverfahren aufweisend:

einen Auftragungsschritt des Auftragens der wässrigen Dispersion nach einem der Ansprüche 1 bis 12 auf ein Aufzeichnungsmedium; und
einen Bestrahlungsschritt des Bestrahlens der auf das Aufzeichnungsmedium aufgetragenen wässrigen Dispersion mit Strahlen wirksamer Energie.

## Revendications

**1.** Dispersion aqueuse, comprenant une microcapsule et de l'eau, la microcapsule comprenant :

une enveloppe présentant une structure réticulée tridimensionnelle comprenant : au moins une liaison sélectionnée parmi le groupe consistant en une liaison uréthane et une liaison urée, et un groupe anionique et un groupe non ionique comme groupes hydrophiles, et
un cœur,
le groupe non ionique étant un groupe monovalent présentant une structure polyéther,
l'enveloppe comprenant un groupe d'initialisation de photopolymérisation, lequel est un résidu obtenu suite au retrait d'au moins un atome d'hydrogène dans au moins un groupe d'hydrogène actif d'un initiateur de photopolymérisation présentant au moins un groupe d'hydrogène actif, le groupe d'hydrogène actif étant un groupe hydroxyle, un groupe amino primaire, un groupe amino secondaire, ou un groupe mercapto, et
au moins une condition étant satisfaite parmi l'enveloppe comprenant un groupe polymérisable ou le cœur comprenant un composé polymérisable.

**2.** Dispersion aqueuse selon la revendication 1, dans laquelle le groupe non ionique est un groupe (W) représenté par la formule suivante (W) :

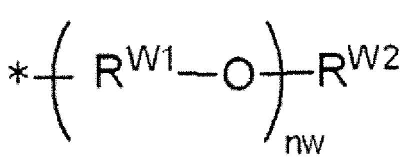

Formula (W)

où dans la formule (W), $R^{W1}$ représente un groupe alkylène présentant de 1 à 6 atomes de carbone pouvant être ramifiés ; $R^{W2}$ représente un groupe alkyle ramifié ou non ramifié présentant de 1 à 6 atomes de carbone ; nw représente un entier allant de 2 à 200, et * représente une position de liaison.

**3.** Dispersion aqueuse selon la revendication 1 ou 2, dans laquelle la structure réticulée tridimensionnelle contient au moins une structure représentée par les formules (X1) à (X4) suivantes :

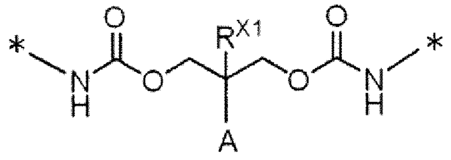

Formula (X1)

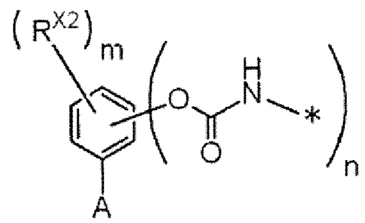

Formula (X2)

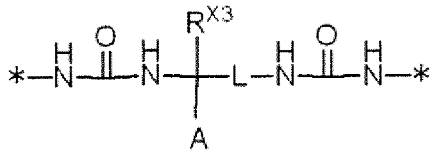

Formula (X3)

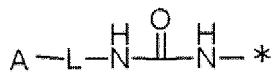

Formula (X4)

où dans la formule (X1), $R^{X1}$ représente un atome d'hydrogène ou un groupe alkyle présentant de 1 à 10 atomes de carbone ; A représente un groupe anionique, et * représente une position de liaison ;
dans laquelle dans la formule (X2), $R^{X2}$ représente un groupe alkyle présentant de 1 à 10 atomes de carbone ; A représente un groupe anionique ; n représente un entier allant de 1 à 5 ; m représente un entier allant de 0 à 4 ; m et n sont au total un entier allant de 1 à 5, et * représente une position de liaison ;
dans laquelle dans la formule (X3), $R^{X3}$ représente un atome d'hydrogène ou un groupe alkyle présentant de 1 à 10 atomes de carbone ; A représente un groupe anionique, L représente un groupe de liaison divalent, et * représente une position de liaison, et
dans laquelle dans la formule (X4), A représente un groupe anionique ; L représente un groupe de liaison divalent, et * représente une position de liaison.

**4.** Dispersion aqueuse selon l'une quelconque des revendications 1 à 3, dans laquelle le groupe anionique est au moins un groupe parmi un groupe carboxy ou un sel d'un groupe carboxy.

**5.** Dispersion aqueuse selon l'une quelconque des revendications 1 à 4, dans laquelle une quantité du groupe non ionique s'étend de 1 % en masse à 20 % en masse par rapport à une teneur en matière sèche totale de la microcapsule.

**6.** Dispersion aqueuse selon l'une quelconque des revendications 1 à 5, dans laquelle une quantité du groupe anionique pour 1 g d'une teneur en matière sèche totale de la microcapsule s'étend de 0,2 mmol/g à 1,5 mmol/g.

**7.** Dispersion aqueuse selon l'une quelconque des revendications 1 à 6, dans laquelle dans un cas où une quantité du groupe non ionique est N % en masse par rapport à une teneur en matière sèche totale de la microcapsule et une quantité du groupe anionique pour 1 g de la teneur en matière sèche totale de la microcapsule font A mmol/g, un rapport de A à N s'étend de 0,02 à 0,15.

**8.** Dispersion aqueuse selon l'une quelconque des revendications 1 à 7, dans laquelle le cœur comprend un initiateur de photopolymérisation.

**9.** Dispersion aqueuse selon la revendication 8, dans laquelle l'initiateur de photopolymérisation compris dans le cœur est au moins un composé sélectionné parmi le groupe consistant en un composé carbonyle et un composé oxyde d'acylphosphine.

**10.** Dispersion aqueuse selon l'une quelconque des revendications 1 à 9, dans laquelle le cœur contient un composé polymérisable bifonctionnel ou de fonctionnalité inférieure et un composé polymérisable trifonctionnel ou de fonctionnalité supérieure.

**11.** Dispersion aqueuse selon l'une quelconque des revendications 1 à 10, dans laquelle une teneur en surfactant anionique est inférieure ou égale à 1 % en masse par rapport à une quantité totale de la dispersion aqueuse.

**12.** Dispersion aqueuse selon l'une quelconque des revendications 1 à 11, dans laquelle une teneur en matière sèche totale de la microcapsule est supérieure ou égale à 50 % en masse par rapport à une teneur en matière sèche totale de la dispersion aqueuse.

**13.** Utilisation de la dispersion aqueuse selon l'une quelconque des revendications 1 à 12, comme encre pour jet d'encre.

**14.** Procédé destiné à fabriquer la dispersion aqueuse selon l'une quelconque des revendications 1 à 12, le procédé comprenant une étape de formation de microcapsule incluant les étapes consistant à :

mélanger un composant en phase huileuse avec un composant en phase aqueuse comprenant de l'eau, le composant en phase huileuse comprenant : un solvant organique, un composé isocyanate trifonctionnel ou de fonctionnalité supérieure ; un composé isocyanate, où est introduit un groupe d'initialisation de photopolymérisation, et au moins un composé parmi un composé isocyanate, où est introduit le groupe polymérisable, ou le composé polymérisable, et
réaliser une émulsification du mélange afin de former la microcapsule ;
au moins une condition étant satisfaite parmi le composant en phase huileuse comprenant un composé isocyanate, où le groupe non ionique est introduit, ou au moins un composant parmi le composant en phase huileuse ou le composant en phase aqueuse comprenant un composé présentant le groupe non ionique et un groupe d'hydrogène actif, lequel est un groupe hydroxyle, un groupe amino primaire, un groupe amino secondaire, ou un groupe mercapto, et
au moins une condition étant satisfaite parmi le composant en phase huileuse comprenant un composé isocyanate, où est introduit le groupe anionique, ou au moins un composant parmi le composant en phase huileuse ou le composant en phase aqueuse comprenant un composé présentant le groupe anionique et un groupe d'hydrogène actif, lequel est un groupe hydroxyle, un groupe amino primaire, un groupe amino secondaire, ou un groupe mercapto.

**15.** Procédé de formation d'image, comprenant les étapes suivantes :

une étape d'application pour appliquer la dispersion aqueuse selon l'une quelconque des revendications 1 à 12 sur un support d'enregistrement, et
une étape d'irradiation pour irradier la dispersion aqueuse appliquée sur le support d'enregistrement avec des rayons d'énergie active.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2015158748 A
- WO 2016052053 A
- WO 2016152254 A
- WO 2017038243 A
- WO 2012073563 A
- JP 2012246486 A
- JP 8060063 A
- JP H0860063 A
- WO 2015158592 A
- JP 47006416 B
- JP S476416 B
- JP 47003981 B
- JP S473981 B
- JP 47022326 B
- JP S4722326 B
- JP 47023664 B
- JP S4723664 B
- JP 57030704 A
- JP S5730704 A
- JP 60026483 B
- JP S6026483 B
- JP 60026403 B
- JP S6026403 B
- JP 62081345 A
- JP S6281345 A
- JP 1034242 B
- JP H0134242 B
- US 4318791 A
- EP 0284561 A1
- JP 2211452 A
- JP H02211452 A
- JP 61194062 A
- JP S61194062 A
- JP 2009597 B
- JP H029597 B
- JP 2009596 B
- JP H029596 B
- JP 63061950 B
- JP S6361950 B
- JP 59042864 B
- JP S5942864 B
- WO 2015L58745 A
- JP 2008105379 A
- JP 2009114290 A
- JP 2010024276 A
- JP 6107718 A
- JP H06107718 A
- WO 2015158745 A
- JP 7159983 A
- JP H07159983 A
- JP 7031399 B
- JP H0731399 B
- JP 8224982 A
- JP H08224982 A
- JP 10000863 A
- JP H10863 A
- JP 9134011 A
- JP H09134011 A
- JP 2004514014 A
- JP 2014040529 A
- JP 57009053 B
- JP S579053 B
- JP 62135826 A
- JP S62135826 A
- WO 2014095724 A
- JP 5591858 B
- JP 60132767 A
- JP S60132767 A


### Non-patent literature cited in the description


- Polyurethane Resin Handbook. NIKKAN KOGYO SHIMBUN, LTD, 1987
- **J. P. FOUASSIER ; J. F. RABEK.** *RADIATION CURING IN POLYMER SCIENCE AND TECHNOLOGY,* 1993, 77-117
- Cross-linking Agent Handbook. TAISEI-SHUPPAN CO., LTD, 1981
- UV·EB Curing Handbook (raw materials). Kobunshi Kankokai, 1985
- Application and Market of UV·EB Curing Technology. CMC, 1989, 79
- **EICHIRO TAKIYAMA.** Polyester Resin Handbook. NIKKAN KOGYO SHIMBUN, LTD, 1988
- **J. V. CRIVELLO et al.** *Advances in Polymer Science,* 1984, vol. 62, 1-47
- **LEE et al.** Handbook of Epoxy Resins. McGraw Hill Book Company, 1967
- **P. F. BRUINS et al.** *Epoxy Resin Technology,* 1968